# EUROPEAN PATENT APPLICATION

(11) **EP 4 772 301 A1**
(43) Date of publication of application: **08.07.2026**
(21) Application number: 25227646.4
(22) Date of filing: 30.12.2025
(51) Int. Cl.: B23K 9/073, B23K 9/09, B23K 9/095, B23K 9/12, B23K 9/173

(54) **SYSTEMS AND METHODS FOR ONE-WAY WIRE FEED SPEED ADJUSTMENT DURING A WELDING OPERATION**

(30) Priority: 31.12.2024 US 202463740743 P; 29.12.2025 US 202519434534
(71) Applicant: Illinois Tool Works Inc., Glenview IL 60025 (US)
(72) Inventor: UECKER, James Lee, Glenview, 60025 (US); WAGNER, Dustin, Glenview, 60025 (US)
(74) Representative: HGF

(57) **Abstract**

A welding system (100) comprises: a wire feeder (104); power conversion circuitry (110) configured to output welding power; and control circuitry (112) configured to: control the wire feeder (104) to advance an electrode (142) according to an initial wire feed speed; in response to determining that a first filtered current is less than a lower threshold current, control the wire feeder (104) to advance the electrode (142) at the first increased wire feed speed; and in response to determining that the first filtered current is greater than or equal to an upper threshold current, control the wire feeder (104) to advance the electrode (142) at a predetermined lower threshold wire feed speed.

## Description

### RELATED APPLICATIONS

The present application claims the benefit of U.S. Provisional Patent Application Serial No. 63/740,743, filed December 31, 2024, entitled "SYSTEMS AND METHODS FOR ONE-WAY WIRE FEED SPEED ADJUSTMENT DURING A WELDING OPERATION." The entirety of U.S. Provisional Patent Application Serial No. 63/740,743 is expressly incorporated herein by reference.

### FIELD OF THE DISCLOSURE

This disclosure relates generally to welding systems and, more particularly, to systems, methods, and control circuitry for one-way wire feed speed adjustment during a welding operation.

### BACKGROUND

Welding components (e.g., welding torches) are sometimes powered by welding power supplies. Conventional power supplies use a range of electrical components and/or electrical circuitry to produce appropriate welding power for various welding operations and/or welding components.

Power supplies may be used to conduct a welding operation, such as an arc welding operation. For example, gas-metal arc welding ("GMAW") (also referred to as metal inert gas welding ("MIG")) is a welding process in which an electric arc forms between an electrode and pieces of metal that are to be welded. In many systems, the electrode consists of a wire that is advanced through a welding torch. The power source applies electrical current to the electrode so as to pass the electric arc between the electrode and a work piece, thereby heating the electrode and causing the pieces of metal to melt. Upon cooling down of the melted pieces of metal, the pieces of metal join and form a weld. Electrical and/or physical parameters can be adjusted to give the best electric arc possible and improve the overall welding process.

### SUMMARY

Systems, methods, and control circuitry for one-way wire feed speed adjustment during a welding operation are disclosed, substantially as illustrated by and described in connection with at least one of the figures, as set forth more completely in the claims.

### BRIEF DESCRIPTION OF THE DRAWINGS

FIG. 1 illustrates an example welding system, in accordance with aspects of this disclosure;
FIG. 2A illustrates a graph (x-axis: time; y-axis: voltage) of measured voltages of a welding system during a first example pulse cycle having a short circuit duration that is less than a target short circuit duration and a second example pulse cycle that is modified based on the short circuit duration, in accordance with aspects of this disclosure;
FIG. 2B illustrates a graph (x-axis: time; y-axis: voltage) of measured voltages of a welding system during a first example pulse cycle having a short circuit duration that is greater than a target short circuit duration and a second example pulse cycle that is modified based on the short circuit duration, in accordance with aspects of this disclosure;
FIGS. 3A-3D illustrate an example sequence of maintaining an arc length by adjusting one or more welding parameters, in accordance with aspects of this disclosure;
FIG. 4A illustrates a graph (x-axis: time; y-axis: current) of measured currents of an example of a welding system during examples of one-way wire feed speed adjustment according to a lower threshold current, in accordance with aspects of this disclosure;
FIG. 4B illustrates a graph (x-axis: time; y-axis: wire feed speed) of wire feed speeds of an example of a welding system during the examples of one-way wire feed speed adjustment of FIG. 4A, in accordance with aspects of this disclosure;
FIG. 5A illustrates a graph (x-axis: time; y-axis: current) of measured currents of an example of a welding system during examples of one-way wire feed speed adjustment according to a lower threshold current, an upper threshold current, and a lower threshold wire feed speed, in accordance with aspects of this disclosure;
FIG. 5B illustrates a graph (x-axis: time; y-axis: wire feed speed) of wire feed speeds of an example of a welding system during the examples of one-way wire feed speed adjustment of FIG. 5A, in accordance with aspects of this disclosure;
FIG. 6A illustrates a flowchart representative of example machine readable instructions which may be executed by the welding system of FIG. 1 to control welding parameters during a welding operation, in accordance with aspects of this disclosure;
FIG. 6B illustrates a flowchart representative of example machine readable instructions which may be executed by the welding system of FIG. 1 to control welding parameters during a welding operation, in accordance with aspects of this disclosure; and
FIG. 6C illustrates a flowchart representative of example machine readable instructions which may be executed by the welding system of FIG. 1 in some examples of the process of FIG. 6A and/or in some examples of the process of FIG. 6B, in accordance with aspects of this disclosure.

The figures are not necessarily to scale. Where appropriate, similar or identical reference numbers are used to refer to similar or identical components.

### DETAILED DESCRIPTION

Inexperienced welders, while welding, often struggle to maintain often-desirable aspects of a weld process, such as a constant arc length, travel speed, weld angle, contact tip to work distance ("CTWD"), etc. Failure to maintain appropriate weld technique may decrease the quality of welds they produce and/or increase the time necessary to conduct a welding operation (e.g., by requiring repetition of a welding process). A welding arc that has an arc length which is too long or too short may increase spatter, reduce weld quality (e.g., by a short welding arc providing too little heat and reducing attachment strength of a weld, a long welding arc providing too much heat and burning a hole through a workpiece, etc.), and/or warp, distort, and/or otherwise damage a workpiece.

Some disclosed example systems, methods, and control circuitry provide improved control and/or maintenance of an arc length of a welding arc by determining one or more welding parameters based on one or more short circuit parameters of one or more short circuit events. Some disclosed examples employ a pulsed welding process (e.g., GMAW) that utilizes "pulses" (e.g., a controlled increase of voltage, current, power, enthalpy, resistance, etc. of weld power for a defined period of time). For example, a pulsed welding process may employ one or more "pulse cycles." A pulse cycle may alternate between one or more higher-voltage "peak" phases (e.g., pulses) and one or more other phases (e.g., a lower-voltage "background" phase). In some examples, the pulsed welding process is configured to cause a short circuit event after each pulse. In other cases, short circuit events may be unintentional or inadvertent.

In an example pulse cycle, a pulse creates a molten ball at a tip of an electrode (e.g., welding wire) of the welding system and deposits the molten ball of material onto a workpiece. For example, a higher voltage of a peak phase of a pulse cycle may melt a greater amount of the electrode than a lower voltage of a background phase of the pulse cycle. The molten ball may be deposited to a weld pool on the workpiece, and the molten ball may briefly join the electrode to the weld pool in a short circuit event that decreases weld voltage (e.g., to a voltage level below a target voltage of a background phase). By measuring one or more parameters of a short circuit event, disclosed examples determine one or more aspects of a welding system and/or a welding operation, such as by determining an arc length of a welding arc based on a measured duration of a short circuit event (a "short circuit duration"). Accordingly, disclosed examples may control one or more aspects of a welding system and/or a welding operation by modifying one or more welding parameters based on one or more measured parameters of one or more short circuit events. In some examples, one or more other welding modes and/or transfer modes may be used.

A short circuit parameter may be used, e.g., to determine one or more parameters of a welding system and/or as a proxy for one or more parameters of a welding system. For example, a short circuit duration may indicate an arc length of a welding arc. A short circuit duration that is shorter than a target short circuit duration may indicate that the tip of the electrode of the welding system is too far from the work piece (e.g., because a molten ball may join an electrode and a weld pool for a shorter period of time when the electrode is further from the weld pool). Conversely, a short circuit duration that is longer than a target short circuit duration may indicate that the tip of the electrode of the welding system is too close to the work piece, e.g., because a molten ball may join an electrode and a weld pool for a longer period of time when the electrode is closer to the weld pool.

Accordingly, some disclosed examples receive a target short circuit parameter (e.g., a single value and/or a range of values) or determine the target short circuit parameter (e.g., based on a target arc length of a welding arc). A short circuit parameter may include a short circuit duration and/or one or more other measurable qualities of one or more short circuit events. Some disclosed examples compare one or more measured short circuit durations to the target short circuit duration to determine whether an arc length of the welding arc is equal to the target arc length value and/or within the target arc length range and, if not, modify one or more welding parameters (e.g., pulse width, pulse frequency, target peak voltage, target peak current, ramping up rate, wire feed speed, etc.) to adjust the arc length of the welding arc based on, e.g., the target arc length and the difference between the measured short circuit duration and the target short circuit duration. For example, modifying one or more welding parameters by, e.g., increasing a wavelength width, increasing a pulse width, increasing a wavelength frequency, increasing a pulse frequency, increasing a target voltage, increasing a target current, increasing a ramping up rate, and/or decreasing a ramping down rate may cause an electrode to melt faster due to increased heat being applied to the electrode. By melting the electrode faster, a distance between a tip of the electrode and a weld pool (e.g., an "arc length) may increase by decreasing a length of an electrode extension of the electrode (e.g., a distance the electrode extends past a contact tip of a welding torch). Conversely, the electrode can be made to melt slower, e.g., by decreasing a wavelength width, decreasing a pulse width, decreasing a wavelength frequency, decreasing a pulse frequency, decreasing a target voltage, decreasing a target current, decreasing a ramping up rate, and/or increasing a ramping down rate. Accordingly, one or more welding parameters may be automatically controlled based on measured short circuit duration to maintain and/or control an arc length of a welding arc.

Further, control circuitry may control power conversion circuitry and/or a wire feeder according to an "arc length-controlled mode. As used herein, the term "arc length-controlled mode" refers to an operating mode a "resistance-controlled mode," an "enthalpy-controlled mode," etc.) refers to an operating mode of one or more components, systems, and/or processes of a welding operation (e.g., of power conversion circuitry, a generator, one or more other sources of welding power, a wire feeder, control circuitry, etc.) wherein one or more welding parameters are controlled and/or otherwise modified based on a difference between a target arc length and one or more measured arc lengths. An arc length-controlled mode may determine a measured arc length, determine a target arc length, and/or modify one or more welding parameters based on a proxy for a target arc length and/or a proxy for a measured arc length. For example, and as described above, some disclosed examples operate in an arc length-controlled mode by modifying one or more welding parameters based on a target short circuit parameter (e.g., short circuit duration) and one or more short circuit parameters (e.g., one or more short circuit durations) of one or more short circuit events.

By controlling and/or maintaining an arc length of a welding arc, disclosed example systems, methods, and control circuitry may lower the difficulty of welding, improve the quality of a weld, and/or reduce the time required for a welding operation by reducing or eliminating instances of undesirable arc lengths during the welding operation and, thereby, problems and disruptions caused by such undesirable arc lengths. A background phase may have a duration of, e.g., greater than or equal to 1 milliseconds and/or less than or equal to 25 milliseconds. A pulse phase may have a duration of, e.g., greater than or equal to 1 millisecond and less than or equal to 3 milliseconds. Accordingly, during some disclosed example pulse welding operations, 300 or more short circuit events may occur per second. Due to such high frequencies of short circuit events, using one or more measured parameters of such short circuit events for controlling one or more welding parameters of a welding system and/or a welding operation may enable very rapid adjustment of such welding parameters. Some disclosed examples may, thereby, automatically, quickly, and/or accurately determine and/or implement modifications to one or more welding parameters by comparing one or more measured short circuit parameters (e.g., a measured short circuit duration) with one or more target short circuit parameters (e.g., a target short circuit duration) to control one or more aspects of a welding system and/or a welding process (e.g., arc length of a welding arc).

However, in some circumstances, increases in CTWD may cause an average output current of a weld circuit (e.g., an average of a plurality of measured and/or compensated measured currents of a weld circuit over a defined period of time) to decrease when power conversion circuitry is outputting welding power in a voltage-controlled mode (e.g., due to the increase in contact tip to work distance increasing resistance in the weld circuit). Increases in contact tip to work distance may increase arc length, and an increased distance between a tip of an electrode and a workpiece, across which welding power travels in a weld circuit, may increase resistance in the weld circuit and, thereby, decrease an average output current of welding power output to the weld circuit. Accordingly, when operating in an arc length-controlled mode (e.g., when controlling arc length based on one or more short circuit parameters), increases in contact tip to work distance may increase an electrode extension length of an electrode extension of an electrode (e.g., a distance which an electrode extends beyond a contact tip of a welding torch during a welding operation), and the increased length of the electrode within a weld circuit (e.g., caused by the increase in the electrode extension length) may increase resistance in the weld circuit and, thereby, decrease an average output current of welding power output to the weld circuit. Accordingly, even when controlling arc length (e.g., by adjusting one or more welding parameters based on short circuit duration), increases in contact tip to work distance may, despite the controlling of the arc length, decrease output current of welding power output to a weld circuit.

Disclosed example welding systems, methods, and control circuitry may use an average output current of welding power as an indication of penetration of a weld bead within a workpiece (e.g., a distance that the weld bead extends into the workpiece). Accordingly, if an average output current of welding power is below a lower threshold current (e.g., 170 amps), then a weld may be insufficiently penetrating a workpiece. Insufficient weld penetration may cause weld quality to worsen, e.g., by reducing a strength of a weld. Worsened weld quality may jeopardize a structural integrity of a device, structure, etc. being welded, increase time used during a welding operation (e.g., by causing an operator to redo a portion of a weld having insufficient penetration), and/or cause other negative effects.

Accordingly, disclosed example welding systems, methods, and control circuitry increase wire feed speed when an average output current falls below a lower threshold current, e.g., to increase the average output current to or above the lower threshold current and, thereby, prevent and/or limit negative effects on a weld operation caused increases in contact tip to work distance. Increasing wire feed speed may increase average output current by, e.g., reducing an amount of an electrode that welding power must traverse within a weld circuit.

However, rather than regularly increase and decrease wire feed speed in response to variances in average output current, disclosed example welding systems, methods, and control circuitry provide one-way wire feed speed adjustment. In some disclosed examples of one-way wire feed speed adjustment, disclosed welding systems, methods, and control circuitry increase wire feed speed in response to a filtered current (e.g., an average output current, a measured current, and/or a compensated current) falling below a lower threshold current (e.g., without any upper limit on how much wire feed speed may be increased) without decreasing wire feed speed based on the filtered current. In some disclosed examples of one-way wire feed speed adjustment, disclosed welding systems, methods, and control circuitry increase wire feed speed in response to a filtered current falling below a lower threshold current (e.g., without any upper limit on how much wire feed speed may be increased) and decrease wire feed speed in response to increases in the filtered current (e.g., when the filtered current increases above an upper threshold current level) only if wire feed speed is greater than a lower threshold wire feed speed (e.g., an initial wire feed speed of a welding operation, an initial wire feed speed setpoint of a welding operation, a wire feed speed calculated, selected, and/or otherwise determined by control circuitry, etc.). Accordingly, in some disclosed examples of one-way wire feed speed adjustment, wire feed speed is increased based on a filtered current, but wire feed speed is not decreased based on a filtered current. However, in some other disclosed examples of one-way wire feed speed adjustment, wire feed speed is increased based on a filtered current, and wire feed speed may be decreased based on the filtered current only to decreased wire feed speeds that are greater than or equal to a lower threshold wire feed speed.

While increased wire feed speed can improve weld quality by increasing average output current to or above a lower threshold average weld current (e.g., when operating in a voltage-controlled mode during at least a portion of a welding operation), such increases in wire feed speed may not pose substantial risks to a welding operation and/or may provide only limited negative effects in a welding operation. Increased wire feed speed may cause a welding operation to consume more of an electrode, e.g., by applying more of the electrode to a workpiece. However, by applying more of the electrode to the workpiece, weld bead size and, thereby, weld quality may be increased. A larger-than-intended weld bead may have few other negative effects, and so increasing electrode consumption in a welding operation to provide potentially higher weld quality and potentially higher certainty in quality of weld is advantageous, particularly when a welding operator is inexperienced.

Because inexperienced welding operators may be more likely than more experienced welding operators to have an unsteady contact tip to work distance (and, thereby, cause average output current to fall below a lower threshold average weld current), increasing wire feed speed for such inexperienced welding operators may reduce negative effects on weld quality caused by insufficient weld penetration (e.g., an undesirably large CTWD). Further, because inexperienced welding operators may be more likely than more experienced welding operators to have reduced weld quality due to other errors and/or inconsistencies in a welding operation (e.g., negative effects caused by one or more factors other than those caused by insufficient weld penetration), increases in weld bead size that may result from increases in wire feed speed can compensate for at least some such errors and/or inconsistencies by increasing weld bead size. Accordingly, one-way increases in wire feed speed, when made in response to average output current falling below a lower threshold current (e.g., while outputting welding power in a voltage controlled mode for at least a portion of a welding operation), may prevent, reduce, and/or compensate for negative effects on a welding operation caused by insufficient weld penetration and may additionally and/or alternatively prevent, reduce, and/or compensate for one or more other negative effects caused by one or more other errors and/or inconsistencies in a welding operation.

Disclosed example welding systems, methods, and control circuitry thereby provide one-way wire feed speed adjustment during a welding operation, e.g., in response to average output current falling below a threshold current and/or to prevent, reduce, and/or compensate for negative effects on a welding operation caused by insufficient weld penetration and may additionally and/or one or more other negative effects caused by one or more other errors and/or inconsistencies in a welding operation.

Disclosed example welding systems for one-way wire feed speed adjustment during a welding operation comprise: a wire feeder configured to advance an electrode; power conversion circuitry configured to convert input power to welding power and to output the welding power to a weld circuit comprising the electrode; a current sensor configured to measure a current of the weld circuit and generate a current sensor signal; and control circuitry configured to: control the wire feeder to advance the electrode according to a first wire feed speed; monitor the current sensor signal while the wire feeder is advancing the electrode according to the first wire feed speed to determine a first filtered current; in response to determining that the first filtered current is less than a lower threshold current: determine a first increased wire feed speed based on the first filtered current and the lower threshold current, wherein the first increased wire feed speed is greater than the first wire feed speed; and control the wire feeder to advance the electrode at the first increased wire feed speed; and in response to determining that the first filtered current is greater than an upper threshold current, control the wire feeder to advance the electrode at a second wire feed speed.

In some example welding systems, the upper threshold current is equal to the lower threshold current; the first wire feed speed is equal to the second wire feed speed; and the control circuitry is further configured to, in response to determining that the first filtered current is greater than or equal to the lower threshold current, control the wire feeder to advance the electrode at the first wire feed speed.

In some example welding systems, the upper threshold current is greater than the lower threshold current.

In some such example welding systems, the control circuitry is further configured to, in response to determining that the first filtered current is greater than or equal to the lower threshold current and less than or equal to the upper threshold current, control the wire feeder to advance the electrode at the first wire feed speed.

In some example welding systems, the upper threshold current is greater than the lower threshold current; the second wire feed speed is less than or equal to the first wire feed speed; and the second wire feed speed is greater than or equal to a predetermined lower threshold wire feed speed. In some such example welding systems, the first wire feed speed is greater than the predetermined lower threshold wire feed speed; the control circuitry is further configured to, in response to determining that the first filtered current is greater than the upper threshold current, determine the second wire feed speed based on the first filtered current and the upper threshold current; and the second wire feed speed is less than the first wire feed speed. In some such example welding systems, the control circuitry is further configured to: monitor the current sensor signal while the wire feeder is advancing the electrode at the second wire feed speed to determine a second filtered current; and in response to determining that the second filtered current is less than the lower threshold current: determine a second increased wire feed speed based on the second filtered current and the upper threshold current, wherein the second increased wire feed speed is greater than the second wire feed speed; and control the wire feeder to advance the electrode at the second increased wire feed speed.

In some example welding systems, the upper threshold current is greater than the lower threshold current; the first wire feed speed is greater than a predetermined lower threshold wire feed speed; the second wire feed speed is less than the first wire feed speed; the second wire feed speed is greater than the predetermined lower threshold wire feed speed; and the control circuitry is further configured to: in response to determining that the first filtered current is greater than the upper threshold current, determine the second wire feed speed based on the first filtered current and the upper threshold current; monitor the current sensor signal while the wire feeder is advancing the electrode at the second wire feed speed to determine a second filtered current; and in response to determining that the second filtered current is greater than the upper threshold current: determine a decreased wire feed speed based on the second filtered current and the upper threshold current, wherein the decreased wire feed speed is less than the second wire feed speed and greater than or equal to the predetermined lower threshold wire feed speed; and control the wire feeder to advance the electrode at the decreased wire feed speed.

In some example welding systems, the upper threshold current is greater than the lower threshold current; the first wire feed speed is greater than a predetermined lower threshold wire feed speed; the second wire feed speed is less than the first wire feed speed; the second wire feed speed is equal to the predetermined lower threshold wire feed speed; and the control circuitry is further configured to: in response to determining that the first filtered current is greater than the upper threshold current, determine the second wire feed speed based on the first filtered current and the upper threshold current; monitor the current sensor signal while the wire feeder is advancing the electrode at the second wire feed speed to determine a second filtered current; and in response to determining that the second filtered current is greater than the lower threshold current, control the wire feeder to advance the electrode at the second wire feed speed.

In some example welding systems, the upper threshold current is greater than the lower threshold current; the first wire feed speed is greater than a predetermined lower threshold wire feed speed; the second wire feed speed is less than or equal to the first wire feed speed; the second wire feed speed is greater than or equal to a predetermined lower threshold wire feed speed; and the control circuitry is further configured to: in response to determining that the first filtered current is greater than the upper threshold current, determine the second wire feed speed based on the first filtered current and the upper threshold current; the second wire feed speed is less than the first wire feed speed; monitor the current sensor signal while the wire feeder is advancing the electrode at the second wire feed speed to determine a second filtered current; and in response to determining that the second filtered current is greater than or equal to the lower threshold current and less than or equal to the upper threshold current, control the wire feeder to advance the electrode at the second wire feed speed.

In some example welding systems, the control circuitry is further configured to: monitor the current sensor signal while the wire feeder is advancing the electrode at the first increased wire feed speed to determine a second filtered current; and in response to determining that the second filtered current is less than the lower threshold current: determine a second increased wire feed speed based on the second filtered current and the lower threshold current, wherein the second increased wire feed speed is greater than the first increased wire feed speed; and control the wire feeder to advance the electrode at the second increased wire feed speed. In some such example welding systems, the control circuitry is further configured to, in response to determining that the second filtered current is greater than or equal to the lower threshold current, control the wire feeder to advance the electrode at the first increased wire feed speed.

In some example welding systems, the upper threshold current is greater than the lower threshold current; and the control circuitry is further configured to: monitor the current sensor signal while the wire feeder is advancing the electrode at the first increased wire feed speed to determine a second filtered current; and in response to determining that the second filtered current is less than the lower threshold current: determine a second increased wire feed speed based on the second filtered current and the lower threshold current, wherein the second increased wire feed speed is greater than the first increased wire feed speed; and control the wire feeder to advance the electrode at the second increased wire feed speed; and, in response to determining that the second filtered current is greater than the upper threshold current: determine a decreased wire feed speed based on the second filtered current and the upper threshold current, wherein the decreased wire feed speed is less than the first increased wire feed speed and greater than or equal to a predetermined lower threshold wire feed speed; and control the wire feeder to advance the electrode at the decreased wire feed speed. In some such example welding systems, the control circuitry is further configured to, in response to determining that the second filtered current is greater than or equal to the lower threshold current and less than or equal to the upper threshold current, control the wire feeder to advance the electrode at the first increased wire feed speed.

In some example welding systems, the control circuitry is further configured to determine at least one of the lower threshold current or the upper threshold current based on at least one of: the first wire feed speed; an initial wire feed speed of the welding operation; an initial wire feed speed setpoint of the welding operation; a calculated target heat input of the welding power; or a predetermined target heat input of the welding power.

In some example welding systems, the first filtered current is an average current; and the control circuitry is further configured to: control the power conversion circuitry to output the welding power according to one or more welding parameters, the one or more welding parameters comprising a waveform; and calculate the average current based on a plurality of measured currents measured during at least a portion of the waveform.

In some example welding systems, the control circuitry is further configured to: control the power conversion circuitry to output the welding power according to one or more welding parameters, the one or more welding parameters comprising a waveform; and determine the first filtered current by monitoring the current sensor signal during one or more voltage-controlled mode portions of the waveform.

In some example welding systems, the power conversion circuitry is configured to output the welding power according to at least one of: a gas-metal arc welding (GMAW) or metal inert gas welding (MIG) operation; a pulsed gas-metal arc welding (GMAW-P) or pulsed metal inert gas (MIG) welding operation; a current-controlled welding operation; a voltage-controlled welding operation; a power-controlled welding operation; a resistance-controlled welding operation; an enthalpy-controlled welding operation; a tungsten inert gas welding (TIG) or gas tungsten arc welding (GTAW) operation; a flux cored arc welding (FCAW) operation; a shielded metal arc welding (SMAW) or stick welding operation; a plasma cutting operation; a plasma welding operation; a spray welding operation; a short circuit transfer welding operation; a pulse welding operation; or a pulsed spray welding operation.

In some example welding systems, the welding system further comprises a voltage sensor configured to measure a voltage of the weld circuit and generate a voltage sensor signal, wherein the control circuitry is further configured to: control the power conversion circuitry to output the welding power according to one or more first welding parameters comprising a first waveform; monitor the voltage sensor signal during at least a portion of the first waveform to determine one or more short circuit parameters of one or more short circuit events; determine one or more second welding parameters based on the one or more first welding parameters and the one or more short circuit parameters; and control the power conversion circuitry to output the welding power according to the one or more second welding parameters. In some such example welding systems, the determining of the one or more second welding parameters comprises comparing the one or more short circuit parameters to one or more target short circuit parameters.

In some example welding systems, the welding system further comprises a voltage sensor configured to measure a voltage of the weld circuit and generate a voltage sensor signal, wherein the control circuitry is further configured to: control the power conversion circuitry to output the welding power according to one or more first welding parameters comprising a first waveform; monitor the voltage sensor signal during at least a portion of the first waveform to determine one or more short circuit parameters of one or more short circuit events; determine one or more second welding parameters based on the one or more first welding parameters and the one or more short circuit parameters; and control the power conversion circuitry to output the welding power according to the one or more second welding parameters, wherein the one or more short circuit parameters comprise a short circuit duration. In some such example welding systems, the one or more first welding parameters comprise a first target voltage; the one or more second welding parameters comprise a second waveform and a second target voltage; and the control circuitry is further configured to: control the power conversion circuitry to output the welding power according to the one or more first welding parameters at least by outputting the welding power in a voltage-controlled mode according to the first target voltage during at least a portion of the first waveform; in response to determining that the short circuit duration is greater than a target short circuit duration, calculate the second target voltage by increasing the first target voltage based on a difference between the short circuit duration and the target short circuit duration; and control the power conversion circuitry to output the welding power according to the one or more second welding parameters at least by outputting the welding power in the voltage-controlled mode according to the second target voltage during at least a portion of the second waveform.

In some example welding systems, the welding system further comprises a voltage sensor configured to measure a voltage of the weld circuit and generate a voltage sensor signal, wherein the control circuitry is further configured to: control the power conversion circuitry to output the welding power according to one or more first welding parameters comprising a first waveform; monitor the voltage sensor signal during at least a portion of the first waveform to determine one or more short circuit parameters of one or more short circuit events; determine one or more second welding parameters based on the one or more first welding parameters and the one or more short circuit parameters; and control the power conversion circuitry to output the welding power according to the one or more second welding parameters, wherein: the one or more short circuit parameters comprise a short circuit duration; the one or more first welding parameters comprise a first target voltage; the one or more second welding parameters comprise a second waveform and a second target voltage; and the control circuitry is further configured to: control the power conversion circuitry to output the welding power according to the one or more first welding parameters at least by outputting the welding power in a voltage-controlled mode according to the first target voltage during at least a portion of the first waveform; in response to determining that the short circuit duration is less than a target short circuit duration, calculate the second target voltage by decreasing the first target voltage based on a difference between the short circuit duration and the target short circuit duration; and control the power conversion circuitry to output the welding power according to the one or more second welding parameters at least by outputting the welding power in the voltage-controlled mode according to the second target voltage during at least a portion of the second waveform.

In some example welding systems, the welding system further comprises a voltage sensor configured to measure a voltage of the weld circuit and generate a voltage sensor signal, wherein the control circuitry is further configured to: control the power conversion circuitry to output the welding power according to one or more first welding parameters comprising a first waveform; monitor the voltage sensor signal during at least a portion of the first waveform to determine one or more short circuit parameters of one or more short circuit events; determine one or more second welding parameters based on the one or more first welding parameters and the one or more short circuit parameters; and control the power conversion circuitry to output the welding power according to the one or more second welding parameters, wherein: the one or more first welding parameters comprise at least one of a first ramping up rate, a first wire feed speed, a first ramp down rate, a first target voltage, a first target current, a first target power, a first target resistance, a first target enthalpy, a first duration of a phase of the first waveform, a first duration of a portion of the first waveform, or a first waveform frequency; and the one or more second welding parameters comprise at least one of a second ramping up rate, a second ramping down rate, a second wire feed speed, a second target voltage, a second target current, a second target power, a second target resistance, a second target enthalpy, a second duration of a phase of a second waveform, a second duration of a portion of the second waveform, or a second waveform frequency.

In some example welding systems, In some example welding systems, the welding system further comprises a voltage sensor configured to measure a voltage of the weld circuit and generate a voltage sensor signal, wherein the control circuitry is further configured to: control the power conversion circuitry to output the welding power according to one or more first welding parameters comprising a first waveform; monitor the voltage sensor signal during at least a portion of the first waveform to determine one or more short circuit parameters of one or more short circuit events; determine one or more second welding parameters based on the one or more first welding parameters and the one or more short circuit parameters; and control the power conversion circuitry to output the welding power according to the one or more second welding parameters, wherein the power conversion circuitry is configured to output the welding power according to at least one of: a gas-metal arc welding (GMAW) or metal inert gas welding (MIG) operation; a pulsed gas-metal arc welding (GMAW-P) or pulsed metal inert gas (MIG) welding operation; a current-controlled welding operation; a voltage-controlled welding operation; a power-controlled welding operation; a resistance-controlled welding operation; an enthalpy-controlled welding operation; a tungsten inert gas welding (TIG) or gas tungsten arc welding (GTAW) operation; a flux cored arc welding (FCAW) operation; a shielded metal arc welding (SMAW) or stick welding operation; a plasma cutting operation; a plasma welding operation; a spray welding operation; a short circuit transfer welding operation; a pulse welding operation; or a pulsed spray welding operation.

In some example welding systems, the welding system further comprises a voltage sensor configured to measure a voltage of the weld circuit and generate a voltage sensor signal, wherein the control circuitry is further configured to: control the power conversion circuitry to output the welding power according to one or more first pulse cycles having one or more first pulse parameters; monitor the voltage sensor signal during a background phase of at least one of the one or more first pulse cycles to determine one or more short circuit parameters of one or more short circuit events; determine one or more second pulse parameters based on the one or more first pulse parameters and the one or more short circuit parameters; and control the power conversion circuitry to output the welding power according to one or more second pulse cycles having the one or more second pulse parameters. In some such example welding systems, the determining of the one or more second pulse parameters comprises comparing the one or more short circuit parameters to one or more target short circuit parameters.

In some example welding systems, In some example welding systems, the welding system further comprises a voltage sensor configured to measure a voltage of the weld circuit and generate a voltage sensor signal, wherein the control circuitry is further configured to: control the power conversion circuitry to output the welding power according to one or more first pulse cycles having one or more first pulse parameters; monitor the voltage sensor signal during a background phase of at least one of the one or more first pulse cycles to determine one or more short circuit parameters of one or more short circuit events; determine one or more second pulse parameters based on the one or more first pulse parameters and the one or more short circuit parameters; and control the power conversion circuitry to output the welding power according to one or more second pulse cycles having the one or more second pulse parameters, wherein the one or more short circuit parameters comprise a short circuit duration. In some such example welding systems, the one or more first pulse parameters comprise a first pulse width; the one or more second pulse parameters comprise a second pulse width; and the control circuitry is further configured to, in response to determining that the short circuit duration is greater than a target short circuit duration, calculate the second pulse width by increasing the first pulse width based on a difference between the short circuit duration and the target short circuit duration.

In some example welding systems, In some example welding systems, the welding system further comprises a voltage sensor configured to measure a voltage of the weld circuit and generate a voltage sensor signal, wherein the control circuitry is further configured to: control the power conversion circuitry to output the welding power according to one or more first pulse cycles having one or more first pulse parameters; monitor the voltage sensor signal during a background phase of at least one of the one or more first pulse cycles to determine one or more short circuit parameters of one or more short circuit events; determine one or more second pulse parameters based on the one or more first pulse parameters and the one or more short circuit parameters; and control the power conversion circuitry to output the welding power according to one or more second pulse cycles having the one or more second pulse parameters, wherein: the one or more short circuit parameters comprise a short circuit duration; the one or more first pulse parameters comprise a first pulse width; the one or more second pulse parameters comprise a second pulse width; and the control circuitry is further configured to, in response to determining that the short circuit duration is less than a target short circuit duration, calculate the second pulse width by decreasing the first pulse width based on a difference between the short circuit duration and the target short circuit duration.

In some example welding systems, In some example welding systems, the welding system further comprises a voltage sensor configured to measure a voltage of the weld circuit and generate a voltage sensor signal, wherein the control circuitry is further configured to: control the power conversion circuitry to output the welding power according to one or more first pulse cycles having one or more first pulse parameters; monitor the voltage sensor signal during a background phase of at least one of the one or more first pulse cycles to determine one or more short circuit parameters of one or more short circuit events; determine one or more second pulse parameters based on the one or more first pulse parameters and the one or more short circuit parameters; and control the power conversion circuitry to output the welding power according to one or more second pulse cycles having the one or more second pulse parameters, wherein: the one or more short circuit parameters comprise a short circuit duration; the one or more first pulse parameters comprise a first target peak voltage; the one or more second pulse parameters comprise a second target peak voltage; and the control circuitry is further configured to: control the power conversion circuitry to output the welding power according to the one or more first pulse cycles at least by outputting the welding power in a voltage-controlled mode according to the first target peak voltage during at least a portion of a first peak phase of the one or more first pulse cycles; in response to determining that the short circuit duration is greater than a target short circuit duration, calculate the second target peak voltage by increasing the first target peak voltage based on a difference between the short circuit duration and the target short circuit duration; and control the power conversion circuitry to output the welding power according to the one or more second pulse cycles at least by outputting the welding power in the voltage-controlled mode according to the second target peak voltage during at least a portion of a second peak phase of the one or more second pulse cycles.

In some example welding systems, In some example welding systems, the welding system further comprises a voltage sensor configured to measure a voltage of the weld circuit and generate a voltage sensor signal, wherein the control circuitry is further configured to: control the power conversion circuitry to output the welding power according to one or more first pulse cycles having one or more first pulse parameters; monitor the voltage sensor signal during a background phase of at least one of the one or more first pulse cycles to determine one or more short circuit parameters of one or more short circuit events; determine one or more second pulse parameters based on the one or more first pulse parameters and the one or more short circuit parameters; and control the power conversion circuitry to output the welding power according to one or more second pulse cycles having the one or more second pulse parameters, wherein: the one or more short circuit parameters comprise a short circuit duration; the one or more first pulse parameters comprise a first target peak voltage; the one or more second pulse parameters comprise a second target peak voltage; and the control circuitry is further configured to: control the power conversion circuitry to output the welding power according to the one or more first pulse cycles at least by outputting the welding power in a voltage-controlled mode according to the first target peak voltage during at least a portion of a first peak phase of the one or more first pulse cycles; in response to determining that the short circuit duration is less than a target short circuit duration, calculate the second target peak voltage by decreasing the first target peak voltage based on a difference between the short circuit duration and the target short circuit duration; and control the power conversion circuitry to output the welding power according to the one or more second pulse cycles at least by outputting the welding power in the voltage-controlled mode according to the second target peak voltage during at least a portion of a second peak phase of the one or more second pulse cycles.

In some example welding systems, In some example welding systems, the welding system further comprises a voltage sensor configured to measure a voltage of the weld circuit and generate a voltage sensor signal, wherein the control circuitry is further configured to: control the power conversion circuitry to output the welding power according to one or more first pulse cycles having one or more first pulse parameters; monitor the voltage sensor signal during a background phase of at least one of the one or more first pulse cycles to determine one or more short circuit parameters of one or more short circuit events; determine one or more second pulse parameters based on the one or more first pulse parameters and the one or more short circuit parameters; and control the power conversion circuitry to output the welding power according to one or more second pulse cycles having the one or more second pulse parameters, wherein: the one or more first pulse parameters comprise a first target peak voltage; the one or more second pulse parameters comprise a second target peak voltage; and the control circuitry is further configured to: control the power conversion circuitry to output the welding power according to the one or more first pulse cycles at least by outputting the welding power in a voltage-controlled mode according to the first target peak voltage during at least a portion of a first peak phase of the one or more first pulse cycles; in response to determining that the short circuit duration is less than a target short circuit duration, calculate the second target peak voltage by decreasing the first target peak voltage based on a difference between the short circuit duration and the target short circuit duration; and control the power conversion circuitry to output the welding power according to the one or more second pulse cycles at least by outputting the welding power in the voltage-controlled mode according to the second target peak voltage during at least a portion of a second peak phase of the one or more second pulse cycles.

As used herein, the term "welding parameter-controlled mode" (as in, e.g., a "voltage-controlled mode," a "current-controlled mode," a "power-controlled mode," a "resistance-controlled mode," an "enthalpy-controlled mode," etc.) refers to an operating mode of one or more components, systems, and/or processes of a welding operation (e.g., of power conversion circuitry, a generator, one or more other sources of welding power, a wire feeder, control circuitry, etc.) wherein one or more welding parameters are controlled and/or otherwise modified based on a difference between one or more measured welding parameters and one or more respective target welding parameters (e.g., one or more target values, one or more target threshold values, one or more target ranges of values, etc.). For example, when controlling power conversion circuitry to output welding power to a weld circuit in a voltage-controlled mode, control circuitry may control the power conversion circuitry to increase or decrease an output current (e.g., a number of amps) of the power conversion circuitry and/or one or more other welding parameters based on a difference between a measured voltage of the weld circuit and a target voltage.

As used herein, a "target" welding parameter (e.g., a "target voltage," a "target current," a "target power," a "target resistance," a "target enthalpy," etc.) refers to one or more inputs associated with a welding parameter according to which a welding system operating in a controlled mode (e.g., a voltage-controlled mode, a current-controlled mode, a power-controlled mode, an enthalpy-controlled mode, a resistance-controlled mode, etc.) controls and/or otherwise modifies one or more other welding parameters based on differences between a measured welding parameter and the target welding parameter. A target welding parameter may include one or more values (e.g., 24V), one or more value ranges (e.g., 23V-25V), one or more threshold values (e.g., ≥ 23V, < 25V), etc.

As used herein, a welding parameter "setpoint" (e.g., a voltage setpoint, a current setpoint, a power setpoint, a resistance setpoint, an enthalpy setpoint, a wire feed speed setpoint, etc.) refers to an input (e.g., one or more voltage values, one or more current values, one or more power values, one or more resistance values, one or more enthalpy values, one or more wire feed speed values, etc.) to a device and/or system of a welding system (e.g., a power converter, a wire feeder, a welding torch, a power source, etc.), e.g., via a user interface, network communication, weld procedure specification, or other selection method.

As used herein, the term "pulse cycle" refers to a group two or more phases according to which a welding operation is conducted, wherein one or more welding parameters are varied between at least two phases. For example, a pulse cycle may comprise a peak phase and a background phase, and a target peak voltage of the peak phase may be greater than a target background voltage of the background phase. A pulse cycle may include, e.g., one or more background phases, one or more peak phases, one or more wetting phases, one or more dabbing phases, one or more intermediate phases, and/or one or more other phases.

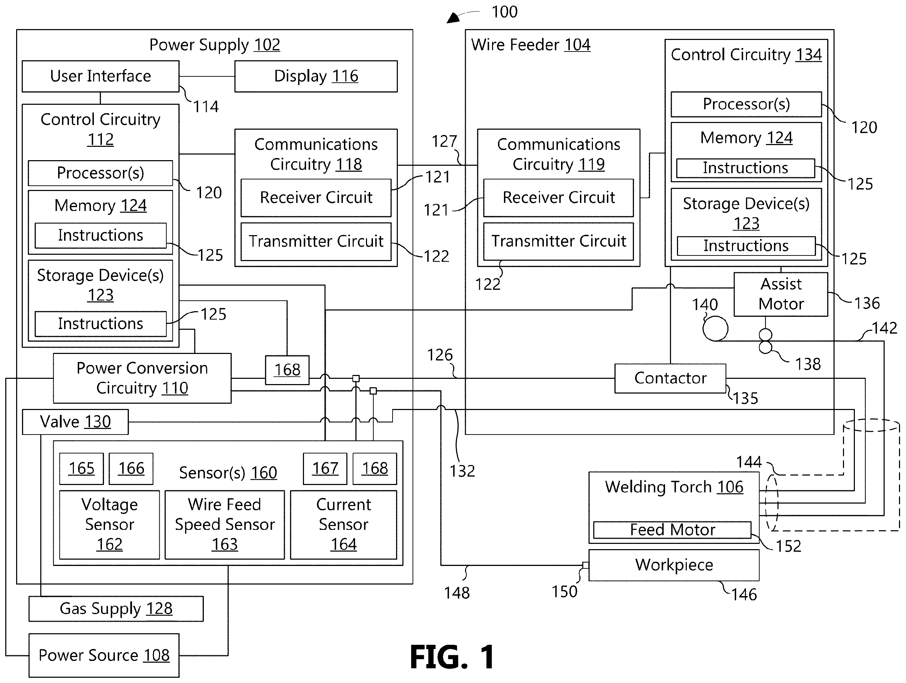

Turning now to the drawings, FIG. 1 is a block diagram of an example system 100. The system 100 is a welding system having a power supply 102, a wire feeder 104, and a welding torch 106. The system 100 powers, controls, and supplies consumables (e.g., an electrode) to a welding application. In some examples, the power supply 102 directly supplies input power to the welding torch 106. The welding torch 106 may be a torch configured for one or more welding modes, such as any, some, or all of GMAW/MIG, GMAW-P/pulsed MIG, SMAW/stick welding, current-controlled welding, voltage-controlled welding, enthalpy-controlled welding, power-controlled welding, resistance-controlled welding, TIG/GTAW, FCAW, plasma cutting, plasma welding, spray welding, short circuit transfer welding, pulse welding, pulsed spray welding, and/or one or more other welding modes based on the desired welding application.

In the example illustrated in FIG. 1, the power supply 102 is configured to supply welding power to the wire feeder 104, and the wire feeder 104 may be configured to route the welding power to the welding torch 106. In some examples, the wire feeder 104 also provides an electrode 142 (e.g., welding wire) to the welding torch 106, and the welding torch 106 may provide the welding power to the electrode 142, e.g., to create and/or maintain a welding arc between the electrode 142 and a workpiece 146. In addition to supplying an input power and/or the electrode 142 to the welding torch 106, the wire feeder 104 may supply a filler metal to a welding torch 106 for various welding applications (e.g., GMAW). While example of the system 100 depicted in FIG. 1 includes the wire feeder 104 (e.g., for GMAW operations), the wire feeder 104 may be replaced by any other type of remote accessory device, such as a stick welding and/or TIG welding remote control interface that provides stick and/or TIG welding.

The power supply 102 receives input power from a power source 108 (e.g., an engine, an electric motor, a generator, an AC power grid, a battery, one or more other energy-generating or - storage devices, and/or any combination thereof), conditions the input power, and provides an output power to one or more welding devices in accordance with demands of the system 100. The power source 108 may be supplied from an offsite location (e.g., the input power may originate from the power grid). The power supply 102 includes power conversion circuitry 110, which may include transformers, rectifiers, switches, and so forth, capable of converting the AC input power to AC and/or DC output power as dictated by the demands of the system 100 (e.g., particular welding processes and regimes) and/or by one or more aspects of the input power (e.g., frequency, voltage, current, etc.).

The power conversion circuitry 110 can convert input power (e.g., the input power received from the power source 108 as AC power) to welding power (e.g., DC power) and output the welding power to a weld circuit. For example, the power conversion circuitry 110 may output welding power to a weld circuit defined, at least in part, by the electrode 142 and the workpiece 146. In some examples, the power conversion circuitry 110 may output welding power based on one or more target weld parameters (e.g., one target welding parameter, a plurality of target welding parameters associated with one or more respective and/or distinct time values, etc.) to control the weld parameter according to the target value. For example, the power conversion circuitry 110 may output welding power based on one or more target voltages, one or more target currents, one or more target powers, one or more target resistances, one or more target enthalpies, and/or one or more other target welding parameters. In some examples, a target welding parameter may be determined and/or modified by, e.g., one or more control loops (e.g., when power conversion circuitry is operating in a voltage-controlled mode, a current-controlled mode, an enthalpy-controlled mode, a power-controlled mode, a resistance-controlled mode, etc.), control circuitry, one or more setpoints, etc. In some examples, the power conversion circuitry 110 is configured to convert the input power received from the power source 108 to both welding power and one or more auxiliary power outputs. An auxiliary power may include, e.g., an arc starting power (e.g., a power configured to initiate an arc between the electrode 142 and the workpiece 146) and/or an input power for a one or more auxiliary devices (e.g., a sensor, a computing device, a light, a grinder, etc.).

The power supply 102 includes control circuitry 112 to control the operation of the power supply 102. The power supply 102 also includes a user interface 114. The control circuitry 112, which is also referred to as a "controller," receives input from the user interface 114, through which a user may choose a process and/or input desired parameters (e.g., voltages, currents, resistances, enthalpies, powers, wire feed speeds, short circuit durations, arc lengths, one or more other setpoints, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with other welding devices within the system 100. Further, in some situations, the power supply 102 communicates with other welding devices using a wired connection, such as by using a network interface controller (NIC) to communicate data via a network (e.g., ETHERNET, 10baseT, 10base100, etc.). In the example of FIG. 1, the control circuitry 112 communicates with the wire feeder 104 via the weld circuit via communications circuitry 118, as described below.

The control circuitry 112 includes at least one controller or processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors ("DSPs").

The example control circuitry 112 includes one or more storage device(s) 123 and one or more memory device(s) 124. The storage device(s) 123 (e.g., nonvolatile storage, one or more non-transitory computer-readable medium(s)) may include ROM, flash memory, a hard drive, and/or any other suitable optical, magnetic, and/or solid-state storage medium(s), and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch (e.g., the welding torch 106), a distance between the contact tip and a workpiece (e.g., the workpiece 146), a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications circuitry 118 may be communicatively coupled to the weld cable 126 to communicate (e.g., send/receive) data over the weld cable 126. The communications circuitry 118 may be implemented based on various types of power line communications methods and techniques. For example, the communications circuitry 118 may utilize IEEE standard P1901.2 to provide data communications over the weld cable 126. In this manner, the weld cable 126 may be utilized to provide welding power from the power supply 102 to the wire feeder 104 and the welding torch 106. Additionally or alternatively, a communication cable 127 may be used to transmit and/or receive data communications between the communications circuitry 118 and a similar communications circuitry 119 of the wire feeder 104.

The example communications circuitry 118 includes a receiver circuit 121 and a transmitter circuit 122. Generally, the receiver circuit 121 receives data transmitted by the wire feeder 104 and the transmitter circuit 122 transmits data to the wire feeder 104. In some examples, the receiver circuit 121 receives communication(s) via the weld circuit while weld current is flowing through the weld circuit (e.g., during a welding operation) and/or after the weld current has stopped flowing through the weld circuit (e.g., after a welding operation).

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable 132 (which in some implementations may be packaged with the welding power output) to the wire feeder 104 which provides the shielding gas to the welding application. In some examples, the system 100 does not include the gas supply 128, the valve 130, and/or the cable 132.

In some examples, the wire feeder 104 uses the welding power to power the various components in the wire feeder 104, such as to power a wire feeder control circuitry 134. As noted above, the weld cable 126 may be configured to provide or supply the welding power. The power supply 102 may also communicate with a communications circuitry 119 of the wire feeder 104 using the weld cable 126 and the communications circuitry 118 disposed within the power supply 102. In some examples, the communications circuitry 119 is substantially similar or identical in construction and/or function as the communications circuitry 118 of the power supply 102. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to the weld cable 126 for the welding application. In some examples, the contactor 135 is an electromechanical device. However, the contactor 135 may be any other suitable device, such as a solid-state device, and/or may be omitted when the power supply 102 is configured to control the output of welding power to the welding torch 106. The control circuitry 112 and/or the wire feeder control circuitry 134 may control the contactor 135 to close and/or open to provide power to the welding torch 106. The wire feeder 104 includes an assist motor 136 that receives control signals from the wire feeder control circuitry 134 to drive rollers 138 that rotate to pull the electrode 142 (e.g., welding wire) off a spool 140. The spool 140 may be, e.g., a spool of wire when the electrode 142 is welding wire. The spool 140 may be any mechanically-retrievable storage mechanism for the electrode 142. The electrode 142 is provided to the welding application through a torch cable 144. Likewise, the wire feeder 104 may provide the shielding gas from the cable 132 through the torch cable 144. The electrode 142, the shield gas, and the power from the weld cable 126 may be bundled together in a single one of the torch cable 144, in multiple ones of the torch cable 144, and/or individually provided to the welding torch 106.

The welding torch 106 delivers the electrode 142, welding power, and/or shielding gas for a welding application. The welding torch 106 is used to establish a welding arc between the welding torch 106 and the workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

The example welding torch 106 includes a feed motor 152, which is configured to pull the electrode 142 from the wire feeder 104 to the welding torch 106 to feed the wire to a welding arc during welding operations. The feed motor 152 may be controlled to advance the electrode 142 at one or more wire feed speeds. The feed motor 152 may also be controlled to hold the electrode 142 in a stopped condition. When controlled to hold the electrode 142 in a stopped condition, the feed motor 152 is controlled to neither advance nor retract the electrode 142 relative to the feed motor 152. Rather, when controlled to hold the electrode 142 in the stopped condition, the feed motor 152 is controlled to hold the electrode 142 in place relative to the feed motor 152. Changing wire speeds may be used in some welding processes to reduce spatter and/or achieve desired welding results.

The assist motor 136 may operate as an assist motor to pull the electrode 142 from the spool 140 and feed the electrode 142 toward the welding torch 106, while the example feed motor 152 advances the electrode 142 and/or holds the electrode 142 in a stopped condition to control short circuiting and/or arc length during welding. In examples, either or both the feed motor 152 and/or the assist motor 136 are not capable of retracting the electrode 142. In other examples, either or both of the feed motor 152 and/or the assist motor 136 are capable of retracting the electrode 142. In some examples, the welding torch 106 does not include the feed motor 152. In some examples, the wire feeder 104 does not include the assist motor 136.

The example power supply 102 includes and/or is communicatively coupled to one or more sensors 160. Each of the one or more sensors 160 measure one or more parameters (e.g., an aspects, a quality, a state, etc.) of one or more devices, systems, components, etc. of the system 100 and/or of power (e.g., input power), received by and/or output by the system 100 and/or one or more devices, systems, components, etc. thereof.

In the example of FIG. 1, the one or more sensors 160 include a voltage sensor 162. The voltage sensor 162 measures a voltage (e.g., an output voltage from the power supply 102 and/or a voltage from one or more other points and/or components of the weld circuit) and generates a voltage sensor signal which includes a measured voltage (e.g., measured in volts ("V")). The voltage sensor 162 provides the voltage sensor signal to the control circuitry 112, e.g., such that the control circuitry 112 may monitor the voltage sensor signal and, thereby, the measured voltage. The output voltage of the power supply 102 may be controlled by the power conversion circuitry 110, an external voltage source, an external current source, and/or load, and/or any other internal or external cause of voltage. The voltage sensor 162 may include, e.g., a voltmeter, a feedback loop, etc. While the example of the voltage sensor 162 is illustrated in FIG. 1 as monitoring the output voltage from the power conversion circuitry 110, the voltage sensor 162 may be configured to monitor any voltage from the output terminals of the power supply 102 and/or for any particular circuits.

In the example of FIG. 1, the one or more sensors 160 include a wire feed speed sensor 163. The wire feed speed sensor 163 measures a wire feed speed (e.g., a speed at which the wire feeder 104 feeds the electrode 142 to the welding torch 106) and generates a wire feed speed sensor signal which includes a measured wire feed speed (measured in, e.g., inches per minute ("ipm"), meters per second ("mps"), etc.). The wire feed speed sensor 163 provides the wire feed speed sensor signal to the control circuitry 112, e.g., such that the control circuitry 112 may monitor the wire feed speed sensor signal and, thereby, the measured wire feed speed. The wire feed speed of the wire feeder 104 may be controlled by the feed motor 152 and/or assist motor 136. The wire feed speed sensor 163 may include, e.g., a photoelectric speed sensor, a tachometer, an encoder, etc. While the example of the wire feed speed sensor 163 is illustrated in FIG. 1 as monitoring the wire feed speed from the assist motor 136, the wire feed speed sensor 163 may be configured to monitor the wire feed speed at the feed motor 152 and/or at any point along the electrode 142 and/or portion of the electrode 142.

In the example of FIG. 1, the one or more sensors 160 include a current sensor 164. The current sensor 164 measures a current (e.g., an output current from the power supply 102 and/or a current from one or more other points and/or components of the weld circuit) and generates a current sensor signal which includes a measured current (e.g., measured in amps ("A")). The current sensor 164 provides the current sensor signal to the control circuitry 112, e.g., such that the control circuitry 112 may monitor the current sensor signal and, thereby, the measured current. The output current of the power supply 102 may be controlled by the power conversion circuitry 110, an external voltage source, current source, and/or load, and/or any other internal or external cause of current. The current sensor 164 may include, e.g., an ammeter, a feedback loop, etc. While the example of the current sensor 164 is illustrated in FIG. 1 as monitoring the output current from the power conversion circuitry 110, the current sensor 164 may be configured to monitor any currents flowing through the output terminals of the power supply 102 and/or for any particular circuits.

In some examples, the one or more sensors 160 include any, some, or all of the sensors 162, 163, 164. In some examples, the one or more sensors 160 additionally and/or alternatively include one or more other sensors, such as a power source sensor 165, an audio sensor 166, a spectrometer 167, and/or one or more weld circuit sensors 168. In some examples, the power source sensor 165 is configured to measure a state (e.g., a load, control of an inverter, etc.) of the power source 108 (e.g., an engine, an electric motor, etc.) and generate a power source sensor signal which includes a measured state. In some examples, the audio sensor 166 is configured to measure audio feedback of the system 100 (e.g., sounds produced by a welding operation, an arc between the electrode 142 and the workpiece 146, etc.) and generate an audio sensor signal which includes a measured audio feedback. In some examples, the spectrometer 167 is configured to measure a spectrographic emission (e.g., color and/or luminosity of light) of a welding arc of a weld circuit of the system 100 and generate a spectrometer signal which includes a measured spectrographic emission. In some examples, the one or more weld circuit sensors 168 may include one or more sensors configured to measure one or more welding parameters (e.g., electromagnetic measurements) of weld power output by the power supply 102 and/or of the weld circuit and generate one or more weld circuit sensor signals which include one or more measured welding parameters (e.g., voltage, current, power, resistance, enthalpy, frequency, etc.).

The control circuitry 112 may control one or more components, devices, systems, etc. of the system 100 (e.g., the power conversion circuitry 110, the wire feeder 104, and/or the welding torch 106) according to one or more welding parameters. As used herein, the term "welding parameter" includes any measurable, modifiable, configurable, or otherwise controllable aspect, output, or process of a welding system during one or more time intervals of some or all of a welding operation (e.g., a GMAW/MIG operation, a GMAW-P/pulsed MIG operation, an SMAW/stick welding operation, a current-controlled welding operation, an enthalpy-controlled welding operation, a power-controlled welding operation, a resistance-controlled welding operation, a voltage-controlled welding operation, a TIG/GTAW welding operation, an FCAW operation, a plasma cutting operation, a plasma welding operation, a spray welding operation, a short circuit transfer welding operation, a pulse welding operation, a pulsed spray welding operation, and/or one or more other welding modes). For example, the term "welding parameter" can include one or more voltages (measured in, e.g., volts ("V")) of a weld circuit and/or of welding power output by power conversion circuitry (e.g., a target voltage, a measured voltage, a determined voltage, an output voltage, etc.), one or more currents (measured in, e.g., amps ("A")) of a weld circuit and/or of welding power output by power conversion circuitry (e.g., a target current, a measured current, a determined current, an output current, etc.), one or more frequencies (measured in, e.g., hertz ("Hz")) of a weld circuit and/or of welding power output by power conversion circuitry (e.g., a target frequency, a measured frequency, a determined frequency, an output frequency, etc.), one or more powers (measured in, e.g., watts ("W")) of a weld circuit and/or of welding power output by power conversion circuitry (e.g., a target power, a measured power, a determined power, an output power, etc.), one or more resistances (measured in, e.g., ohms) of a weld circuit (e.g., a target resistance, a measured resistance, a determined resistance, etc.), one or more enthalpies (measured in, e.g., Joules ("J")) of a weld circuit and/or of welding power output by power conversion circuitry (e.g., a target enthalpy, a measured enthalpy, a determined enthalpy, an output enthalpy, etc.), one or more wire feed speeds (measured in, e.g., meters per second ("mps"), inches per minute ("ipm"), etc.) of a wire feeder (e.g., a target wire feed speed, a measured wire feed speed, an output wire feed speed, etc.), a ramping up rate (e.g., a rate at which a voltage, current, power, resistance, enthalpy, etc. is increased from one value to a target value and/or to a setpoint value) of welding power output by power conversion circuitry, a ramping down rate (e.g., a rate at which a voltage, current, power, resistance, enthalpy, etc. is decreased from one value to a target value and/or to a setpoint value) of welding power output by power conversion circuitry, one or more other measurable electric and/or electromagnetic aspects of a weld circuit or welding power output by power conversion circuitry, one or more short circuit durations of one or more short circuits of a weld circuit (e.g., a measured short circuit duration, a predetermined short circuit duration, a target short circuit duration, a determined short circuit duration, etc.), one or more arc lengths of a welding arc of a weld circuit (e.g., a measured arc length, a predetermined arc length, a target arc length, a determined arc length, etc.), one more welding waveforms, one more welding waveforms, one or more durations of a phase of a waveform, one or more durations of one or more other portions of a waveform (e.g., a wavelength of a welding waveform, one or more durations of one or more intervals and/or portions of a welding waveform, etc.), one or more waveform frequencies (e.g., a number of one or more intervals and/or portions of a welding waveform that occur in a set amount of time, etc.), one or more operating modes of power conversion circuitry (e.g., a voltage-controlled mode, a current-controlled mode, a power-controlled mode, a resistance-controlled mode, an enthalpy-controlled mode, etc.), one or more pulse parameters of one or more pulse cycles, and/or one or more other measurable, modifiable, configurable, or otherwise controllable aspects, outputs, and/or processes of a welding system (e.g., the system 100).

As used herein, the term "pulse parameter" includes one or more welding parameters of one or more pulse cycles (e.g., one or more pulse cycles according to which the control circuitry 112 controls the power conversion circuitry 110 to output welding power) of a welding operation (e.g., a pulsed welding operation, a GMAW/MIG operation, a GMAW-P/pulsed MIG operation, a pulsed spray welding operation, and/or one or more other welding modes). For example, the term "pulse parameter" can include one or more pulse widths (e.g., a duration of a peak phase of a pulse cycle), one or more pulse frequencies (e.g., a number of pulses occurring in a set amount of time), one or more target peak voltages (e.g., a target voltage of at least a portion of a peak phase of a pulse cycle), one or more target background voltages (e.g., a target voltage of at least a portion of a background phase of a pulse cycle), one or more other target voltages (e.g., one or more target voltages of one or more phases of a pulse cycle), one or more target peak currents (e.g., a target current of at least a portion of a peak phase of a pulse cycle), one or more target background currents (e.g., a target current of at least a portion of a background phase of a pulse cycle), one or more other target currents (e.g., one or more target currents of one or more phases of a pulse cycle), one or more ramping up rates (e.g., a ramping up rate of a beginning of a peak phase as a welding parameter is controlled to increase from a target background value to a target peak value), one or more ramping down rates (e.g., a ramping down rate of a beginning of a background phase as a welding parameter is controlled to decrease from a target peak value to a target background value), one or more target powers (e.g., a peak power, a background power, etc.), one or more target resistances (e.g., a peak resistance, a background resistance, etc.), one or more target enthalpies (e.g., a peak enthalpy, a background enthalpy, etc.), one or more other target values (e.g., any measurable value of a weld circuit, of welding power output by power conversion circuitry, and/or of a welding operation), and/or one or more other measurable and/or modifiable aspects, processes, and/or values of one or more pulse cycles.

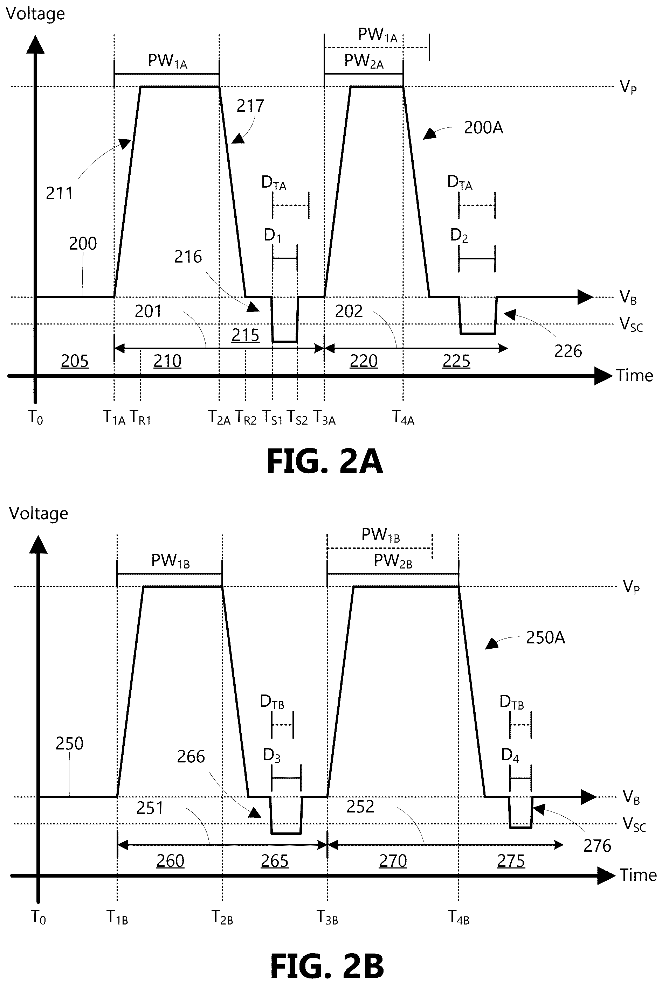

FIGS. 2A and 2B depicts graphs (x-axis: time; y-axis: voltage) of an example of a waveform 200A of a voltage 200 (e.g., a target voltage commanded by the control circuitry 112, a measured voltage measured by the voltage sensor 162, etc.) and an example of a waveform 250A of a voltage 250 of the system 100 (e.g., a target voltage commanded by the control circuitry 112, a measured voltage measured by the voltage sensor 162, etc.) during example pulse cycles. The waveforms 200A, 250A are depicted in FIGS. 2A and 2B as including substantially constant values and substantially constant rates of change during some time intervals, but such depictions are for illustrative purposes only. In some examples, a current and/or voltage (e.g., measured by either or both of the sensors 162, 164) may vary during one or more time intervals in one or more ways not depicted in and/or indicated by FIG. 2A and/or FIG. 2B. For example, relative proportions of voltage levels (e.g., target peak voltages, target background voltages, voltage levels of short circuits, voltage levels of anomalous cathode events, etc.), voltage rates of change (e.g. one or more ramping up rates, one or more ramping down rates, one or more rates of change to or from voltage levels of a short circuit, etc.), or durations (e.g., durations of one or more peak phases, durations of one or more background phases, durations of one or more short circuits, etc.) depicted in FIG. 2A and/or FIG. 2B are purely illustrative and may, in various embodiments, vary from the relative proportions depicted in FIG. 2A and/or FIG. 2B.

In FIG. 2A, a first pulse cycle 201 starts at a first time (T_{1A}) and ends at a third time (T_{3A}). The first pulse cycle 201 is followed by a second pulse cycle 202 that starts at the third time (T_{3A}). The first pulse cycle 201 includes a first peak phase 210, from the first time (T_{1A}) to a second time (T_{2A}), and a first background phase 215, from the second time (T_{2A}) to the third time (T_{3A}). The second pulse cycle 202 includes a second peak phase 220, from the third time (T_{3A}) to a fourth time (T_{4A}), and a second background phase 225, starting at a fourth time (T_{4A}). Each of the peak phases 210, 220 are defined by a pulse width indicated, in the first peak phase 210, by a first pulse width (PW_{1A}) and, in the second peak phase 220, by a second pulse width (PW_{2A}). Each of the peak phases 210, 220 are defined by a target peak voltage, indicated by a peak voltage (V_{P}) (e.g., a target voltage of the peak phases 210, 220). Each of the background phases 215, 225 are defined by a background phase duration and a target background voltage, indicated by a background voltage (V_{B}) (e.g., a target voltage of the background phases 215, 225).

In FIG. 2B, a first pulse cycle 251 starts at a first time (T_{1B}) and ends at a third time (T_{3B}). The first pulse cycle 251 is followed by a second pulse cycle 252 that starts at the third time (T_{3B}). The first pulse cycle 251 includes a first peak phase 260, from the first time (T_{1B}) to a second time (T_{2B}), and a first background phase 265, from the second time (T_{2B}) to the third time (T_{3B}). The second pulse cycle 252 includes a second peak phase 270, from the third time (T_{3B}) to a fourth time (T_{4B}), and a second background phase 275, starting at a fourth time (T_{4B}). Each of the peak phases 260, 270 are defined by a pulse width indicated, in the first peak phase 260, by a first pulse width (PW_{1B}) and, in the second peak phase 270, by a second pulse width (PW_{2B}). Each of the peak phases 260, 270 are defined by a target peak voltage, indicated by a peak voltage (V_{P}) (e.g., a target voltage of the peak phases 260, 270). Each of the background phases 265, 275 are defined by a background phase duration and a target background voltage, indicated by a background voltage (V_{B}) (e.g., a target voltage of the background phases 265, 275).

While FIGS. 2A and 2B depict each of the peak phases 210, 220, 260, 270 as having the same peak voltage (V_{P}) and each of the background phases 215, 225, 265, 275 as having the same background voltage (V_{B}), in some examples one or more peak phases of one or more pulse cycles may have one or more different target peak voltages and/or one or more background phases of one or more pulse cycles may have one or more different target background voltages. While FIGS. 2A and 2B depict each of the background phases 215, 265 as having the same background phase duration, in some examples one or more background phases of one or more pulse cycles may have one or more different background phase durations. In some examples, one or more peak phases may have one or more target peak currents, one or more target peak voltages, one or more target peak enthalpies, one or more target peak resistances, one or more target peak powers, and/or one or more other target peak values in addition to and/or alternative to one or more target peak voltages. In some examples, one or more background phases may have one or more target background currents, one or more target background enthalpies, one or more target background resistances, one or more target background powers, and/or one or more other target background values in addition to and/or alternative to one or more target background voltages.

Referring to FIGS. 2A and 2B, and with reference to FIG. 1, the control circuitry 112 may control the power conversion circuitry 110 to output welding power in a voltage-controlled mode, a current-controlled mode, a power-controlled mode, an enthalpy-controlled mode, a resistance-controlled mode, and/or one or more other controlled modes during at least one or more portions of one or more phases (e.g., any, some, or all of the phases 210, 215, 220, 225, 260, 265, 270, 275, one or more other peak phases, one or more other background phases, one or more other phases, etc.), one or more portions of one or more pulse cycles (e.g., the pulse cycles 201, 202, 251, 252, one or more other pulse cycles, etc.), one or more portions of one or more welding waveforms, and/or one or more other portions of a welding operation (e.g., GMAW, GMAW-P, TIG, FCAW, SMAW, plasma cutting, plasma welding, spray welding, short circuit transfer welding, pulse welding, pulsed spray welding, etc.). When controlling the power conversion circuitry 110 to output welding power in, e.g., a voltage-controlled mode, the control circuitry 112 controls the power conversion to increase or decrease the output current (e.g., measured in amps) and/or one or more other welding parameters (e.g., power, resistance, enthalpy, etc.) of the power conversion circuitry 110 based on a difference between measured voltage (e.g., measured by the voltage sensor 162) and a target voltage. When controlling the power conversion circuitry 110 to output welding power in, e.g., a current-controlled mode, the control circuitry 112 controls the power conversion circuitry 110 to increase or decrease the output voltage (e.g., measured in volts) and/or one or more other welding parameters (e.g., power, resistance, enthalpy, etc.) of the power conversion circuitry 110 based on the difference between a measured current (e.g., measured by the current sensor 164) and a target current.

In some examples, the control circuitry 112 controls the power conversion circuitry 110 to output welding power in a first controlled mode (e.g., a current-controlled mode) during a first portion of a pulse cycle and in a second controlled mode (e.g., a voltage-controlled mode) during a second portion of a pulse cycle. In some such examples, the control circuitry 112 controls the power conversion circuitry 110 to output welding power in a first controlled mode (e.g., a current-controlled mode) during some or all of a ramping up period of a phase (e.g., as voltage transitions from a target background voltage to a target peak voltage in a beginning of a peak phase) and in a second controlled mode (e.g., a voltage-controlled mode) during some or all of a remainder of the phase (e.g., a remaining portion of a peak phase between a ramping up period and a subsequent phase). For example, in the first pulse cycle 201 of FIG. 2A, the control circuitry 112 controls the power conversion circuitry 110 to output welding power in a current-controlled mode during some or all of a ramping up period 211 from the first time (T_{1A}) until a first ramping time (T_{R1}), and, also in the example of FIG. 2A, the control circuitry 112 controls the power conversion circuitry 110 to output welding power in a voltage-controlled mode for some or all of a portion of the first peak phase 210 between the first ramping time (T_{R1}) and the second time (T_{2A}). The ramping up period 211 may include some or all of a period of the first peak phase 210 in which the voltage 200 changes from the background voltage (V_{B}) of an initial background phase 205 to the peak voltage (V_{P}) of the first peak phase 210. In some additional and/or alternative examples, the control circuitry 112 controls the power conversion circuitry 110 to output welding power in a first controlled mode (e.g., a current-controlled mode) during some or all of a ramping down period of a phase (e.g., as voltage transitions from a target peak voltage to a target background voltage in a beginning of a background phase) and in a second controlled mode (e.g., a voltage-controlled mode) during some or all of a remainder of the phase (e.g., a remaining portion of a background phase between a ramping down period and a subsequent phase). For example, in the first pulse cycle 201 of FIG. 2A, the control circuitry 112 controls the power conversion circuitry 110 to output welding power in a current-controlled mode during some or all of a ramping down period 217 from the second time (T_{2A}) until a second ramping time (T_{R2}), and, also in the example of FIG. 2A, the control circuitry 112 controls the power conversion circuitry 110 to output welding power in a voltage-controlled mode for some or all of a portion of the first background phase 215 between the second ramping time (T_{R2}) and the third time (T_{3A}). The ramping down period 217 may include some or all of a period of the first background phase 215 in which the voltage 200 changes from the peak voltage (Vsec_{P}) of the first peak phase 210 to the background voltage (V_{B}) of the first background phase 215.

Referring to FIG. 2A, and with reference to FIG. 1, in some examples, the control circuitry 112 may determine whether a short circuit event (e.g., a molten ball briefly joining the electrode 142 and the workpiece 146) has occurred in one or more ways. In some examples, the control circuitry 112 monitors one or more sensor signals (e.g., a sensor signal generated by the voltage sensor 162) to determine whether a short circuit event has occurred by detecting that a measured voltage is less than a short circuit detection voltage threshold (V_{SC}). The short circuit detection voltage threshold (V_{SC}) may be a predetermined voltage level that is, e.g., less than the background voltage (V_{B}).

For example, the control circuitry 112 determines that a first short circuit event 216 has occurred by detecting the voltage 200 as being less than the short circuit detection voltage threshold (V_{SC}) during the first background phase 215. In the example of FIG. 2A, the control circuitry 112 determines a short circuit duration of the first short circuit event 216 as being an amount of time between a short circuit start time (T_{S1}) and a short circuit end time (T_{S2}) determined by the control circuitry 112. In some examples, the control circuitry 112 may determine the short circuit start time (T_{S1}) as being a time at which the voltage 200 is first measured as being less than the short circuit detection voltage threshold (V_{SC}). In some examples, the control circuitry 112 may determine the short circuit end time (T_{S2}) as being a time at which the voltage 200 returns to the background voltage (V_{B}), returns to being within a predetermined proximity (e.g., a percentage, a number of volts, etc.) of the background voltage (V_{B}), and/or returns to being greater than the short circuit detection voltage threshold (V_{SC}). In some examples, the short circuit end time (T_{S2}) is detected when the voltage 200 has exceeded the short circuit detection threshold (V_{SC}) and/or one or more other voltage thresholds for at least a threshold time duration or threshold number of samples (e.g., discrete measured voltage values measured by the voltage sensor 162).

In some examples, the short circuit end time (T_{S2}) is detected when the voltage 200 has exceeded one or more threshold voltages other than and/or in addition to the short circuit detection threshold (V_{SC}). In some examples, the control circuitry 112 detects the short circuit end time (T_{S2}) when the voltage 200 has returned to the background voltage (V_{B}). In some examples, the control circuitry 112 detects the short circuit end time (T_{S2}) when the voltage 200 has exceeded an arc detection voltage (e.g., a voltage level different than the short circuit detection threshold (V_{SC})). For example, the control circuitry 112 may determine the arc detection voltage based on a current (e.g., a measured current, target current, output current, etc.) and/or one or more other welding parameters of the welding power output by the power conversion circuitry 110 and/or of the weld circuit, e.g., by calculating and/or modifying the arc detection voltage as a function of the magnitude of the current as the current initiates and/or changes over time.

In response to determining that a short circuit event has occurred, the control circuitry 112 may determine one or more short circuit parameters (e.g., a short circuit duration, a short circuit voltage level, etc.) of a short circuit event (e.g., based on the one or more sensor signals). The control circuitry 112 may compare the one or more short circuit parameters to one or more target short circuit parameters (e.g., a target short circuit duration, a target short circuit voltage level, etc.). A target short circuit parameter may comprise a single value, a range of values, and/or one or more other pluralities of values. The target short circuit parameter may be a setpoint, input via the user interface 114, determined by the control circuitry 112, etc. The target short circuit parameter may correspond to a target arc length (e.g., a setpoint target arc length, a target arc length input via the user interface 114, a target arc length determined by the control circuitry 112, etc.). Accordingly, by comparing the one or more short circuit parameters to one or more target short circuit parameters, the control circuitry 112 can determine an arc length of a welding arc of the weld circuit and control and/or modify the arc length by controlling one or more aspects of the system 100 (e.g., welding parameters, pulse parameters, etc.) based on a difference between the one or more short circuit parameters and the one or more target short circuit parameters.

In some examples, the control circuitry 112 determines, based, at least in part, on the one or more short circuit parameters, one or more welding parameters, such as one or more wire feed speeds, one or more durations of one or phases of a waveform, one or more durations of one or more portions of a waveform, one or more waveform frequencies, one or more ramping up rates, one or more ramping down rates, one or more target pulse parameters, one or more target voltages, one or more target currents, one or more target powers, one or more target enthalpies, one or more target resistances, one or more other target welding parameters, one or more pulse parameter setpoints, one or more voltage setpoints, one or more current setpoints, one or more power setpoints, one or more enthalpy setpoints, one or more resistance setpoints, one or more other welding parameter setpoints, and/or one or more other welding parameters. In some examples, the control circuitry 112 determines, based, at least in part, on the one or more short circuit parameters, one or more pulse parameters, such as one or more pulse widths, one or more pulse frequencies, one or more ramping up rates, one or more ramping down rates, one or more target peak voltages, one or more target background voltages, one or more other target voltages, one or more target peak currents, one or more target background currents, one or more other target currents, one or more target powers, one or more target enthalpies, one or more target resistances, one or more other target values, and/or one or more other pulse parameters.

In the example of FIG. 2A, in response to detecting the first short circuit event 216, the control circuitry 112 determines a first short circuit duration (D₁) (e.g., an amount of time between the short circuit start time (T_{S1}) and the short circuit end time (T_{S2})). The control circuitry 112 compares the first short circuit duration (D₁) to a first target short circuit duration (D_{TA}). In response to identifying that the first short circuit duration (D₁) is less than the first target short circuit duration (D_{TA}) (e.g., indicating that an arc length of a welding arc of the weld circuit is greater than a target arc length), the control circuitry 112 calculates the second pulse width (PW_{2A}) of the second peak phase 220 by decreasing the first pulse width (PW_{1A}) of the first peak phase 210. By decreasing from the first pulse width (PW_{1A}) to the second pulse width (PW_{2A}), the control circuitry 112 may increase a short circuit duration of a subsequent short circuit relative to the first short circuit duration (D₁) (e.g., intending for the arc length of the welding arc to decrease).

For example, in the second background phase 225, decreasing from the first pulse width (PW_{1A}) to the second pulse width (PW_{2A}) can be seen to result in a second short circuit duration (D₂) of a second short circuit event 226 that is greater than the first short circuit duration (D₁) and, in the example of FIG. 2A, equal to the first target short circuit duration (D_{TA}). In some examples, in response to identifying that the first short circuit duration (D₁) is less than the first target short circuit duration (D_{TA}), the control circuitry 112 additionally and/or alternatively controls and/or modifies one or more other welding parameters and/or pulse parameters. For example, in response to identifying that a short circuit duration is less than a target short circuit duration, the control circuitry 112 may decrease a target peak voltage, decrease one or more other target voltages, decrease a target peak current, decrease one or more other target currents, decrease a waveform frequency, decrease a pulse frequency, modify one or more durations of one or phases of a waveform, modify one or more durations of one or more portions of a waveform, decrease a pulse width, decrease a ramping up rate (e.g., of a peak phase), increase a ramping down rate (e.g., of a background phase), and/or modify one or more other welding parameters.

In the example of FIG. 2B, in response to detecting a third short circuit event 266, the control circuitry 112 determines a third short circuit duration (D₃), and the control circuitry 112 compares the third short circuit duration (D₃) to a second target short circuit duration (D_{TB}). In response to identifying that the third short circuit duration (D₃) is greater than the second target short circuit duration (D_{TB}) (e.g., indicating that an arc length of a welding arc of the weld circuit is less than a target arc length), the control circuitry 112 increases a pulse width of the voltage 200 by determining the second pulse width (PW_{2B}) of the second peak phase 270, which is greater than the first pulse width (PW_{1B}) of the first peak phase 260. By increasing from the first pulse width (PW_{1B}) to the second pulse width (PW_{2B}), the control circuitry 112 may decrease a short circuit duration of a subsequent short circuit relative to the third short circuit duration (D₃) (e.g., indicating that the arc length of the welding arc of the weld circuit has increased).

For example, in the second background phase 275, increasing from the first pulse width (PW_{1B}) to the second pulse width (PW_{2B}) can be seen to result in a fourth short circuit duration (D₄) of a fourth short circuit 276 that is less than the third short circuit duration (D₃) and, in the example of FIG. 2B, equal to the second target short circuit duration (D_{TB}). In some examples, in response to identifying that the third short circuit duration (D₃) is greater than the second target short circuit duration (D_{TB}), the control circuitry 112 additionally and/or alternatively controls and/or modifies one or more other welding parameters and/or pulse parameters. For example, in response to identifying that a short circuit duration is greater than a target short circuit duration, the control circuitry 112 may increase a target peak voltage, increase one or more other target voltages, increase a target peak current, increase one or more other target currents, increase a waveform frequency, increase a pulse frequency, modify one or more durations of one or more phases of a waveform, modify one or more durations of one or more portions of a waveform, increase a pulse width, increase a ramping up rate (e.g., of a peak phase), decrease a ramping down rate (e.g., of a background phase), and/or modify one or more other welding parameters.

In some examples, the control circuitry 112 may additionally and/or alternatively determine that a short circuit event has occurred based on one or more other measurements (e.g., measured by any, some, or all of the sensors 164, 165, 166, 167, 168), thresholds, and/or detected events. For example, the control circuitry 112 may additionally and/or alternatively determine that a short circuit event has occurred based on a power source response short circuit indication, an audio short circuit indication, a spectrographic short circuit indication, and/or one or more other indications.

In some examples, the one or more sensors 160 include the power source sensor 165, which is configured to measure a state and/or parameter of the power source 108 and/or the power conversion circuitry 110 and generate a power source sensor signal comprising a measured power source response. A measured power source response may be used to detect a short circuit event by detecting, e.g., a load change on the power source 108 and/or on the power conversion circuitry 110 (as indicated by, e.g., an inverter of the power conversion circuitry 110), a change in rpm or torque of an engine or motor of the power source 108, and/or one or more other changes and/or indications. In some examples, the control circuitry 112 may monitor a power source sensor signal generated by the power source sensor 165 (e.g., during a background phase of a pulse cycle) to determine whether a short circuit event occurred by detecting a power source response short circuit indication. In some examples, in response to determining that a short circuit event occurred by detecting a power source response short circuit indication, the control circuitry 112 determines one or more short circuit parameters (e.g., a short circuit duration) based on the power source sensor signal, a predetermined short circuit duration (e.g., a predetermined short circuit duration associated with the power source response short circuit indication), and/or on one or more other factors.

In some examples, the one or more sensors 160 include the audio sensor 166 (e.g., a microphone), which is configured to measure audio feedback of the system 100 (e.g., sounds produced by the welding torch 106, a welding arc, the power source 108, the power supply 102, and/or the wire feeder 104) and generate an audio sensor signal comprising a detected audio (e.g., a decibel level, a sound profile, an audio frequency spectrum, etc.). Detected audio may be used to detect a short circuit event by detecting, e.g., a sound signature and/or signature frequency spectrum produced by a short circuit between the electrode 142 and the workpiece 146, a sound signature and/or signature frequency spectrum produced by a load change on the power conversion circuitry 110 and/or the power source 108, and/or one or more other sounds. In some examples, the control circuitry 112 may monitor an audio sensor signal generated by the audio sensor 166 (e.g., during a background phase of a pulse cycle) to determine whether a short circuit event occurred by detecting an audio short circuit indication. In some examples, in response to determining that a short circuit event occurred by detecting an audio short circuit indication, the control circuitry 112 determines one or more short circuit parameters (e.g., a short circuit duration) based on the audio sensor signal, a predetermined short circuit duration (e.g., a predetermined short circuit duration associated with the audio short circuit indication), and/or on one or more other factors.

In some examples, the one or more sensors 160 include the spectrometer 167, which is configured to measure a spectrographic emission (e.g., light) of (e.g., produced) by a welding arc between the electrode 142 and the workpiece 146 and generate a spectrometer signal comprising a measured spectrographic emission. A measured spectrographic emission (e.g., an emitted light spectrum) may be used to detect a short circuit event by detecting, e.g., level(s) and/or frequencies of light indicating that a short circuit has occurred. In some examples, the control circuitry 112 may monitor a spectrometer signal generated by the spectrometer 167 (e.g., during a background phase of a pulse cycle) to determine whether a short circuit event occurred by detecting a spectrographic short circuit indication. In some examples, in response to determining that a short circuit event occurred by detecting a spectrographic short circuit indication, the control circuitry 112 determines one or more short circuit parameters (e.g., a short circuit duration) based on the spectrometer signal, a predetermined short circuit duration (e.g., a predetermined short circuit duration associated with the spectrographic short circuit indication), and/or on one or more other factors.

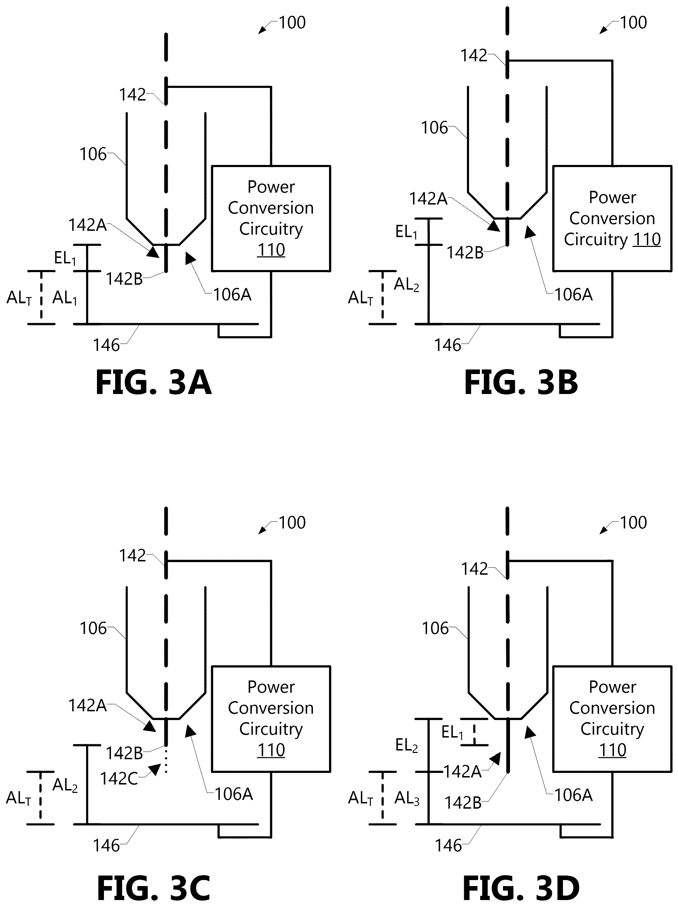

FIGS. 3A-3D depict the welding torch 106 and the electrode 142 of FIG. 1 more closely to illustrate an example of modifying one or more welding parameters to control an arc length. In FIGS. 3A-3D, an electrode extension 142A of the electrode 142 is a portion of the electrode 142 which extends beyond a contact tip 106A of the welding torch 106. In the example of FIG. 3A, the electrode extension 142A has a first electrode extension length (EL₁) (e.g., a length of the electrode 142 between the contact tip 106A and a tip 142B of the electrode extension 142A). In the example of FIG. 3A, the position of the contact tip 106A relative to the workpiece 146 and the first electrode extension length (EL₁) provide a first arc length (AL₁) (e.g., a distance between the tip 142B of the electrode extension 142A and the workpiece 146) equal to a target arc length (AL) (e.g., a selected, determined, calculated, ideal, and/or desired value or range of values of arc lengths of the system 100).

In the example of FIG. 3B, however, the contact tip 106A has moved further from the workpiece 146 than in the example of FIG. 3A, while the first electrode extension length (EL₁) remains the same. Accordingly, in the example of FIG. 3B, the position of the contact tip 106A relative to the workpiece 146 and the first electrode extension length (EL₁) provide a second arc length (AL₂) greater than the target arc length (AL). Because the second arc length (AL₂) is greater than the first arc length (AL₁), durations of short circuit events (e.g., following a pulse phase of a pulse cycle) between the electrode extension 142A and the workpiece 146 generally shorten in duration, as molten metal being transferred from the electrode extension 142A to the workpiece 146 joins each together for shorter periods of time. For example, surface tension of the molten metal can keep the electrode extension 142A and the workpiece 146 connected. However, as the arc length lengthens, the surface tension of the molten metal may become more stressed while connecting the electrode extension 142A and the workpiece 146 and, thereby, reducing an amount of time the electrode extension 142A is connected to the workpiece 146 (e.g., a short circuit duration). Accordingly, shorter short circuit durations can indicate longer arc lengths, and longer short circuit durations can indicate shorter arc lengths. By selecting, determining, or otherwise utilizing a target short circuit duration corresponding to a target arc length, measured short circuit durations may be compared to the target short circuit duration as a proxy for measuring arc length.

In the example of FIG. 3C, the control circuitry 112, based on one or more short circuit durations of one or more short circuit events between the electrode extension 142A and the workpiece 146, determines one or more welding parameters configured to elongate the electrode extension 142A by an additional length 142C. For example, and with reference to FIG. 2A, the control circuitry 112 may decrease a pulse width from the first pulse width (PW1A) to the second pulse width (PW2A) to elongate the electrode extension 142A. In some examples, by decreasing a target peak voltage, decreasing one or more other target voltages, decreasing a target peak current, decreasing one or more other target currents, decreasing a waveform frequency, decreasing a pulse frequency, modifying one or more durations of one or more phases of a waveform, modifying one or more durations of one or more portions of a waveform, decreasing a pulse width, decreasing a ramping up rate (e.g., of a peak phase), and/or increasing a ramping down rate (e.g., of a background phase) while maintaining a substantially constant wire feed speed, the length of the electrode extension 142A can be increased by decreasing a rate at which the electrode 142 melts, thereby providing a greater amount of time for the electrode 142 to travel beyond the contact tip 106A prior to melting into the workpiece 146. Conversely, by, e.g., increasing a target peak voltage, increasing one or more other target voltages, increasing a target peak current, increasing one or more other target currents, increasing a waveform frequency, increasing a pulse frequency, modifying one or more durations of one or more phases of a waveform, modifying one or more durations of one or more portions of a waveform, increasing a pulse width, increasing a ramping up rate (e.g., of a peak phase), and/or decreasing a ramping down rate (e.g., of a background phase) while maintaining a substantially constant wire feed speed, the length of the electrode extension 142A can be decreased by increasing a rate at which the electrode 142 melts. Accordingly, by comparing the duration of a measured short circuit duration to a target short circuit duration, the control circuitry 112 can determine that the second arc length (AL₂) is unequal to the target arc length (AL) and, based on a difference between the measured short circuit duration and target short circuit duration, determine one or more welding parameters to modify to adjust the arc length closer to the target arc length (AL) and an amount by which each of the one or more welding parameters should be modified.

In the example of FIG. 3D, the control circuitry 112 has modified one or more welding parameters (e.g., by decreasing a pulse width) to slow a rate of melting of the electrode 142. Accordingly, the electrode extension 142A now defines a second electrode extension length (EL₂) longer than the first electrode extension length (EL₁) of FIGS. 3A-3C. By increasing the length of the electrode extension 142A, the tip 142B of the electrode extension 142A and the workpiece 146 now define a third arc length (AL₃) equal to the target arc length (AL), even though the contact tip 106A is positioned the same distance from the workpiece 146 as in FIGS. 3B and 3C.

In some examples, the target arc length (AL) and/or one or more other target arc lengths may comprise single value, a range of values, and/or one or more other pluralities of values. For example, a target arc length may be determined by a single value in addition to a difference magnitude threshold (e.g., a percentage of the single value), and the control circuitry 112 may not modify one or more welding parameters even if an arc length is unequal to the single value of the target arc length if the arc length nonetheless differs from the single value by less than the difference magnitude threshold.

In some examples, a control loop controlling one or more welding parameters based on short circuit duration and/or one or more other welding parameters and/or characteristics of a weld circuit may dampen (e.g., bring closer to a target value), filter (e.g., omit outlier values), weight (e.g., apply a 0.8x multiplier, a 1.2x multiplier, etc. to an influence of an input value), and/or otherwise modify one or more input values of the control loop (e.g., a measured short circuit duration, a predetermined short circuit duration, and/or one or more other short circuit parameters for a short circuit duration control loop, a measured voltage for a control loop of a voltage-controlled mode, etc.) and/or one or more output values of the control loop (e.g., one or more amounts to add to, subtract from, multiply by, etc. pulse width, current, and/or one or more welding parameters). Such dampening, filtering, weighting, modification, etc. may improve the performance of a control loop by, e.g., reducing and/or avoiding overshoot, oscillation, and/or one or more other undesirable effects. For example, referring to FIGS. 3A-3D, a short circuit duration control loop that does not incorporate dampening, filtering, weighting, modification, etc. may cause an arc length to iteratively oscillate between being greater than the target arc length (A_{L}) and being less than the target arc length (A_{L}) due to repeated overshooting by the control loop, and such oscillation in arc length may worsen weld quality and/or otherwise negatively affect a welding operation.

Through processes such as those depicted in and described with respect to FIGS. 2A-3D, the control circuitry 112 may control and/or maintain an arc length of a welding arc of the system 100 based on measured short circuit durations of short circuits between the electrode 142 and the workpiece 146. Such processes enable the control circuitry 112 to reduce variations in the arc length of the system 100 even as a distance between the contact tip 106A and the workpiece 146 varies.

However, in some circumstances, increases in contact tip to work distance (e.g., a distance between the contact tip 106A and the workpiece 146) may cause an average output current of a weld circuit (e.g., an average of a plurality of measured and/or compensated measured currents of a weld circuit over a defined period of time) to decrease when the power conversion circuitry 110 is outputting welding power in a voltage-controlled mode (e.g., due to the increase in contact tip to work distance increasing resistance in the weld circuit). Increases in contact tip to work distance may increase arc length (e.g., from the first arc length (AL₁) of FIG. 3A to the second arc length (AL₂) of FIG. 3B), and an increased distance between the tip 142B of the electrode 142 and the workpiece 146, across which welding power travels in a weld circuit, may increase resistance in the weld circuit and, thereby, decrease an average output current of welding power output to the weld circuit. Increases in contact tip to work distance may increase an electrode extension length of the electrode extension 142A (e.g., from the first electrode extension length (EL₁) of FIG. 3A to the second electrode extension length (EL₂) of FIG. 3D), and the increased length of the electrode 142 within a weld circuit may increase resistance in the weld circuit and, thereby, decrease an average output current of welding power output to the weld circuit. Accordingly, even when controlling arc length (e.g., by adjusting one or more welding parameters based on short circuit duration), increases in contact tip to work distance may, despite the controlling of the arc length, decrease output current of welding power output to a weld circuit.

Some examples use an average output current of welding power as an indication of penetration of a weld bead within a workpiece (e.g., a distance that the weld bead extends into the workpiece). Accordingly, if an average output current of welding power is below a lower threshold current (e.g., 170 amps,), then a weld may be insufficiently penetrating a workpiece. Insufficient weld penetration may cause weld quality to worsen, e.g., by reducing a strength of a weld. Worsened weld quality may jeopardize a structural integrity of a device, structure, etc. being welded, increase time used during a welding operation (e.g., by causing an operator to redo a portion of a weld having insufficient penetration), and/or cause other negative effects. Furthermore, increases in wire feed speed may increase a weld bead size and, thereby, weld strength, which may compensate for negative effects of one or more other errors and/or inconsistencies of a welding operator (e.g., an inexperienced welding operator) during a welding operation.

Accordingly, some example welding systems, methods, and control circuitry provide one-way wire feed speed adjustment during a welding operation, e.g., in response to average output current falling below a threshold current and/or to prevent, reduce, and/or compensate for negative effects on a welding operation caused by insufficient weld penetration and may additionally and/or one or more other negative effects caused by one or more other errors and/or inconsistencies in a welding operation.

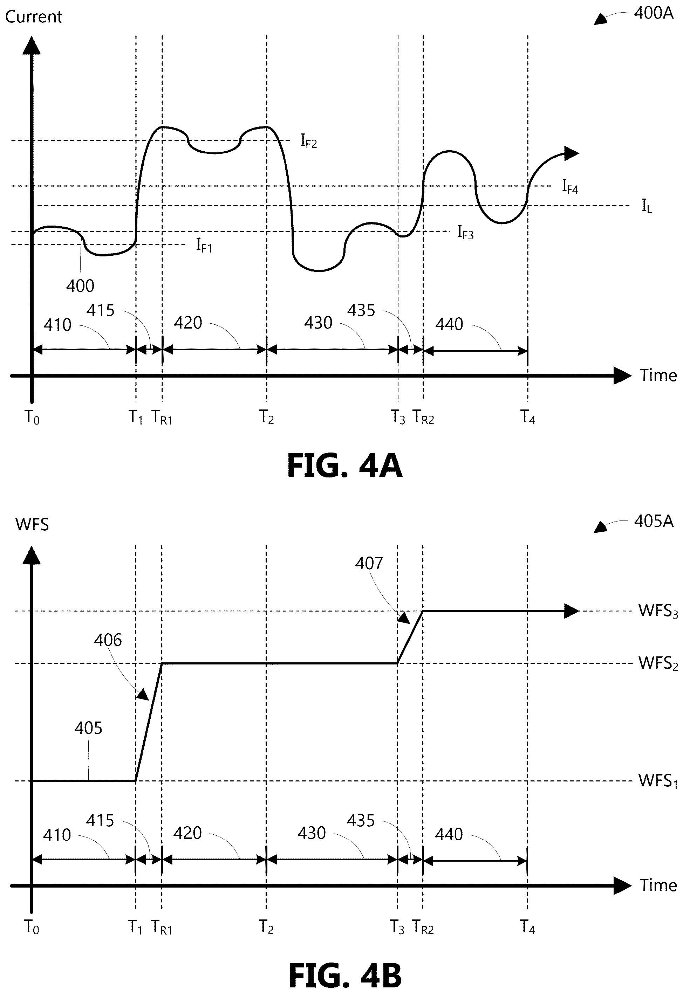

Referring now to FIGS. 4A and 4B, and with reference to FIGS. 1 and 3A-3D, FIGS. 4A and 4B depict examples of a one-way wire feed speed adjustment process. FIG. 4A depicts a graph (x-axis: time; y-axis: current) of an example of a waveform 400A of a filtered current 400 of welding power output by the power conversion circuitry 110 during a welding operation from an initial time (T₀) past a fourth time (T₄). FIG. 4B depicts a graph (x-axis: time; y-axis: wire feed speed ("WFS")) of an example of a waveform 405A of a wire feed speed 405 of the wire feeder 104 during a welding operation the initial time (T₀) (e.g., the same time as the initial time (T₀) of FIG. 4A) and the fourth time (T₄) (e.g., the same time as the fourth time (T₄) of FIG. 4A). The filtered current 400 may be a measured current (e.g., measured by the current sensor 164), a compensated current (e.g., calculated by the control circuitry 112 modifying one or more measured currents measured by the current sensor 164), an average output current calculated by, e.g., averaging and/or otherwise modifying one or more measured currents and/or one or more compensated currents measured and/or compensated during at least one or more portions (e.g., one or more voltage-controlled portions) of one or more waveforms (e.g., either or both of the waveforms 200A, 250A), ), one or more pulse cycles (e.g., any, some, or all of the pulse cycles 201, 202, 251, 252), one or more phases (e.g., any, some, or all of the phases 205, 210, 215, 225, 260, 265, 270, 275), one or more ramping up periods (e.g., the ramping up period 211), one or more ramping down periods (e.g., the ramping down period 217), and/or one or more other periods of time. The wire feed speed 405 may be a target wire feed speed (e.g., commanded by the control circuitry 112), a measured wire feed speed (e.g., measured by the wire feed speed sensor 163), etc. that is measured, commanded, etc. during the one or more portions of the waveform 400A depicted in FIG. 4A.

In the examples of FIGS. 4A and 4B, the control circuitry 112 controls the wire feed speed 405 of the wire feeder 104 according to a one-way wire feed speed adjustment process based on comparing the filtered current 400 to a lower threshold current (I_{L}) (e.g., a lower threshold average current level). A filtered current (e.g., an average output current) being less than the lower threshold current (I_{L}) may indicate that weld penetration is insufficiently small and/or at risk of becoming insufficiently small for establishing a desired amount of weld strength. The lower threshold current (I_{L}) may be a predetermined current level (e.g., a setpoint, a current level associated with a welding operation, an input received by the user interface 114, etc.), a calculated current level (calculated by, e.g., the control circuitry 112), and/or one or more other current levels and/or ranges. In some examples, a lower threshold current (e.g., the lower threshold current (I_{L})) is a current less than or equal to 200 amps and/or greater than or equal to 140 amps (e.g., 170 amps). In some examples, a lower threshold current (e.g., the lower threshold current (I_{L})) may be any amount of amps.

As can be seen in FIG. 4A, during a first time period 410 between the initial time (T₀) and a first time (T₁), the control circuitry 112 monitors a current sensor signal generated by the current sensor 164 to determine a first filtered current level (I_{F1}) of the filtered current 400 (e.g., an average output current of the power conversion circuitry 110 during some or all of the first time period 410). The control circuitry 112 compares the first filtered current level (I_{F1}) to the lower threshold current (I_{L}) and determines that the first filtered current level (I_{F1}) is less than the lower threshold current (I_{L}), which may indicate that a contact tip to work distance of the system 100 is too big and/or that a weld produced by the system 100 is insufficiently penetrating the workpiece 146. In response to determining that the first filtered current level (I_{F1}) is less than the lower threshold current (I_{L}), the control circuitry 112 determines that wire feed speed 405 of the wire feeder 104 should be increased.

In some examples, the control circuitry 112 does not determine a filtered current level (e.g., the first filtered current (I_{F1})) below a lower threshold current (e.g., the lower threshold current (I_{L})) immediately upon a filtered current (e.g., the filtered current 400, a measured current, a compensated current, etc.) falling below the lower threshold current. As can be seen in the example of FIG. 4A, the control circuitry 112 does not determine and respond to the first filtered current level (I_{F1}) as being below the lower threshold current (I_{L}) until the first time (T₁), even though the filtered current 400 falls below the lower threshold current (I_{L}) prior to the first time (T₁). In some examples, the control circuitry 112 determines a filtered current level (e.g., the first filtered current (I_{F1})) based on a regularly updated average current (e.g., an average of one or more measured currents and/or one or more compensated currents measured over a predetermined period of time) or one or more other regularly updated calculated currents. Accordingly, in some such examples, a filtered current falling below a lower threshold current does not cause the control circuitry 112 to determine a filtered current level below the lower threshold current until an average current or calculated current also falls below the lower threshold current. For example, the control circuitry 112 may not determine the first filtered current level (I_{F1}) as being below the lower threshold current (I_{L}) until the first time (T1) because, prior to the first time (T₁), a regularly updated average of the filtered current 400 exceeded the lower threshold current (I_{L}).

Accordingly, absent a decrease in filtered current below a lower threshold current for a long enough period of time to also decrease an average current or calculated current below the lower threshold current, the control circuitry 112 may not increase wire feed speed based on more minor fluctuations of a filtered current below a lower threshold current. A filtered current may decrease below a lower threshold current without causing an average current or calculated current to decrease below the lower threshold current due to, e.g., random fluctuations in the filtered current, one or more short circuits between the electrode 142 and the workpiece 146, one or more pulse parameters of one or more phases of one or more pulse cycles (e.g., a target background current of a background phase being less than the lower threshold current while a target peak current of a peak phase is greater than the lower threshold current), one or more welding parameters of one or more portions of a waveform, and/or one or more other factors.

As can be seen in FIG. 4B, during the first time period 410, the control circuitry 112 is controlling the wire feeder 104 to advance the electrode 142 at a first wire feed speed (WFS₁) (e.g., a wire feed speed setpoint, a measured wire feed speed, a wire feed speed associated with a welding operation, an initial wire feed speed setpoint of a welding operation, an input value received by the user interface 114, a wire feed speed determined by the control circuitry 112, a wire feed speed of an ongoing welding operation, etc.). In response to determining that the first filtered current level (I_{F1}) is less than the lower threshold current (I_{L}), the control circuitry 112 determines a second wire feed speed (WFS₂) (e.g., a first increased wire feed speed) that is greater than the first wire feed speed (WFS₁). Accordingly, after the first time (T₁), the control circuitry 112 controls the wire feeder 104 such that the wire feed speed 405 increases from the first wire feed speed (WFS₁) to the second wire feed speed (WFS₂) during a first ramping up period 415 from the first time (T₁) until a first ramping time (T_{R1}) at a first ramping up rate 406 (e.g., a rate of change of the wire feed speed 405 from the first wire feed speed (WFS₁) to the second wire feed speed (WFS₂)). By the first ramping time (T_{R1}), the control circuitry 112 has begun controlling the wire feeder 104 to advance the electrode 142 at the second wire feed speed (WFS₂).

The second wire feed speed (WFS₂) and/or the first ramping up rate 406 are calculated, selected, and/or otherwise determined (e.g., by the control circuitry 112) to bring the filtered current 400 closer to, to equal to, and/or above the lower threshold current (I_{L}). Accordingly, as can be seen in FIG. 4A, the current 400 increases above the lower threshold current (I_{L}) during the first ramping up period 415. During a second time period 420 between the first ramping time (R₁) and a second time (T₂), the control circuitry 112 monitors a current sensor signal generated by the current sensor 164 to determine a second filtered current level (I_{F2}) of the filtered current 400 (e.g., an average output current of the power conversion circuitry 110 during some or all of the second time period 420). The control circuitry 112 compares the second filtered current level (I_{F2}) to the lower threshold current (I_{L}) and determines that the second filtered current level (I_{F2}) is greater than the lower threshold current (I_{L}), which may indicate that a contact tip to work distance of the system 100 is sufficiently small and/or that a weld produced by the system 100 is sufficiently penetrating the workpiece 146. In response to determining that the second filtered current level (I_{F1}) is greater than the lower threshold current (I_{L}), the control circuitry 112 determines that wire feed speed 405 of the wire feeder 104 should not be increased.

The increase of the wire feed speed 405 from the first wire feed speed (WFS₁) to the second wire feed speed (WFS₂) causes the current to increase above the lower threshold current (I_{L}) by an amount greater than the difference between the first filtered current level (I_{F1}) and the lower threshold current (I_{L}). However, in response to determining that the second filtered current level (I_{F2}) is greater the lower threshold current (I_{L}), the control circuitry 112, in the example of FIGS. 4A and 4B, does not decrease the wire feed speed 405, despite the second filtered current level (I_{F2}) being greater than the lower threshold current (I_{L}). Instead, even though a difference between the first filtered current level (I_{F1}) and the lower threshold current (I_{L}) prompted the control circuitry 112 to increase the wire feed speed, a difference between the second filtered current level (I_{F2}) and the lower threshold current (I_{L}) does not prompt the control circuitry 112 to decrease the wire feed speed 405, even though a magnitude of the difference between the second filtered current level (I_{F2}) and the lower threshold current (I_{L}) exceeds a magnitude of the difference between the first filtered current level (I_{F1}) and the lower threshold current (I_{L}).

In the examples of one-way wire feed speed adjustment depicted in FIGS. 4A and 4B, the control circuitry 112 increases the wire feed speed 405 by comparing the filtered current 400 to the lower threshold current (I_{L}), but the control circuitry 112 does not decrease the wire feed speed 405 based on the filtered current 400. For example, during the first time period 410, the control circuitry 112 may identify the first wire feed speed (WFS₁) as a lower threshold wire feed speed, and the control circuitry 112 may not control the wire feeder 104 to decrease the wire feed speed 405 below the first wire feed speed (WFS₁). In response to controlling the wire feeder 104 to increase the wire feed speed 405 to the second wire feed speed (WFS₂), the control circuitry 112 may also adjust the lower threshold wire feed speed to the second wire feed speed (WFS₂). Accordingly, in some examples (e.g., the examples depicted in FIGS. 4A and 4B), the control circuitry 112 may increase the wire feed speed 405 based on the filtered current 400 (e.g., when the filtered current 400 is less than the lower threshold current (I_{L})) but not decrease the wire feed speed 405 based on the filtered current 400 (e.g., when the filtered current 400 is greater than the lower threshold current (I_{L}), greater than an upper threshold current, and/or greater than one or more other current levels). An example of such one-way wire feed speed adjustment can be seen in a third time period 430 between the second time (T₂) and a third time (T₃), as, in response to the second filtered current (I_{F2}) of the second time period 420 being greater than the lower threshold current (I_{L}), the control circuitry 112 does not adjust the wire feed speed 405 and, instead, controls the wire feeder 104 to continue to advance the electrode 142 at the second wire feed speed (WFS₂).

As can be seen in FIG. 4A, during the third time period 430, the control circuitry 112 monitors a current sensor signal generated by the current sensor 164 to determine a third filtered current level (I_{F3}) of the filtered current 400 (e.g., an average output current of the power conversion circuitry 110 during some or all of the third time period 430). The control circuitry 112 compares the third filtered current level (I_{F3}) to the lower threshold current (I_{L}) and determines that the third filtered current level (I_{F3}) is less than the lower threshold current (I_{L}), which may indicate that a contact tip to work distance of the system 100 is insufficiently small and/or that a weld produced by the system 100 is insufficiently penetrating the workpiece 146. In response to determining that the second filtered current level (I_{F3}) is less than the lower threshold current (I_{L}), the control circuitry 112 determines that the wire feed speed 405 of the wire feeder 104 should be increased.

As can be seen in FIG. 4B, during the third time period 430, the control circuitry 112 is continuing to control the wire feeder 104 to advance the electrode 142 at the second wire feed speed (WFS₂). In response to determining that the third filtered current level (I_{F3}) is less than the lower threshold current (I_{L}), the control circuitry 112 determines a third wire feed speed (WFS₃) (e.g., a second increased wire feed speed) that is greater than the second wire feed speed (WFS₂). Accordingly, after the third time (T₃), the control circuitry 112 controls the wire feeder 104 such that the wire feed speed 405 increases from the second wire feed speed (WFS₂) to the third wire feed speed (WFS₃) during a second ramping up period 435 from the third time (T₃) until a second ramping time (T_{R2}) at a second ramping up rate 407 (e.g., a rate of change of the wire feed speed 405 from the second wire feed speed (WFS₂) to the third wire feed speed (WFS₃)). By the second ramping time (T_{R2}), the control circuitry 112 has begun controlling the wire feeder 104 to advance the electrode 142 at the third wire feed speed (WFS₃).

The third wire feed speed (WFS₃) and/or the second ramping up rate 407 are calculated, selected, and/or otherwise determined (e.g., by the control circuitry 112) to bring the filtered current 400 closer to, to equal to, and/or above the lower threshold current (I_{L}). Accordingly, as can be seen in FIG. 4A, the current 400 increases above the lower threshold current (I_{L}) during the second ramping up period 435. During a fourth time period 440 between the second ramping time (R₂) and a fourth time (T₄), the control circuitry 112 monitors a current sensor signal generated by the current sensor 164 to determine a fourth filtered current level (I_{F4}) of the filtered current 400 (e.g., an average output current of the power conversion circuitry 110 during some or all of the fourth time period 440). The control circuitry 112 compares the fourth filtered current level (I_{F4}) to the lower threshold current (I_{L}) and determines that the fourth filtered current level (I_{F4}) is greater than the lower threshold current (I_{L}), which may indicate that a contact tip to work distance of the system 100 is sufficiently small and/or that a weld produced by the system 100 is sufficiently penetrating the workpiece 146. In response to determining that the fourth filtered current level (I_{F4}) is greater than the lower threshold current (I_{L}), the control circuitry 112 determines that wire feed speed 405 of the wire feeder 104 should not be increased.

In some examples, the control circuitry 112 may, in response to one or more instances of the control circuitry 112 determining that the filtered current 400 is below the lower threshold current (I_{L}), increase the wire feed speed 405 only one time and/or any plurality of times. In some examples, an increase in wire feed speed may not cause the filtered current 400 to raise to or above the lower threshold current (I_{L}). In some such examples, the control circuitry 112 may repeatedly increase the wire feed speed 405 one or any plurality of times, e.g., until the control circuitry 112 determines that the filtered current 400 is greater than or equal to the lower threshold current (I_{L}).

In some examples, the control circuitry 112 may, based on a filtered current, decrease wire feed speed to one or more wire feed speeds greater than or equal to a predetermined lower threshold wire feed speed. In some examples, a predetermined lower threshold wire feed speed is an initial wire feed speed (e.g., the first wire feed speed (WFS₁). In some such examples, the control circuitry 112 may decrease the wire feed speed 405 (e.g., to a wire feed speed greater than or equal to the first wire feed speed (WFS₁)) based on the filtered current 400 when the wire feed speed 405 is greater than the first wire feed speed (WFS₁) (e.g., after increasing the wire feed speed 405 to the second wire feed (WFS₂)), but the control circuitry 112 may not decrease the wire feed speed 405 based on the filtered current 400 when the wire feed speed 405 is equal to the first wire feed speed (WFS₁). However, in some examples, the control circuitry 112 may reduce a wire feed speed (e.g., the wire feed speed 405) to a wire feed speed greater than or equal to a predetermined lower threshold wire feed speed that is less than an initial wire feed speed (e.g., the first wire feed speed (WFS₁).

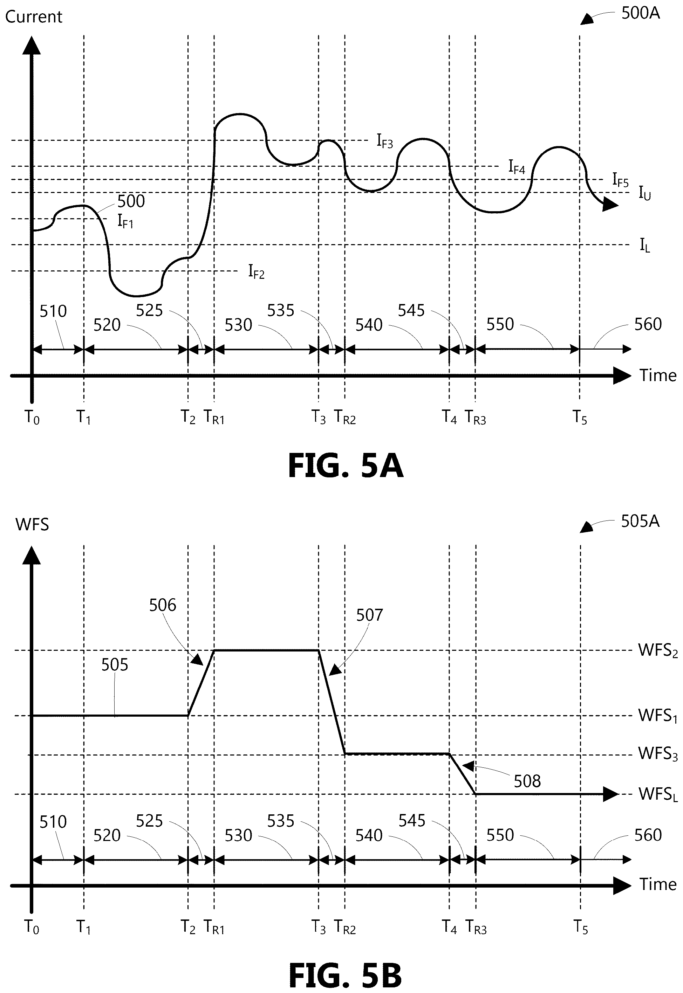

For example, and referring now to FIGS. 5A and 5B, and with reference to FIGS. 1 and 3A-3D, FIGS. 5A and 5B depict examples of a one-way wire feed speed adjustment process. Like the examples of FIGS. 4A and 4B, the examples of the one-way wire feed speed adjustment process depicted in FIGS. 5A and 5B increase wire feed speed based on a filtered current and a lower threshold current. However, unlike the examples of FIGS. 4A and 4B, the examples of the one-way wire feed speed adjustment process depicted in FIGS. 5A and 5B decrease wire feed speed based on a filtered current, an upper threshold current, and a predetermined lower threshold wire feed speed.

FIG. 5A depicts a graph (x-axis: time; y-axis: current) of an example of a waveform 500A of a filtered current 500 of welding power output by the power conversion circuitry 110 during a welding operation from an initial time (T₀) past a fifth time (T₅). FIG. 5B depicts a graph (x-axis: time; y-axis: wire feed speed ("WFS")) of an example of a waveform 505A of a wire feed speed 505 of the wire feeder 104 during a welding operation the initial time (T₀) (e.g., the same time as the initial time (T₀) of FIG. 5A) and the fifth time (T₅) (e.g., the same time as the fifth time (T₅) of FIG. 5A). The filtered current 500 may be a measured current (e.g., measured by the current sensor 164), a compensated current (e.g., calculated by the control circuitry 112 modifying one or more measured currents measured by the current sensor 164), an average output current calculated by, e.g., averaging and/or otherwise modifying one or more measured currents and/or one or more compensated currents measured and/or compensated during at least one or more portions (e.g., one or more voltage-controlled portions) of one or more waveforms (e.g., either or both of the waveforms 200A, 250A), ), one or more pulse cycles (e.g., any, some, or all of the pulse cycles 201, 202, 251, 252), one or more phases (e.g., any, some, or all of the phases 205, 210, 215, 225, 260, 265, 270, 275), one or more ramping up periods (e.g., the ramping up period 211), one or more ramping down periods (e.g., the ramping down period 217), and/or one or more other periods of time. The wire feed speed 405 may be a target wire feed speed (e.g., commanded by the control circuitry 112), a measured wire feed speed (e.g., measured by the wire feed speed sensor 163), etc. that is measured, commanded, etc. during the one or more portions of the waveform 500A depicted in FIG. 5A.

In the examples of FIGS. 5A and 5B, the control circuitry 112 controls the wire feed speed 505 of the wire feeder 104 according to a one-way wire feed speed adjustment process based on comparing the filtered current 500 to a lower threshold current (I_{L}) and an upper threshold current (I_{U}). For example, during a first time period 510 between the initial time (T₀) and a first time (T₁), the control circuitry 112 determines a first filtered current level (I_{F1}) of the filtered current 500 that is greater than the lower threshold current (I_{L}). During the first time period 510, the control circuitry 112 is controlling the wire feeder 104 to advance the electrode 142 at the first wire feed speed (WFS₁). In response to determining that the first filtered current level (I_{F1}) is greater than the lower threshold current (I_{L}), the control circuitry 112 maintains the wire feed speed 505 at the first wire feed speed (WFS₁).

Like the examples of FIGS. 4A and 4B, in the examples of FIGS. 5A and 5B, the control circuitry 112 may increase the wire feed speed 505 in response to determining that the filtered current 500 is less than the lower threshold current (I_{L}). For example, during a second time period 520 between the first time (T₁) and a second time (T₂), the control circuitry 112 determines a second filtered current level (I_{F2}) of the filtered current 500 that is less than the lower threshold current (I_{L}). In response to determining that the second filtered current level (I_{F2}) is less than the lower threshold current (I_{L}), the control circuitry 112 determines a second wire feed speed (WFS₂) (e.g., an increased wire feed speed) that is greater than the first wire feed speed (WFS₁). During a ramping up period 525 between the second time (T₂) and a first ramping time (T_{R1}), the control circuitry 112 controls the wire feeder 104 such that the wire feed speed 505 increases from the first wire feed speed (WFS₁) to the second wire feed speed (WFS₂) at a ramping up rate 506. By the first ramping time (T_{R1}), the control circuitry 112 has begun controlling the wire feeder 104 to advance the electrode 142 at the second wire feed speed (WFS₂). The second wire feed speed (WFS₂) and/or the ramping up rate 506 are calculated, selected, and/or otherwise determined (e.g., by the control circuitry 112) to bring the filtered current 500 closer to, to equal to, and/or above the lower threshold current (I_{L}). Accordingly, as can be seen in FIG. 5A, the filtered current 500 increases above the lower threshold current (I_{L}) during the ramping up period 525.

However, unlike the examples of FIGS. 4A and 4B, in the examples of FIGS. 5A and 5B, the control circuitry 112 may decrease the wire feed speed 505 in response to determining that the filtered current 500 is greater than the upper threshold current (I_{U}). For example, during a second third period 530 between the first ramping time (T_{R1}) and a third time (T₃), the control circuitry 112 determines a third filtered current level (I_{F3}) of the filtered current 500 that is greater than the upper threshold current (I_{U}). In response to determining that the third filtered current level (I_{F3}) is greater than the upper threshold current (I_{U}), the control circuitry 112 determines a third wire feed speed (WFS₃) (e.g., a first decreased wire feed speed) that is less than the second wire feed speed (WFS₂). During a first ramping down period 535 between the third time (T₃) and a second ramping time (T_{R2}), the control circuitry 112 controls the wire feeder 104 such that the wire feed speed 505 decreases from the second wire feed speed (WFS₂) to the third wire feed speed (WFS₃) at a first ramping down rate 507. By the second ramping time (T_{R2}), the control circuitry 112 has begun controlling the wire feeder 104 to advance the electrode 142 at the third wire feed speed (WFS₃). The third wire feed speed (WFS₃) and/or the first ramping down rate 507 are calculated, selected, and/or otherwise determined (e.g., by the control circuitry 112) to bring the filtered current 500 closer to, to equal to, and/or below the upper threshold current (I_{U}). Accordingly, as can be seen in FIG. 5A, the filtered current 500 decreases toward the upper threshold current (I_{U}) during the first ramping down period 535.

However, in the examples of FIGS. 5A and 5B, the decrease in the wire feed speed 505 from the second wire feed speed (WFS₂) to the third wire feed speed (WFS₃) does not cause the filtered current 500 to reach an average current level below the upper threshold current (I_{U}). Rather, during a fourth time period 540 between the second ramping time (T_{R2}) and a fourth time (T₄), the control circuitry 112 determines a fourth filtered current level (I_{F4}) that, like the third filtered current level (I_{F3}), is greater than the upper threshold current (I_{U}). In response to determining that the fourth filtered current level (I_{F4}) is greater than the upper threshold current (I_{U}), the control circuitry 112 determines a fourth wire feed speed (e.g., a second decreased wire feed speed) that is less than the third wire feed speed (WFS₃) and equal to a lower threshold wire feed speed (WFS_{L}). During a second ramping down period 545 between the fourth time (T₄) and a third ramping time (T_{R3}), the control circuitry 112 controls the wire feeder 104 such that the wire feed speed 505 decreases from the third wire feed speed (WFS₃) to the lower threshold wire feed speed (WFS_{L}) at a second ramping down rate 508. By the third ramping time (T_{R3}), the control circuitry 112 has begun controlling the wire feeder 104 to advance the electrode 142 at the lower threshold wire feed speed (WFS_{L}). The fourth wire feed speed (e.g., a wire feed speed equal to the lower threshold wire feed speed (WFS_{L}) and/or the second ramping down rate 508 are calculated, selected, and/or otherwise determined (e.g., by the control circuitry 112) to bring the filtered current 500 closer to, to equal to, and/or below the upper threshold current (I_{U}). Accordingly, as can be seen in FIG. 5A, the filtered current 500 decreases toward the upper threshold current (I_{U}) during the second ramping down period 545.

However, in some examples, if the control circuitry 112 would calculate, select, and/or otherwise determine a decreased wire feed speed that is less than the lower threshold wire feed speed (WFS_{L}), the control circuitry 112, instead, determines the decreased wire feed speed to be equal to the lower threshold wire feed speed (WFS_{L}). Accordingly, in some examples of one-way wire feed speed adjustment, the control circuitry 112 may increase a wire feed speed (e.g., the wire feed speed 505) to be greater than an initial wire feed speed (e.g., the first wire feed speed (WFS₁)) and/or greater than a lower threshold wire feed speed (e.g., the lower threshold wire feed speed (WFS_{L})) based on the filtered current 500, the control circuitry 112 may not decrease the wire feed speed to be less than the lower threshold wire feed speed and/or less than the initial wire feed speed (e.g., in examples wherein the initial wire feed speed is equal to the lower threshold wire feed speed) based on the filtered current 500. Accordingly, in some examples of one-way wire feed speed adjustment (e.g., the examples of FIGS. 4A and 4B), the control circuitry 112 increases wire feed speed based on a filtered current and a lower threshold current, but the control circuitry 112 does not decrease wire feed speed based on the filtered current. However, in some other disclosed examples of one-way wire feed speed adjustment (e.g., the examples of FIGS. 5A and 5B), the control circuitry 112 increases wire feed speed based on a filtered current and a lower threshold current, and wire feed speed may be decreased based on the filtered current, an upper threshold current, and a lower threshold wire feed speed (e.g., an initial wire feed speed of a welding operation, an initial wire feed speed setpoint of a welding operation, a wire feed speed calculated, selected, and/or otherwise determined by control circuitry, etc.) only to decreased wire feed speeds that are greater than or equal to the lower threshold wire feed speed.

In the examples of FIGS. 5A and 5B, despite twice decreasing the wire feed speed 505, the decrease in the wire feed speed 505 to the lower threshold wire feed speed (WFS_{L}) does not cause the filtered current 500 to reach an average current level below the upper threshold current (I_{U}). Rather, during a fifth time period 550 between the third ramping time (T_{R3}) and a fifth time (T₅), the control circuitry 112 determines a fifth filtered current level (I_{F5}) that, like the filtered current levels (I_{F3}, I_{F4}), is greater than the upper threshold current (I_{U}). However, in response to determining that the fourth filtered current level (I_{F4}) is greater than the upper threshold current (I_{U}) and that the wire feed speed 505 is equal to the lower threshold wire feed speed (WFS_{L}) at the fifth time (T₅), the control circuitry 112, during a sixth time period 560 beginning at the fifth time (T₅), controls the wire feeder 104 to continue to advance the electrode 142 at the lower threshold wire feed speed (WFS_{L}).

In the examples of FIGS. 5A and 5B, because the wire feed speed 505 is equal to the lower threshold wire feed speed (WFS_{L}) at the fifth time (T₅), the control circuitry 112 does not decrease the wire feed speed 505 to a wire feed speed that is less than the lower threshold wire feed speed (WFS_{L}), even though the control circuitry 112 determined that the fifth filtered current level (I_{F5}) is greater than the upper threshold current (I_{U}). Rather, in some examples, regardless of whether or not a filtered current (e.g., the fourth filtered current level (I_{F4})) is above an upper threshold current (e.g., the upper threshold current (I_{U})), the control circuitry 112 will not control the wire feeder 104 to advance the electrode 142 at a wire feed speed that is less than a lower threshold wire feed speed (e.g., lower threshold wire feed speed (WFS_{L})). Accordingly, in some examples, if a lower threshold wire feed speed is equal to an initial wire feed speed (e.g., the first wire feed speed (WFS₁)), the control circuitry 112 does not, based on a filtered current, decrease the wire feed speed to a wire feed speed less than the initial wire feed speed.

A lower threshold wire feed speed may be, e.g., a predetermined wire feed speed, a wire feed speed setpoint of a welding operation (e.g., a wire feed speed setpoint selected via one or more inputs received by the user interface 114, a wire feed speed setpoint prior to adjustment under a one-way wire feed speed adjustment process, etc.), an initial wire feed speed of a welding operation (e.g., an initial wire feed speed used at the beginning of a welding operation, an initial wire feed speed setpoint of a welding operation, an initial wire feed speed prior to adjustment under a one-way wire feed speed adjustment process, etc.), a calculated wire feed speed (e.g., calculated by the control circuitry 112), a selected wire feed speed selected from a list comprising a plurality of predetermined lower threshold wire feed speeds (e.g., each of the predetermined lower threshold wire feed speeds being associated with one or more target welding parameters, one or more measured welding parameters, and/or one or more other characteristics of the system 100, the workpiece 146, a welding operation, etc.), and/or one or more other wire feed speeds. In some examples, the control circuitry calculates, selects, and/or otherwise determines a predetermined lower threshold wire feed speed based on, e.g., one or more initial wire feed speed setpoints of a welding operation, one or more initial wire feed speeds of a welding operation (e.g., the first wire feed speed (WFS₁)), a lower threshold current (e.g., the lower threshold current (I_{L})), a filtered current, a measured current, an upper threshold current, one or more measured welding parameters, one or more target welding parameters, and/or one or more other characteristics of a welding operation, the system 100, the workpiece 146, etc.) and/or by one or more other methods.

Referring now to FIGS. 4A-5B, in some examples, the control circuitry 112 calculates any, some, or all of the lower threshold current (I_{L}) of FIG. 4A, the lower threshold current (I_{L}) of FIG. 5A, and/or the upper threshold current (I_{U}) of FIG. 5A based on a target heat input of the welding power (e.g., a level, threshold, and/or range of heat input by a welding arc into the workpiece 146), a wire feed speed setpoint (e.g., one or more wire feed speeds determined and/or set based on one or more inputs received by the user interface 114, one or more wire feed speeds associated with a welding operation, one or more wire feed speeds associated with one or more measured and/or target welding parameters, one or more measured wire feed speeds, one or more target wire feed speeds, one or more initial wire feed speeds and/or initial wire feed speed setpoints of a welding operation, one or more target wire feed speeds, the first wire feed speed (WFS₁) of FIG. 4B, the first wire feed speed (WFS₁) of FIG. 5B, and/or one or more other wire feed speeds), one or more target welding parameters, one or more measured welding parameters, and/or one or more other aspects and/or characteristics of a welding operation, of the system 100, of the workpiece 146, of a weld circuit, of a welding mode, etc. In some examples, the control circuitry 112 calculates the lower threshold current (I_{L}) of FIG. 4A, the lower threshold current (I_{L}) of FIG. 5A, and/or the upper threshold current (I_{U}) of FIG. 5A based on a predetermined target heat input (e.g., a setpoint, a target heat input associated with a welding operation, an input received by the user interface 114, etc.) and/or a calculated target heat input (e.g., calculated based on one or more target welding parameters, one or more measured welding parameters, and/or one or more other aspects and/or characteristics of a welding operation, the system 100, the workpiece 146, etc.).

In some examples, the control circuitry 112 determines one or more increased wire feed speeds (e.g., either or both of the wire feed speeds (WFS₂, WFS₃) of FIG. 4B and/or the second wire feed speed (WFS₃) of FIG. 5B) and/or one or more ramping up rates (e.g., any, some, or all of the ramping up rates 406, 407, 506) by calculating the one or more increased wire feed speeds and/or the one or more ramping up rates based on, e.g., one or more differences between one or more filtered currents and a lower threshold current (e.g., a difference, measured in amps, between the first filtered current level (I_{F1}) and the lower threshold current (I_{L})) of FIG. 4A, one or more other differences between one or more other filtered currents and/or one or more other lower threshold currents, one or more conversion factors (e.g., one or more multipliers and/or formulae used to convert a number of amps to ipm, mps, etc.), a magnitude of a previous current level (e.g., a number of amps of the first filtered current level (I_{F1}) of FIG. 4A and/or one or more other filtered currents, a percentage of a previous current level (e.g., 80%, 120%, etc. of a number of amps of the first filtered current level (I_{F1}) of FIG. 4A and/or one or more other filtered currents), a magnitude of a previous wire feed speed (e.g., a number of ipm, mps, etc. of either or both of the wire feed speeds (WFS₁, WFS₂) of FIG. 4B and/or the first wire feed speed (WFS₁) of FIG. 5B)), a percentage of a previous wire feed speed level (e.g., a percentage of a number of ipm, mps, etc. of either or both of the wire feed speeds (WFS₁, WFS₂) of FIG. 4B and/or the first wire feed speed (WFS₁) of FIG. 5B), one or more measured welding parameters (e.g., a measured voltage, a measured resistance, a measured inductance, a measured power, and/or a measured wire feed speed), one or more target welding parameters (e.g., a target pulse parameter, a target voltage, a target resistance, a target inductance, a target power, and/or a target wire feed speed), and/or one or more other aspects and/or characteristics of a welding operation, the system 100, the workpiece 146, etc. In some additional and/or alternative examples, the control circuitry 112 determines one or more increased wire feed speeds (e.g., either or both of the wire feed speeds (WFS₂, WFS₃) of FIG. 4B and/or the second wire feed speed (WFS₂) of FIG. 5B) and/or one or more ramping up rates (e.g., any, some, or all of the ramping up rates 406, 407, 506) by increasing an initial wire feed speed (e.g., either or both of the wire feed speeds (WFS₁, WFS₂) of FIG. 4B and/or the first wire feed speed (WFS₁) of FIG. 5B) by a predetermined amount (e.g., a predetermined amount associated with one or more filtered currents being less than an upper threshold current) and/or at a predetermined ramping up rate, by selecting the one or more predetermined increased wire feed speeds from a plurality of predetermined wire feed speeds (e.g., a lookup table that associates one or more predetermined wire feed speeds of the plurality of wire feed speeds with one or more respective filtered currents, one or more respective differences between one or filtered currents and one or more lower threshold currents, one or more measured welding parameters, one or more target welding parameters, and/or one or more other aspects and/or characteristics of a welding operation, the system 100, the workpiece 146, etc.), by selecting the one or more ramping up rates from a plurality of predetermined ramping up rates (e.g., a lookup table that associates one or more predetermined ramping up rates of the plurality of ramping up rates with one or more respective filtered currents, one or more respective differences between one or filtered currents and one or more lower threshold currents, one or more measured welding parameters, one or more target welding parameters, and/or one or more other characteristics of a welding operation, the system 100, the workpiece 146, etc.) and/or by one or more other methods.

In some examples, the control circuitry 112 determines one or more decreased wire feed speeds (e.g., the third wire feed speed (WFS₃) of FIG. 5B) and/or one or more ramping down rates (e.g., either or both of the ramping down rates 507, 508) by calculating the one or more decreased wire feed speeds and/or the one or more ramping down rates based on, e.g., one or more differences between one or more filtered currents and an upper threshold current (e.g., a difference, measured in amps, between any, some, or all of the filtered current levels (I_{F2}, I_{F3}, I_{F4}) and the upper threshold current (I_{U})) of FIG. 5A, one or more other differences between one or more other filtered currents and/or one or more other upper threshold currents, one or more conversion factors (e.g., one or more multipliers and/or formulae used to convert a number of amps to ipm, mps, etc.), a magnitude of a previous current level (e.g., a number of amps of either or both of the filtered current levels (I_{F2}, I_{F3}) of FIG. 5A and/or one or more other filtered currents, a percentage of a previous current level (e.g., 80%, 120%, etc. of a number of amps of either or both of the filtered current levels (I_{F2}, I_{F3}) of FIG. 5A and/or one or more other filtered currents), a magnitude of a previous wire feed speed (e.g., a number of ipm, mps, etc. of either or both of the wire feed speeds (WFS₂, WFS₃) of FIG. 5B)), a percentage of a previous wire feed speed level (e.g., a percentage of a number of ipm, mps, etc. of either or both of the wire feed speeds (WFS₂, WFS₃) of FIG. 5B), one or more measured welding parameters (e.g., a measured voltage, a measured resistance, a measured inductance, a measured power, and/or a measured wire feed speed), one or more target welding parameters (e.g., a target pulse parameter, a target voltage, a target resistance, a target inductance, a target power, and/or a target wire feed speed), and/or one or more other aspects and/or characteristics of a welding operation, the system 100, the workpiece 146, etc. In some additional and/or alternative examples, the control circuitry 112 determines one or more decreased wire feed speeds (e.g., the third wire feed speed (WFS₃) of FIG. 5B) and/or one or more ramping down rates (e.g., either or both of the ramping down rates 507, 508) by decreasing an initial wire feed speed (e.g., any, some, or all of the wire feed speeds (WFS₁, WFS₂, WFS₃) of FIG. 5B) by a predetermined amount (e.g., a predetermined amount associated with one or more filtered currents being less than an upper threshold current) and/or at a predetermined ramping downrate, by adding a predetermined wire feed speed increase (e.g., a predetermined amount of ipm, mps, etc. by which the control circuitry 112 increases wire feed speed in response to determining that one or more filtered currents are less than the lower threshold current) to a wire feed speed, by selecting the one or more decreased wire feed speeds from a plurality of predetermined wire feed speeds (e.g., a lookup table that associates one or more predetermined wire feed speeds of the plurality of wire feed speeds with one or more respective filtered currents, one or more respective differences between one or filtered currents and one or more upper threshold currents, one or more measured welding parameters, one or more target welding parameters, and/or one or more other aspects and/or characteristics of a welding operation, the system 100, the workpiece 146, etc.), by selecting the one or more ramping down rates from a plurality of predetermined ramping up rates (e.g., a lookup table that associates one or more predetermined ramping down rates of the plurality of ramping down rates with one or more respective filtered currents, one or more respective differences between one or filtered currents and one or more upper threshold currents, one or more measured welding parameters, one or more target welding parameters, and/or one or more other characteristics of a welding operation, the system 100, the workpiece 146, etc.) and/or by one or more other methods.

In some examples, a ramping up rate (e.g., any, some, or all of the ramping up rates 406, 407, 506) and/or a ramping down rate (e.g., either or both of the ramping down rates 507, 508) from one wire feed speed to another wire feed speed may be substantially constant (e.g., as in the example of the first ramping up rate 406 depicted in FIG. 4B). In some examples, one or more ramping periods (e.g., any, some, or all of the ramping periods 415, 435, 525, 535, 545) may include one or more substantially constant ramping rates, one or more variable ramping rates, one or more stepped ramping rates, one or more predetermined ramping rates, one or more determined ramping rates (e.g., calculated based on one or more magnitudes of one or more wire feed speeds and/or on one or more differences between two or more wire feed speeds) and/or one or more other ramping rates.

The control circuitry 112 may determine one or more filtered currents (e.g., either or both of the filtered currents 400, 500, any, some, or all of the filtered current levels (I_{F1}, I_{F2}, I_{F3}, I_{F4}) of FIG. 4A, any, some, or all of the filtered current levels (I_{F1}, I_{F2}, I_{F3}, I_{F4}, I_{F5}) of FIG. 5A, and/or one or more other filtered currents) by and/or based on monitoring a current sensor signal (e.g., generated by the current sensor 164) during an entirety and/or during one or more portions of one or more waveforms (e.g., either or both of the waveforms 200A, 250A), one or more pulse cycles (e.g., any, some, or all of the pulse cycles 201, 202, 251, 252), one or more phases (e.g., any, some, or all of the phases 205, 210, 215, 225, 260, 265, 270, 275, one or more peak phases, one or more background phases, one or more other phases, etc.), one or more ramping up periods (e.g., the ramping up period 211), one or more ramping down periods (e.g., the ramping down period 217), and/or one or more other periods of time. In some examples, the control circuitry 112 determines one or more filtered currents (e.g., either or both of the filtered currents 400, 500, any, some, or all of the filtered current levels (I_{F1}, I_{F2}, I_{F3}, I_{F4}) of FIG. 4A, any, some, or all of the filtered current levels (I_{F1}, I_{F2}, I_{F3}, I_{F4}, I_{F5}) of FIG. 5A, and/or one or more other filtered currents) by and/or based on monitoring a current sensor signal (e.g., generated by the current sensor 164) during one or more voltage-controlled mode portions of one or more waveforms (e.g., either or both of the waveforms 200A, 250A), one or more pulse cycles (e.g., any, some, or all of the pulse cycles 201, 202, 251, 252), one or more phases (e.g., any, some, or all of the phases 205, 210, 215, 225, 260, 265, 270, 275, one or more other peak phases, one or more other background phases, one or more other phases, etc.), one or more ramping up periods (e.g., the ramping up period 211), one or more ramping down periods (e.g., the ramping down period 217), and/or one or more other periods of time. For example, the control circuitry 112 may determine any, some, or all of the filtered current levels (I_{F1}, I_{F2}, I_{F3}, I_{F4}) of FIG. 4A, any, some, or all of the filtered current levels (I_{F1}, I_{F2}, I_{F3}, I_{F4}, I_{F5}) of FIG. 5A, either or both of the filtered currents 400, 500, and/or one or more other filtered currents by monitoring a current sensor signal (e.g., generated by the current sensor 164) during a time period between the first ramping time (T_{R1}) and the second time (T_{2A}) of FIG. 2A (e.g., a voltage-controlled mode portion of the first peak phase 210) and/or during a time period between the second ramping time (T_{R2}) and the third time (T_{3A}) of FIG. 2A (e.g., a voltage-controlled mode portion of the first background phase 215). Accordingly, for the sake of clarity, one or more portions of any, some, or all of the waveforms 400A, 405A, 500A, 505A (e.g., one or more portions wherein the control circuitry 112 is not controlling the power conversion circuitry 110 in a voltage-controlled mode) may be omitted from the depictions of any, some, or all of FIGS. 4A-5B.

The waveforms 405A, 505A are depicted in FIGS. 4A-5B as including substantially constant values and substantially constant rates of change during some time intervals, but such depictions are for illustrative purposes only. In some examples, a current (e.g., a filtered current, a measured current, an average current, etc.) and/or wire feed speed (e.g., a measured wire feed speed, a target wire feed speed, etc.) may vary during one or more time intervals in one or more ways not depicted in and/or indicated by any, some, or all of FIGS. 4A-5B. For example, relative proportions of current levels, current rates of change (e.g. one or more current ramping up rates, one or more current ramping down rates, etc.), wire feed speed levels (e.g., target wire feed speeds, measured wire feed speeds, one or more wire feed speed ramping up rates, one or more wire feed speed ramping down rates, etc.), or durations (e.g., durations of any, some, or all of the time periods 410, 415, 420, 430, 435, 440, 510, 520, 525, 530, 535, 540, 545, 550, 560) depicted in FIGS. 4A-5B are purely illustrative and may, in various embodiments, vary from the relative proportions depicted in any, some, or all of FIGS. 4A-5B. Accordingly, one or more portions and/or all of any, some, or all of the waveforms 400A, 405A, 500A, 505A may vary in shape, magnitude, relative proportion, rate of change, etc. from the depictions of FIGS. 4A-5B. Furthermore, portions of a waveform (e.g., one or more values of either or both of the filtered currents 400, 500 and/or of either or both of the wire feed speeds 405, 505) may be omitted in any, some, or all of FIGS. 4A-5B, such as variances in either or both of the filtered currents 400, 500 and/or either or both of the wire feed speeds 405, 505 undergone during one or more phases (e.g., one or more peak phases, one or more background phases, one or more other phases, etc.) and/or one or more other portions of a welding operation (e.g., one or more portions wherein welding power is not output in a voltage-controlled mode).

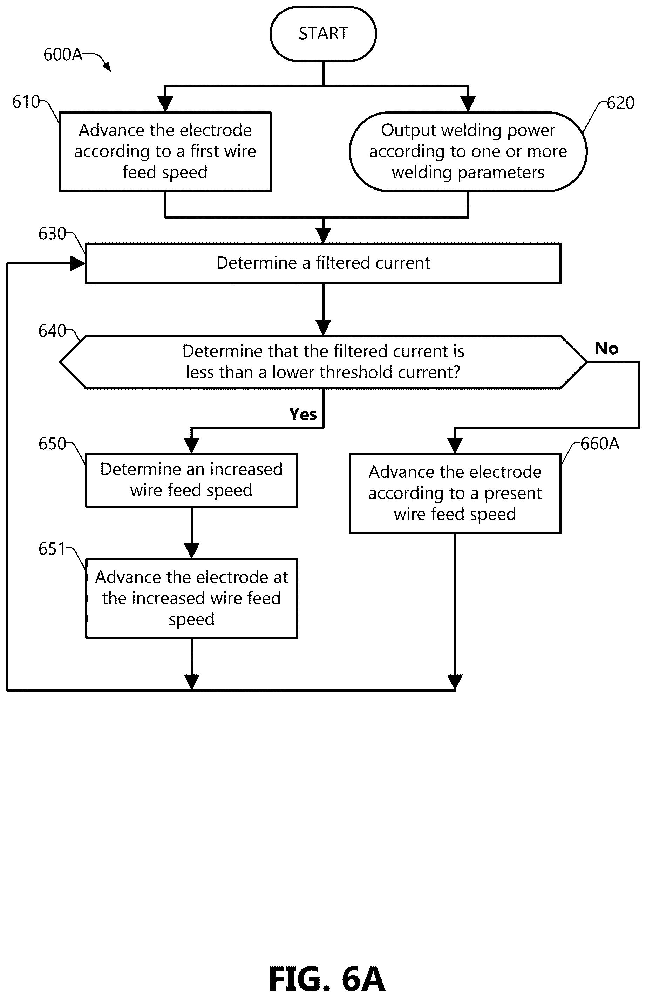

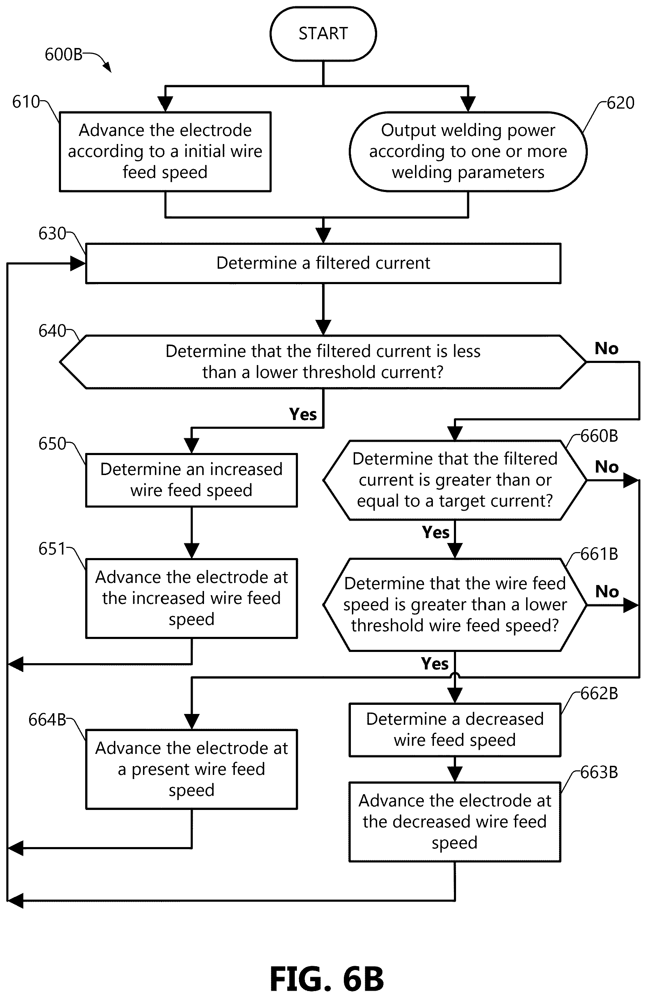

FIGS. 6A and 6B each depict flowcharts illustrating examples of a first process 600A and a second process 600B, respectively, of operating a welding system (e.g., the system 100). Either or both of the processes 600A, 600B may be implemented by control circuitry (e.g., the control circuitry 112) by executing machine-readable instructions, e.g., stored on a non-transitory machine-readable storage device (e.g., the storage device 123 and/or the memory device 124). In describing the processes 600A, 600B, reference will be made to the examples of FIGS. 1, 2A, 2B, and FIGS. 4A-5B. However, examples of the processes 600A, 600B may be used with other examples, such as alternative examples described elsewhere herein. In some examples, any, some, or all of the blocks of the processes 600A, 600B may be performed in alternative orders than those depicted in FIG. 6A and/or FIG. 6B, repeated any plurality of instances, and/or omitted.

Referring to FIGS. 6A and 6B, and with reference to FIGS. 1-2B and FIGS. 4A-5B, in a block 610 of the processes 600A, 600B, the control circuitry 112 controls the wire feeder 104 to advance the electrode 142 according to a first wire feed speed (e.g., any, some, or all of the wire feed speeds (WFS₁, WFS₂, WFS₃) of FIG. 4B and/or any, some, or all of the wire feed speeds (WFS₁, WFS₂, WFS₃, WFS_{L}) of FIG. 5B). In some examples, the first wire feed speed may be an initial wire feed speed (e.g., the first wire feed speed (WFS₁) of FIG. 4B and/or the first wire feed speed (WFS₁) of FIG. 5B), an initial wire feed speed setpoint (e.g., determined based on an input value received from the user interface 114), a wire feed speed of an ongoing welding operation (e.g., any, some, or all of the wire feed speeds (WFS₁, WFS₂, WFS₃) of FIG. 4B and/or any, some, or all of the wire feed speeds (WFS₁, WFS₂, WFS₃, WFS_{L}) of FIG. 5B), and/or one or more other wire feed speeds. In some examples, the control circuitry 112 determines one or more wire feed speeds based in part on a lower threshold wire feed speed, and, in some such examples, the first wire feed speed is greater than or equal to the lower threshold wire feed speed.

Referring still to FIGS. 6A and 6B, in a block 620 of the processes 600A, 600B, the control circuitry 112 controls the power conversion circuitry 110 to output welding power according to one or more welding parameters. In some examples, the control circuitry 112 controls the power conversion circuitry 110 to output welding power according to the one or more welding parameters at least by outputting the welding power according to one or more target welding parameters in a welding parameter-controlled mode during at least a portion of one or more phases and/or waveforms of the one or more welding parameters. In some examples, the control circuitry 112 controls the power conversion circuitry 110 to output welding power according to one or more pulse cycles (e.g., any, some, or all of the pulse cycles 201, 202, 251, 252) at least by outputting the welding power according to one or more target peak voltages (e.g., the peak voltage (V_{P}) of FIG. 2A and/or the peak voltage (V_{P}) of FIG. 2B) in a voltage controlled mode during at least a portion of a peak phase (e.g., any, some, or all of the peak phases 210, 220, 260, 270) of the one or more first pulse cycles. In some examples, the block 620 occurs simultaneously with the block 610.

Referring still to FIGS. 6A and 6B, in a block 630 of the processes 600A, 600B, the control circuitry 112 monitors a sensor signal (e.g., a current sensor signal generated by the current sensor 164) while the wire feeder 104 is advancing the electrode 142 according to the first wire feed speed (e.g., any, some, or all of the wire feed speeds (WFS₁, WFS₂, WFS₃) of FIG. 4B and/or any, some, or all of the wire feed speeds (WFS₁, WFS₂, WFS₃, WFS_{L}) of FIG. 5B) to determine one or more first filtered currents (e.g., any, some, or all of the filtered currents (I_{F1}, I_{F2}, I_{F3}, I_{F4}) of FIG. 4A and/or any, some, or all of the filtered currents (I_{F1}, I_{F2}, I_{F3}, I_{F4}, I_{F5}) of FIG. 5A). In some examples, the one or more first filtered currents may include and/or be calculated, selected, and/or otherwise determined based on one or more measured currents (e.g., measured by the current sensor 164), one or more compensated currents (e.g., calculated by the control circuitry 112 based on one or more measured currents), one or more average currents (e.g., calculated by the control circuitry 112 based on one or more measured currents measured during one or more time periods), and/or one or more other currents. In some examples, the control circuitry 112 determines the one or more first filtered currents by monitoring the sensor signal during one or more voltage-controlled mode portions of a waveform (e.g., a portion of the first peak phase 210 between the first ramping time (T_{R1}) and the second time (T_{2A}) of FIG. 2A, a portion of the first background phase 215 between the second ramping time (T_{R2}) and the third time (T_{3A}) of FIG. 2A, and/or one or more other portions of one or more phases and/or waveforms wherein the control circuitry 112 controls the power conversion circuitry 110 to output the welding power in a voltage-controlled mode, a power-controlled mode, an inductance-controlled mode, a resistance-controlled mode, and/or one or more other welding parameter-controlled modes).

Referring still to FIGS. 6A and 6B, in a block 640 of the processes 600A, 600B, the control circuitry 112 determines whether the one or more first filtered currents are less than a lower threshold current (e.g., the lower threshold current (I_{L}) of FIG. 4A, the lower threshold current (I_{L}) of FIG. 5A, a current less than or equal to 200 amps and/or greater than or equal to 140 amps, 170 amps, and/or one or more other lower threshold currents).

Referring still to FIGS. 6A and 6B, in a block 650 of the processes 600A, 600B, in response to determining that the one or more first filtered currents (e.g., either or both of the filtered currents (I_{F1}, I_{F3}) of FIG. 4A and/or the second current (I_{F2}) of FIG. 5A) are less than the lower threshold current (e.g., in the block 640), the control circuitry 112 determines a first increased wire feed speed (e.g., either or both of the wire feed speeds (WFS₂, WFS₃) of FIG. 4B and/or the second wire feed speed (WFS₂) of FIG. 5B) based on the one or more first filtered currents and the lower threshold current, wherein the first increased wire feed speed is greater than a present wire feed speed of the wire feeder 104. The present wire feed speed is a wire feed speed that the wire feeder 104 is advancing the electrode 142 at a time that any, some, or all of the blocks 630, 640, 650 occurs, such as the first wire feed speed of the block 610, an initial wire feed speed, an initial wire feed speed setpoint, an increased wire feed speed determined in a previous iteration of the block 650, a decreased wire feed speed, either or both of the wire feed speeds (WFS₁, WFS₂) of FIG. 4B, and/or the first wire feed speed (WFS₁) of FIG. 5B.

In some examples, the first increased wire feed speed is determined to increase the one or more first filtered currents to a second filtered current that is closer to, equal to, or greater than the lower threshold current. In some examples, the control circuitry 112 determines the first increased wire feed speed based on one or more magnitudes of one or more differences between the one or more first filtered currents and the lower threshold current. In some examples, the control circuitry 112 calculates the first increased wire feed speed based on a magnitude of the present wire feed speed. In some examples, the first increased wire feed speed is determined by adding a predetermined wire feed speed increase to the present wire feed speed (e.g., a predetermined amount of ipm, mps, etc. by which the control circuitry 112 increases wire feed speed in response to determining that one or more filtered currents are less than the lower threshold current). In some examples, the control circuitry 112 selects the first increased wire feed from a plurality of predetermined wire feed speeds. In some examples, the control circuitry 112 determines a first ramping up rate (e.g., any, some, or all of the ramping up rates 406, 407, 506) of a wire feed speed of the wire feeder 104 between the present wire feed speed and the first increased wire feed speed.

Referring still to FIGS. 6A and 6B, in a block 651 of the processes 600A, 600B, in response to determining the first increased wire feed speed, the control circuitry 112 controls the wire feeder 104 to advance the electrode 142 at the first increased wire feed speed. In some examples, the control circuitry 112 controls the wire feeder 104 to increase wire feed speed to the first increased wire feed speed according to the first ramping up rate of the block 650.

In some examples, after controlling the wire feeder 104 to advance the electrode 142 at the first increased wire feed speed, the control circuitry 112 reiterates the block 630, e.g., by determining one or more second filtered currents (e.g., either or both of the filtered currents (I_{F2}, I_{F4}) of FIG. 4A and/or the second filtered current (I_{F2}) of FIG. 5A) while the wire feeder 104 is advancing the electrode 142 according to the first increased wire feed speed. In some such examples, in response determining that the one or more second filtered currents are less than the lower threshold current (e.g., in a reiteration of the block 640), the control circuitry 112 reiterates the block 650 and determines a second increased wire feed speed (e.g., the third wire feed speed (WFS₃) of FIG. 4B) based on the one or more second filtered currents and the lower threshold current, wherein the second increased wire feed speed is greater than the first increased wire feed speed. In some such examples, in response to determining the second increased wire feed speed, the control circuitry 112 reiterates the block 651 and controls the wire feeder 104 to advance the electrode 142 at the second increased wire feed speed. Accordingly, in some examples, the control circuitry 112 reiterates any, some, or all of the blocks 630, 640, 650, 651, e.g., to iteratively increase wire feed speed based on one or more filtered currents and the lower threshold current. In some examples, after the block 651, the processes 600A, 600B may end, e.g., after increasing wire feed speed a predetermined number of times (e.g., once or any plurality of times), due to a welding operation ending, etc.

In the examples of the first process 600A depicted in FIG. 6A, in a block 660A, in response to determining that the one or more first filtered currents (e.g., either or both of the filtered currents (I_{F2}, I_{F4}) of FIG. 4A) is greater than or equal to the lower threshold current, the control circuitry 112 controls the wire feeder 104 to advance the electrode 142 at a present wire feed speed of the wire feeder 104, e.g., to maintain the present wire feed speed of the wire feeder 104. The present wire feed speed is a wire feed speed that the wire feeder 104 is advancing the electrode 142 at a time that any, some, or all of the blocks 630, 640, 660A occurs, such as the first wire feed speed of the block 610, an initial wire feed speed, an initial wire feed speed setpoint, an increased wire feed speed determined in a previous iteration of the block 650, a decreased wire feed speed, either or both of the wire feed speeds (WFS₂, WFS₃) of FIG. 4B, and/or the first wire feed speed (WFS₁) of FIG. 5B).

In some examples, after controlling the wire feeder 104 to continue advancing the electrode 142 at the present wire feed speed, the control circuitry 112 reiterates any, some, or all of the blocks 630, 640, 650, 651, 660A, e.g., to iteratively increase and/or maintain wire feed speed based on one or more filtered currents and the lower threshold current. In some examples, after the block 660A, the first process 600A may end, e.g., due to a welding operation ending.

In the examples of the second process 600B depicted in FIG. 6B, rather than include the block 660A, the second process 600B includes blocks 660B, 661B, 662B, 663B, and 664B. In the block 660B, in response to determining that the one or more first filtered currents (e.g., any, some, or all of the filtered currents (I_{F1}, I_{F3}, I_{F4}, I_{F5}) of FIG. 5A) are greater than or equal to the lower threshold current, the control circuitry 112 determines whether the one or more first filtered currents are greater than or equal to an upper threshold current (e.g., the upper threshold current (I_{U}) of FIG. 5A and/or any current greater than the lower threshold current).

In the block 661B, in response to determining that the one or more first filtered currents (e.g., any, some, or all of the filtered currents (I_{F1}, I_{F3}, I_{F4}, I_{F5}) of FIG. 5A) are greater than or equal to the upper threshold current, the control circuitry 112 determines whether a present wire feed speed of the wire feeder 104 is greater than a lower threshold wire feed speed. The present wire feed speed is a wire feed speed that the wire feeder 104 is advancing the electrode 142 at a time that any, some, or all of the blocks 630, 640, 660B, 661B occurs, such as the first wire feed speed of the block 610, an initial wire feed speed, an initial wire feed speed setpoint, an increased wire feed speed determined in a previous iteration of the block 650, a decreased wire feed speed determined in a previous iteration of the block 662B, and/or any, some, or all of the wire feed speeds (WFS₂, WFS₃, WFS_{L}) of FIG. 5B. The lower threshold wire feed speed may be the lower threshold wire feed speed (WFS_{L}) of FIG. 5B, any, some, or all of the wire feed speeds (WFS₁, WFS₂, WFS₃) of FIG. 4B, any wire feed speed less than or equal to the first wire feed speed of the block 610, any wire feed speed less than or equal to an initial wire feed speed, and/or any wire feed speed less than or equal to an initial wire feed speed setpoint.

Referring still to the examples of the second process 600B depicted in FIG. 6B, in the block 662B, in response to determining that the wire feed speed of the wire feeder 104 is greater than the lower threshold wire feed speed, the control circuitry 112 determines a first decreased wire feed speed (e.g., either or both of the wire feed speeds (WFS₃, WFS_{L}) of FIG. 5B) based on the one or more first filtered currents and the upper threshold current, wherein the first decreased wire feed speed is less than the present wire feed speed and greater than or equal to the lower threshold wire feed speed. In some examples, the first decreased wire feed speed is determined to decreased the one or more first filtered currents to a second filtered current that is closer to, equal to, or less than the target threshold current. In some examples, the control circuitry 112 determines the first decreased wire feed speed based on one or more magnitudes of one or more differences between the one or more first filtered currents and the upper threshold current. In some examples, the control circuitry 112 calculates the first decreased wire feed speed based on a magnitude of the present wire feed speed. In some examples, the first decreased wire feed speed is determined by subtracting a predetermined wire feed speed decrease from the present wire feed speed (e.g., a predetermined amount of ipm, mps, etc. by which the control circuitry 112 decreases wire feed speed in response to determining that one or more filtered currents are greater than the upper threshold current). In some examples, the control circuitry 112 selects the first decreased wire feed from a plurality of predetermined wire feed speeds. In some examples, the control circuitry 112 determines a first ramping down rate (e.g., either or both of the ramping down rates 507, 508) of a wire feed speed of the wire feeder 104 between the present wire feed speed and the first decreased wire feed speed.

Referring still to the examples of the second process 600B depicted in FIG. 6B, in the block 663B, in response to determining the first decreased wire feed speed, the control circuitry 112 controls the wire feeder 104 to advance the electrode 142 at the first decreased wire feed speed. In some examples, the control circuitry 112 controls the wire feeder 104 to decrease wire feed speed to the first decreased wire feed speed according to the first ramping down rate of FIG. 662B.

In some examples, after controlling the wire feeder 104 to advance the electrode 142 at the first decreased wire feed speed, the control circuitry 112 reiterates the block 630, e.g., by determining one or more second filtered currents (e.g., either or both of the filtered currents (I_{F2}, I_{F4}) of FIG. 4A and/or the second filtered current (I_{F2}) of FIG. 5A) while the wire feeder 104 is advancing the electrode 142 according to the first decreased wire feed speed. In some such examples, in response determining that the one or more second filtered currents are less than the lower threshold current (e.g., in a reiteration of the block 640), the control circuitry 112 proceeds to the block 650. In some examples, in response determining that the one or more second filtered currents are greater than the lower threshold current (e.g., in a reiteration of the block 640), the control circuitry 112 proceeds to the block 660B. In some examples, in response determining that the one or more second filtered currents are greater than the upper threshold current (e.g., in a reiteration of the block 660B) and that the first decreased wire feed speed of the wire feeder 104 is greater than the lower threshold wire feed speed (e.g., in a reiteration of the block 661B), the control circuitry 112 reiterates the block 662B and determines a second decreased wire feed speed (e.g., the lower threshold wire feed speed (WFS_{L}) of FIG. 5B) based on the one or more second filtered currents and the upper threshold current, wherein the second decreased wire feed speed is less than the first decreased wire feed speed and greater than or equal to the lower threshold wire feed speed. In some such examples, in response to determining the second decreased wire feed speed, the control circuitry 112 reiterates the block 663B and controls the wire feeder 104 to advance the electrode 142 at the second increased wire feed speed. Accordingly, in some examples, the control circuitry 112 reiterates any, some, or all of the blocks 630, 640, 650, 651, 660B, 661B, 662B, 663B e.g., to iteratively increase and/or decrease wire feed speed based on one or more filtered currents, the lower threshold current, the upper threshold current, and the lower threshold wire feed speed. In some examples, after the block 663B, the second process 600B may end, e.g., due to a welding operation ending.

In the examples of the second process 600B depicted in FIG. 6B, in a block 664B, in response to determining that the one or more first filtered currents (e.g., either or both of the filtered currents (I_{F2}, I_{F4}) of FIG. 4A) are greater than the upper threshold current and that the present wire feed speed of the wire feeder 104 is greater than the lower threshold wire feed speed, the control circuitry 112 controls the wire feeder 104 to advance the electrode 142 at the present wire feed speed, e.g., to maintain the present wire feed speed of the wire feeder 104.

In some examples, after controlling the wire feeder 104 to continue advancing the electrode 142 at the present wire feed speed, the control circuitry 112 reiterates any, some, or all of the blocks 630, 640, 650, 651, 660B, 661B, 662B, 663B e.g., to iteratively increase and/or decrease wire feed speed based on one or more filtered currents, the lower threshold current, the upper threshold current, and the lower threshold wire feed speed. In some examples, after the block 663B, the second process 600B may end, e.g., due to a welding operation ending.

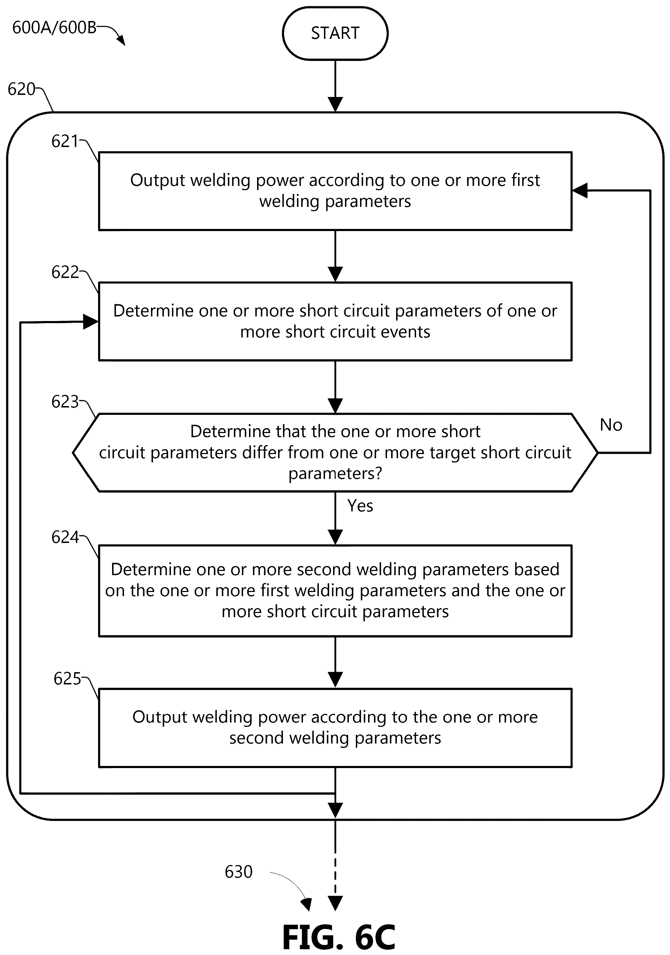

Referring now to FIG. 6C, and with reference to FIGS. 6A and 6B, in some examples of the block 620 of the processes 600A, 600B, the one or more first welding parameters comprise one or more pluralities of welding parameters. For example, the one or more welding parameters of the block 620 may comprise one or more first welding parameters associated with a first period of the one or more welding parameters of the block 620 (e.g., one or more first pulse cycles) and one or more second welding parameters associated with a second period of the welding parameters of the block 620 (e.g., one or more second pulse cycles). In some examples, the one or more welding parameters of the block 620 comprise one or more first pulse cycles, one or more second pulse cycles, and/or one or more other pulse cycles.

For example, in a block 621, the control circuitry 112 controls the power conversion circuitry 110 to output welding power according to one or more first welding parameters of the one or more welding parameters of the block 610. In some examples, the one or more first welding parameters comprise one or more first pulse cycles (e.g., any, some, or all of the pulse cycles 201, 202, 251, 252). In some examples, the one or more first welding parameters comprise one or more first pulse widths (e.g., either or both of the first pulse widths (PW_{1A}, PW_{1B})).

In a block 622, the control circuitry 112 determines one or more short circuit parameters (e.g., a short circuit duration) of one or more short circuit events (e.g., any, some, or all of the short circuit events 216, 226, 266, 276). In some examples, the control circuitry 112 determines the one or more short circuit parameters by monitoring a voltage sensor signal (e.g., during one or more background phases of one or more pulse cycles) generated by the voltage sensor 162. For example, the control circuitry 112 may compare one or more measured voltages to one or more short circuit detection voltage thresholds (e.g., the short circuit detection voltage threshold (V_{SC}) of FIG. 2A and/or short circuit detection voltage threshold (V_{SC}) of FIG. 2B). In some such examples, the control circuitry 112 measures the one or more measured voltages during one or more background phases (e.g., any, some, or all of the background phases 205, 215, 225, 250, 265, 275) and/or one or more other portions of one or more pulse cycles (e.g., any, some, or all of the pulse cycles 201, 202, 251, 252) and/or one or more waveforms. In some examples, the one or more short circuit parameters comprise one or more short circuit durations (e.g., any, some, or all of the short circuit durations (D₁, D₂, D₃, D₄) of FIGS. 2A and 2B).

In a block 623 the control circuitry 112 determines whether any, some, or all of the one or more short circuit parameters differ from one or more target short circuit parameters (e.g., the first target short circuit duration (D_{TA}) and/or the second target short circuit duration (D_{TB})). In some examples, the one or more target short circuit parameters include one or more single values (e.g., a single short circuit duration value) and/or one or more ranges of values (e.g., a range of short circuit duration values). In some examples, in response to determining that any, some, or all of the short circuit parameters are equal to a value of one or more target short circuit parameters and/or within a range of one or more target short circuit parameters, the control circuitry 112, e.g., returns to the block 621 of the block 620 and/or proceeds to the block 630 of the processes 600A, 600B.

In response to determining that any, some, or all of the short circuit parameters differ from one or more target short circuit parameters and/or are outside of a range of one or more target short circuit parameters, in a block 624 of some examples of the block 620, the control circuitry 112 determines one or more second welding parameters of the one or more welding parameters of the block 610 based on the one or more first welding parameters and the one or more short circuit parameters. In some examples, the control circuitry 112 determines one or more second pulse widths (e.g., either or both of the second pulse widths (PW_{2A}, PW_{2B})) based on one or more first pulse widths and one or more short circuit durations (e.g., any, some, or all of the short circuit durations (D₁, D₂, D₃, D₄)). In some examples, in response to determining that one or more short durations (e.g., the short circuit duration (D₁)) are less than a target short circuit duration, the control circuitry 112 determines a second pulse width (e.g., the second pulse width (PW_{2A})) by decreasing an initial pulse width (e.g., the first pulse width (PW_{1A})). In some examples, in response to determining that one or more short durations (e.g., the short circuit duration (D₃)) are greater than a target short circuit duration, the control circuitry 112 determines a second pulse width (e.g., the second pulse width (PW_{2B})) by increasing a first pulse width (e.g., the first pulse width (PW_{1A})).

In a block 625, the control circuitry 112 controls the power conversion circuitry 110 to output welding power (e.g., as one or more pulse cycles) according to one or more second welding parameters (e.g., one or more target welding parameters, one or more target pulse parameters, one or more durations of one or more phases of a waveform, one or more durations of one or more portions of a waveform, one or more waveform frequencies, one or more ramping up rates, one or more ramping down rates, etc.) comprising the one or more second welding parameters of the block 624. In some examples, the control circuitry 112 controls the power conversion circuitry 110 to output welding power according to one or more second pulse cycles (e.g., either or both of the pulse cycles 202, 252).

In some examples, after the block 625, the control circuitry 112 returns to the block 622 (e.g., immediately, during a second pulse cycle, after one pulse cycle, after a predetermined number of pulse cycles, and/or after a predetermined amount of time). In some examples, the block 610 does not include any, some, or all of the blocks 621, 622, 623, 624, 625. In some examples, any, some, or all of the blocks 621, 622, 623, 624, 625may be reiterated (e.g., during one or more intermediary pulse cycles and/or waveforms and/or one or more second pulse cycles and/or waveforms), with welding parameters (e.g., one or more intermediary welding parameters and/or one or more second welding parameters) being modified in each iteration of the block 624 and/or remaining unchanged following the block 623. In some examples, after the block 625, the processes 600A, 600B may end, e.g., due to a welding operation ending. In some examples, after the block 625, the control circuitry 112 may proceed to the block 630 following the block 625. In some examples, any, some, or all of the blocks 610, 630, 640, 650, 651, 660A, 660B, 661B, 662B, 663B, 664B occur simultaneously with any, some, or all of the blocks 620, 621, 622, 623, 624, 625.

As used herein, the term "welding operation" refers to a process of welding one or more materials, components, etc. using one or more welding modes.

As used herein, the terms "welding system" and "welding-type system" refer to systems capable of generating and/or conditioning welding power and/or of conducting a welding operation (e.g., by generating, conditioning, and/or receiving welding power). A welding system or welding-type system may operate and/or be capable of operating in only one welding mode and/or in any plurality of welding modes.

As used herein, the terms "torch," "welding torch," "welding tool," and "welding-type tool" can include a hand-held or robotic welding torch, gun, or other device used to create the welding arc.

As used herein, the term "electrode" includes any consumable or non-consumable material which may be controllably provided to a welding torch by welding equipment and which may conduct a weld current (e.g., welding wire).

The term "arc length," as used herein, refers to the distance over which a welding-type arc extends between an end or tip of an electrode (e.g., welding wire) of a welding torch and a work piece (e.g., a piece, component, etc. being welded).

The term "electrode extension," as used herein, refers to a portion of an electrode (e.g., welding wire) extending beyond (e.g., outside of) a contact tip of a welding torch or other welding device.

As used herein, the terms "welding power" and "welding-type power" refer to power suitable for welding, plasma cutting, plasma welding, induction heating, air carbon arc cutting ("CAC-A") and/or hot wire welding/preheating (including laser welding and laser cladding). As used herein, the term "welding-type power supply" refers to any device capable of, when power is applied thereto, supplying welding, plasma cutting, plasma welding, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "welding mode" refers to the type and/or modality of process and/or output used by a welding system, such as gas-metal arc welding ("GMAW") (also referred to as metal inert gas welding ("MIG")), pulsed gas-metal arc welding ("GMAW-P") (also referred to as "pulsed MIG"), current-controlled welding, voltage-controlled welding, enthalpy-controlled welding, power-controlled welding, resistance-controlled welding, pulse welding, tungsten inert gas ("TIG") (also referred to as gas tungsten arc welding ("GTAW")), flux cored arc welding ("FCAW"), shielded metal arc welding ("SMAW") (also referred to as "stick welding"), plasma cutting, plasma welding, spray welding, short circuit transfer welding, pulsed spray welding, and/or one or more other welding modes. As used herein, the term "transfer mode" refers to the mechanism by which an electrode is transferred to a workpiece (e.g., a weld pool on the work piece), and a welding mode may include one or more transfer modes. A transfer mode may include, e.g., short circuit welding, pulse welding, spray welding, pulsed spray welding, Regulated Metal Deposition (i.e., RMD ^{®}), and/or one or more other transfer modes.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general-purpose microprocessor or microcontroller, a digital signal processing ("DSP") processor, an application-specific integrated circuit ("ASIC"), a graphic processing unit ("GPU"), a reduced instruction set computer ("RISC") processor with an advanced RISC machine ("ARM") core, etc. The processor may be coupled to, and/or integrated with a memory storage device.

As utilized herein the terms "circuits," "circuitry," "controller," and "control circuitry" refer to physical electronic components (i.e., hardware) and any software and/or firmware ("code") which may configure the hardware, be executed by the hardware, and/or otherwise be associated with the hardware. As used herein, for example, a "circuit" may comprise any analog and/or digital components, power and/or control elements (such as a microprocessor, digital signal processor ("DSP"), software, and the like), discrete and/or integrated components, associated software, hardware, and/or firmware, and/or portions and/or combinations thereof. As used herein, for example, a particular processor and memory storage device may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

As used herein, the term "communication circuitry" refers to physical electronic components (i.e., hardware) and, in some examples, any software and/or firmware (i.e., code) which may configure the hardware, be executed by the hardware, and/or otherwise enable the hardware to communicate with one or more other devices (e.g., with communication circuitry of such one or more other devices). Communication circuitry may include hardware capable of wired and/or wireless communication with one or more other devices. Hardware capable of wired communication may include, e.g., one or more cables or other optical communication mechanisms, one or more computer buses, and/or one or more additional wired mechanisms for communicating with one or more communications networks and/or one or more devices. Hardware capable of wireless communications may include, e.g., one or more transceivers, one or more antennas, one or more modems, one or more local area network ("LAN") ports, one or more wireless fidelity ("Wi-Fi") cards, one or more WiMax cards, mobile communications hardware, near-field communication hardware, satellite communication hardware, hardware configured to communicate in accordance with one or more wireless communication protocols (e.g., IrDA, Bluetooth, Wireless USB, Z-Wave, ZigBee, radio frequency identification ("RFID"), one or more other near field communications ("NFC") protocols, and/or one or more other protocols for close-proximity and/or wireless communication), and/or other hardware for wirelessly communicating with one or more communications networks and/or one or more devices. Communication circuitry may include one or more network interfaces, one or more input-output ("I/O") interfaces, and/or one or more other interfaces for communicating data (e.g., directly, via one or more communications paths, etc.) to and/or from one or more communications networks. An example network interface may include hardware, firmware, and/or software to communicatively couple communication circuitry to one or more communications networks. A network interface may include and/or be coupled to one or more communication paths. A communication path includes hardware which provides signal interconnectivity between one or more components (e.g., control circuitry and a transceiver). A network interface may include any hardware for transmitting and/or receiving communications (e.g., IEEE 802.X-compliant wireless and/or wired communications hardware). An example I/O interface includes hardware, firmware, and/or software to connect one or more I/O devices to control circuitry (communicatively coupled to, e.g., communication circuitry comprising the I/O interface) for providing input to the control circuitry and/or providing output from the control circuitry. For example, the I/O interface may include a graphics processing unit for interfacing with a display device, a universal serial bus port for interfacing with one or more USB-compliant devices, a FireWire, a field bus, and/or any other type of interface. Example I/O device(s) may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device. Control circuitry communicatively coupled to an I/O interface may access a non-transitory machine-readable medium via the I/O interface and/or one or more I/O device(s). Examples of a machine-readable medium include optical discs (e.g., compact discs ("CDs"), digital versatile/video discs ("DVDs"), Blu-ray discs, etc.), magnetic media (e.g., floppy disks), portable storage media (e.g., portable flash drives, secure digital ("SD") cards, etc.), and/or any other type of removable and/or installed machine-readable media.

A "communications network" may include one or more of the Internet, one or more personal area networks ("PAN(s)"), one or more LANs, one or more wide area networks ("WAN(s)"), one or more cellular networks, one or more satellite networks, one or more global positioning systems, one or more other such networks, and/or any combination thereof. A LAN may include, e.g., one or more wired technologies (e.g., Ethernet, USB, etc.) and/or one or more wireless technologies (e.g., Wi-Fi). A PAN may include one or more wired technologies (e.g., USB, FireWire, and/or one or more other computer buses) and/or one or more wireless technologies (e.g., Bluetooth, Wireless USB, IrDA, Z-Wave, ZigBee, RFID, one or more other NFC protocols, and/or one or more other protocols for close-proximity and/or wireless communication). A cellular network may include, e.g., technologies such as LTE, WiMAX, UMTS, CDMA, GSM, 3G, 4G, 5G, 6G, and/or one or more other technologies.

As used, herein, the term "memory," "memory storage device," "storage device," and/or "memory device" means computer hardware or circuitry to store information for use by a processor and/or other digital device. The memory, memory storage device, and/or memory device can be any suitable type of computer memory or any other type of electronic storage medium, such as, for example, read-only memory ("ROM"), random access memory ("RAM"), cache memory, compact disc read-only memory ("CDROM"), electro-optical memory, magneto-optical memory, programmable read-only memory ("PROM"), erasable programmable read-only memory ("EPROM"), electrically-erasable programmable read-only memory ("EEPROM"), a computer-readable medium, or the like. Memory can include, for example, a non-transitory memory, a non-transitory processor readable medium, a non-transitory computer readable medium, non-volatile memory, dynamic RAM ("DRAM"), volatile memory, ferroelectric RAM ("FRAM"), first-in-first-out ("FIFO") memory, last-in-first-out ("LIFO") memory, stack memory, non-volatile RAM ("NVRAM"), static RAM ("SRAM"), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module ("SIM") card, a hard drive ("HDD"), a solid state drive ("SSD"), etc. The memory, memory storage device, and/or memory device can be configured to store code, instructions, applications, software, firmware, and/or data, and may be external, internal, or both with respect to a processor.

Features described herein make reference to the accompanying drawings in which exemplary embodiments of the disclosure are shown. However, it should be understood that the systems of this disclosure can be embodied in many different forms and should not be construed as limited to the embodiments set forth herein.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

Unless otherwise expressly stated, it is in no way intended than any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As used herein, the word "exemplary" means serving as a non-limiting example, instance, or illustration. The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation. As utilized herein, the terms "e.g." and "for example" set off lists of one or more non-limiting examples, instances, or illustrations.

While the present method, apparatus, and/or system has been described with reference to certain implementations, it will be understood by those skilled in the art that various changes, modifications, and variations may be made to the present disclosure and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A welding system for one-way wire feed speed adjustment during a welding operation, the welding system comprising:
   a wire feeder configured to advance an electrode;
   power conversion circuitry configured to convert input power to welding power and to output the welding power to a weld circuit comprising the electrode;
   a current sensor configured to measure a current of the weld circuit and generate a current sensor signal; and
   control circuitry configured to:
      control the wire feeder to advance the electrode according to a first wire feed speed;
      monitor the current sensor signal while the wire feeder is advancing the electrode according to the first wire feed speed to determine a first filtered current;
      in response to determining that the first filtered current is less than a lower threshold current:
         determine a first increased wire feed speed based on the first filtered current and the lower threshold current, wherein the first increased wire feed speed is greater than the first wire feed speed; and
         control the wire feeder to advance the electrode at the first increased wire feed speed; and
      in response to determining that the first filtered current is greater than an upper threshold current, control the wire feeder to advance the electrode at a second wire feed speed.
Clause 2.The welding system of clause 1, wherein:
   the upper threshold current is equal to the lower threshold current;
   the first wire feed speed is equal to the second wire feed speed; and
   the control circuitry is further configured to, in response to determining that the first filtered current is greater than or equal to the lower threshold current, control the wire feeder to advance the electrode at the first wire feed speed.
Clause 3.The welding system of clause 1, wherein the upper threshold current is greater than the lower threshold current.
Clause 4.The welding system of clause 3, wherein the control circuitry is further configured to, in response to determining that the first filtered current is greater than or equal to the lower threshold current and less than or equal to the upper threshold current, control the wire feeder to advance the electrode at the first wire feed speed.
Clause 5.The welding system of clause 3, wherein:
   the second wire feed speed is less than or equal to the first wire feed speed; and
   the second wire feed speed is greater than or equal to a predetermined lower threshold wire feed speed.
Clause 6.The welding system of clause 5, wherein:
   the first wire feed speed is greater than the predetermined lower threshold wire feed speed;
   the control circuitry is further configured to, in response to determining that the first filtered current is greater than the upper threshold current, determine the second wire feed speed based on the first filtered current and the upper threshold current; and
   the second wire feed speed is less than the first wire feed speed.
Clause 7.The welding system of clause 6, wherein the control circuitry is further configured to:
   monitor the current sensor signal while the wire feeder is advancing the electrode at the second wire feed speed to determine a second filtered current; and
   in response to determining that the second filtered current is less than the lower threshold current:
      determine a second increased wire feed speed based on the second filtered current and the upper threshold current, wherein the second increased wire feed speed is greater than the second wire feed speed; and
      control the wire feeder to advance the electrode at the second increased wire feed speed.
Clause 8.The welding system of clause 6, wherein:
   the second wire feed speed is greater than the predetermined lower threshold wire feed speed; and
   the control circuitry is further configured to:
      monitor the current sensor signal while the wire feeder is advancing the electrode at the second wire feed speed to determine a second filtered current; and
      in response to determining that the second filtered current is greater than the upper threshold current:
         determine a decreased wire feed speed based on the second filtered current and the upper threshold current, wherein the decreased wire feed speed is less than the second wire feed speed and greater than or equal to the predetermined lower threshold wire feed speed; and
         control the wire feeder to advance the electrode at the decreased wire feed speed.
Clause 9.The welding system of clause 6, wherein:
   the second wire feed speed is equal to the predetermined lower threshold wire feed speed;
   the control circuitry is further configured to:
      monitor the current sensor signal while the wire feeder is advancing the electrode at the second wire feed speed to determine a second filtered current; and
      in response to determining that the second filtered current is greater than the lower threshold current, control the wire feeder to advance the electrode at the second wire feed speed.
Clause 10.The welding system of clause 6, wherein the control circuitry is further configured to:
   monitor the current sensor signal while the wire feeder is advancing the electrode at the second wire feed speed to determine a second filtered current; and
   in response to determining that the second filtered current is greater than or equal to the lower threshold current and less than or equal to the upper threshold current, control the wire feeder to advance the electrode at the second wire feed speed.
Clause 11. The welding system of clause 1, wherein the control circuitry is further configured to:
   monitor the current sensor signal while the wire feeder is advancing the electrode at the first increased wire feed speed to determine a second filtered current; and
   in response to determining that the second filtered current is less than the lower threshold current:
      determine a second increased wire feed speed based on the second filtered current and the lower threshold current, wherein the second increased wire feed speed is greater than the first increased wire feed speed; and
      control the wire feeder to advance the electrode at the second increased wire feed speed.
Clause 12.The welding system of clause 11, wherein the control circuitry is further configured to, in response to determining that the second filtered current is greater than or equal to the lower threshold current, control the wire feeder to advance the electrode at the first increased wire feed speed.
Clause 13.The welding system of clause 11, wherein:
   the upper threshold current is greater than the lower threshold current;
   the control circuitry is further configured to, in response to determining that the second filtered current is greater than the upper threshold current:
      determine a decreased wire feed speed based on the second filtered current and the upper threshold current, wherein the decreased wire feed speed is less than the first increased wire feed speed and greater than or equal to a predetermined lower threshold wire feed speed; and
      control the wire feeder to advance the electrode at the decreased wire feed speed.
Clause 14.The welding system of clause 13, wherein the control circuitry is further configured to, in response to determining that the second filtered current is greater than or equal to the lower threshold current and less than or equal to the upper threshold current, control the wire feeder to advance the electrode at the first increased wire feed speed.
Clause 15.The welding system of clause 1, wherein the control circuitry is further configured to determine at least one of the lower threshold current or the upper threshold current based on at least one of:
   the first wire feed speed;
   an initial wire feed speed of the welding operation;
   an initial wire feed speed setpoint of the welding operation;
   a calculated target heat input of the welding power; or
   a predetermined target heat input of the welding power.
Clause 16.The welding system of clause 1, wherein:
   the first filtered current is an average current; and
   the control circuitry is further configured to:
      control the power conversion circuitry to output the welding power according to one or more welding parameters, the one or more welding parameters comprising a waveform; and
      calculate the average current based on a plurality of measured currents measured during at least a portion of the waveform.
Clause 17.The welding system of clause 1, wherein the control circuitry is further configured to:
   control the power conversion circuitry to output the welding power according to one or more welding parameters, the one or more welding parameters comprising a waveform; and
   determine the first filtered current by monitoring the current sensor signal during one or more voltage-controlled mode portions of the waveform.
Clause 18.The welding system of clause 1, wherein the power conversion circuitry is configured to output the welding power according to at least one of:
   a gas-metal arc welding (GMAW) or metal inert gas welding (MIG) operation;
   a pulsed gas-metal arc welding (GMAW-P) or pulsed metal inert gas (MIG) welding operation;
   a current-controlled welding operation;
   a voltage-controlled welding operation;
   a power-controlled welding operation;
   a resistance-controlled welding operation;
   an enthalpy-controlled welding operation;
   a tungsten inert gas welding (TIG) or gas tungsten arc welding (GTAW) operation;
   a flux cored arc welding (FCAW) operation;
   a shielded metal arc welding (SMAW) or stick welding operation;
   a plasma cutting operation;
   a plasma welding operation;
   a spray welding operation;
   a short circuit transfer welding operation;
   a pulse welding operation; or
   a pulsed spray welding operation.
Clause 19.The welding system of clause 1, further comprising a voltage sensor configured to measure a voltage of the weld circuit and generate a voltage sensor signal, wherein the control circuitry is further configured to:
   control the power conversion circuitry to output the welding power according to one or more first welding parameters comprising a first waveform;
   monitor the voltage sensor signal during at least a portion of the first waveform to determine one or more short circuit parameters of one or more short circuit events;
   determine one or more second welding parameters based on the one or more first welding parameters and the one or more short circuit parameters; and
   control the power conversion circuitry to output the welding power according to the one or more second welding parameters.
Clause 20.The welding system of clause 19, wherein the determining of the one or more second welding parameters comprises comparing the one or more short circuit parameters to one or more target short circuit parameters.
Clause 21.The welding system of clause 19, wherein the one or more short circuit parameters comprise a short circuit duration.
Clause 22.The welding system of clause 21, wherein:
   the one or more first welding parameters comprise a first target voltage;
   the one or more second welding parameters comprise a second waveform and a second target voltage; and
   the control circuitry is further configured to:
      control the power conversion circuitry to output the welding power according to the one or more first welding parameters at least by outputting the welding power in a voltage-controlled mode according to the first target voltage during at least a portion of the first waveform;
      in response to determining that the short circuit duration is greater than a target short circuit duration, calculate the second target voltage by increasing the first target voltage based on a difference between the short circuit duration and the target short circuit duration; and
      control the power conversion circuitry to output the welding power according to the one or more second welding parameters at least by outputting the welding power in the voltage-controlled mode according to the second target voltage during at least a portion of the second waveform.
Clause 23.The welding system of clause 21, wherein:
   the one or more first welding parameters comprise a first target voltage;
   the one or more second welding parameters comprise a second waveform and a second target voltage; and
   the control circuitry is further configured to:
      control the power conversion circuitry to output the welding power according to the one or more first welding parameters at least by outputting the welding power in a voltage-controlled mode according to the first target voltage during at least a portion of the first waveform;
      in response to determining that the short circuit duration is less than a target short circuit duration, calculate the second target voltage by decreasing the first target voltage based on a difference between the short circuit duration and the target short circuit duration; and
      control the power conversion circuitry to output the welding power according to the one or more second welding parameters at least by outputting the welding power in the voltage-controlled mode according to the second target voltage during at least a portion of the second waveform.
Clause 24.The welding system of clause 19, wherein:
   the one or more first welding parameters comprise at least one of a first ramping up rate, a first wire feed speed, a first ramp down rate, a first target voltage, a first target current, a first target power, a first target resistance, a first target enthalpy, a first duration of a phase of the first waveform, a first duration of a portion of the first waveform, or a first waveform frequency; and
   the one or more second welding parameters comprise at least one of a second ramping up rate, a second ramping down rate, a second wire feed speed, a second target voltage, a second target current, a second target power, a second target resistance, a second target enthalpy, a second duration of a phase of a second waveform, a second duration of a portion of the second waveform, or a second waveform frequency.
Clause 25.The welding system of clause 19, wherein the power conversion circuitry is configured to output the welding power according to at least one of:
   a gas-metal arc welding (GMAW) or metal inert gas welding (MIG) operation;
   a pulsed gas-metal arc welding (GMAW-P) or pulsed metal inert gas (MIG) welding operation;
   a current-controlled welding operation;
   a voltage-controlled welding operation;
   a power-controlled welding operation;
   a resistance-controlled welding operation;
   an enthalpy-controlled welding operation;
   a tungsten inert gas welding (TIG) or gas tungsten arc welding (GTAW) operation;
   a flux cored arc welding (FCAW) operation;
   a shielded metal arc welding (SMAW) or stick welding operation;
   a plasma cutting operation;
   a plasma welding operation;
   a spray welding operation;
   a short circuit transfer welding operation;
   a pulse welding operation; or
   a pulsed spray welding operation.
Clause 26.The welding system of clause 1, further comprising a voltage sensor configured to measure a voltage of the weld circuit and generate a voltage sensor signal, wherein the control circuitry is further configured to:
   control the power conversion circuitry to output the welding power according to one or more first pulse cycles having one or more first pulse parameters;
   monitor the voltage sensor signal during a background phase of at least one of the one or more first pulse cycles to determine one or more short circuit parameters of one or more short circuit events;
   determine one or more second pulse parameters based on the one or more first pulse parameters and the one or more short circuit parameters; and
   control the power conversion circuitry to output the welding power according to one or more second pulse cycles having the one or more second pulse parameters.
Clause 27.The welding system of clause 26, wherein the determining of the one or more second pulse parameters comprises comparing the one or more short circuit parameters to one or more target short circuit parameters.
Clause 28.The welding system of clause 26, wherein the one or more short circuit parameters comprise a short circuit duration.
Clause 29.The welding system of clause 28, wherein:
   the one or more first pulse parameters comprise a first pulse width;
   the one or more second pulse parameters comprise a second pulse width; and
   the control circuitry is further configured to, in response to determining that the short circuit duration is greater than a target short circuit duration, calculate the second pulse width by increasing the first pulse width based on a difference between the short circuit duration and the target short circuit duration.
Clause 30.The welding system of clause 28, wherein:
   the one or more first pulse parameters comprise a first pulse width;
   the one or more second pulse parameters comprise a second pulse width; and
   the control circuitry is further configured to, in response to determining that the short circuit duration is less than a target short circuit duration, calculate the second pulse width by decreasing the first pulse width based on a difference between the short circuit duration and the target short circuit duration.
Clause 31.The welding system of clause 28, wherein:
   the one or more first pulse parameters comprise a first target peak voltage;
   the one or more second pulse parameters comprise a second target peak voltage; and
   the control circuitry is further configured to:
      control the power conversion circuitry to output the welding power according to the one or more first pulse cycles at least by outputting the welding power in a voltage-controlled mode according to the first target peak voltage during at least a portion of a first peak phase of the one or more first pulse cycles;
      in response to determining that the short circuit duration is greater than a target short circuit duration, calculate the second target peak voltage by increasing the first target peak voltage based on a difference between the short circuit duration and the target short circuit duration; and
      control the power conversion circuitry to output the welding power according to the one or more second pulse cycles at least by outputting the welding power in the voltage-controlled mode according to the second target peak voltage during at least a portion of a second peak phase of the one or more second pulse cycles.
Clause 32.The welding system of clause 28 wherein:
   the one or more first pulse parameters comprise a first target peak voltage;
   the one or more second pulse parameters comprise a second target peak voltage; and
   the control circuitry is further configured to:
      control the power conversion circuitry to output the welding power according to the one or more first pulse cycles at least by outputting the welding power in a voltage-controlled mode according to the first target peak voltage during at least a portion of a first peak phase of the one or more first pulse cycles;
      in response to determining that the short circuit duration is less than a target short circuit duration, calculate the second target peak voltage by decreasing the first target peak voltage based on a difference between the short circuit duration and the target short circuit duration; and
      control the power conversion circuitry to output the welding power according to the one or more second pulse cycles at least by outputting the welding power in the voltage-controlled mode according to the second target peak voltage during at least a portion of a second peak phase of the one or more second pulse cycles.
Clause 33.The welding system of clause 26, wherein:
   the one or more first pulse parameters comprise at least one of a first pulse width, a first pulse frequency, a first wire feed speed, a first ramping up rate, a first ramping down rate, a first target peak voltage, a first target peak current, a first target background voltage, a first target background current, a first target power, a first target resistance, or a first target enthalpy; and
   the one or more second pulse parameters comprise at least one of a second pulse width, a second pulse frequency, a second wire feed speed, a second ramping up rate, a second ramping down rate, a second target peak voltage, a second target peak current, a second target background voltage, a second target background current, a second target power, a second target resistance, or a second target enthalpy.

## Claims

1. A welding system for one-way wire feed speed adjustment during a welding operation, the welding system comprising:
a wire feeder configured to advance an electrode;
power conversion circuitry configured to convert input power to welding power and to output the welding power to a weld circuit comprising the electrode;
a current sensor configured to measure a current of the weld circuit and generate a current sensor signal; and
control circuitry configured to:
control the wire feeder to advance the electrode according to a first wire feed speed;
monitor the current sensor signal while the wire feeder is advancing the electrode according to the first wire feed speed to determine a first filtered current;
in response to determining that the first filtered current is less than a lower threshold current:
determine a first increased wire feed speed based on the first filtered current and the lower threshold current, wherein the first increased wire feed speed is greater than the first wire feed speed; and
control the wire feeder to advance the electrode at the first increased wire feed speed; and
in response to determining that the first filtered current is greater than an upper threshold current, control the wire feeder to advance the electrode at a second wire feed speed.

2. The welding system of claim 1, wherein:
the upper threshold current is equal to the lower threshold current;
the first wire feed speed is equal to the second wire feed speed; and
the control circuitry is further configured to, in response to determining that the first filtered current is greater than or equal to the lower threshold current, control the wire feeder to advance the electrode at the first wire feed speed, or wherein the upper threshold current is greater than the lower threshold current.

3. The welding system of claim 2, wherein the control circuitry is further configured to, in response to determining that the first filtered current is greater than or equal to the lower threshold current and less than or equal to the upper threshold current, control the wire feeder to advance the electrode at the first wire feed speed or wherein
wherein:
the second wire feed speed is less than or equal to the first wire feed speed; and
the second wire feed speed is greater than or equal to a predetermined lower threshold wire feed speed and optionally wherein:
the first wire feed speed is greater than the predetermined lower threshold wire feed speed;
the control circuitry is further configured to, in response to determining that the first filtered current is greater than the upper threshold current, determine the second wire feed speed based on the first filtered current and the upper threshold current; and
the second wire feed speed is less than the first wire feed speed and optionally wherein the control circuitry is further configured to:
monitor the current sensor signal while the wire feeder is advancing the electrode at the second wire feed speed to determine a second filtered current; and
in response to determining that the second filtered current is less than the lower threshold current:
determine a second increased wire feed speed based on the second filtered current and the upper threshold current, wherein the second increased wire feed speed is greater than the second wire feed speed; and
control the wire feeder to advance the electrode at the second increased wire feed speed.

4. The welding system of claim 3, wherein:
the second wire feed speed is greater than the predetermined lower threshold wire feed speed; and
the control circuitry is further configured to:
monitor the current sensor signal while the wire feeder is advancing the electrode at the second wire feed speed to determine a second filtered current; and
in response to determining that the second filtered current is greater than the upper threshold current:
determine a decreased wire feed speed based on the second filtered current and the upper threshold current, wherein the decreased wire feed speed is less than the second wire feed speed and greater than or equal to the predetermined lower threshold wire feed speed; and
control the wire feeder to advance the electrode at the decreased wire feed speed or wherein:
the second wire feed speed is equal to the predetermined lower threshold wire feed speed;
the control circuitry is further configured to:
monitor the current sensor signal while the wire feeder is advancing the electrode at the second wire feed speed to determine a second filtered current; and
in response to determining that the second filtered current is greater than the lower threshold current, control the wire feeder to advance the electrode at the second wire feed speed or wherein the control circuitry is further configured to:
monitor the current sensor signal while the wire feeder is advancing the electrode at the second wire feed speed to determine a second filtered current; and
in response to determining that the second filtered current is greater than or equal to the lower threshold current and less than or equal to the upper threshold current, control the wire feeder to advance the electrode at the second wire feed speed.

5. The welding system of claim 1, wherein the control circuitry is further configured to:
monitor the current sensor signal while the wire feeder is advancing the electrode at the first increased wire feed speed to determine a second filtered current; and
in response to determining that the second filtered current is less than the lower threshold current:
determine a second increased wire feed speed based on the second filtered current and the lower threshold current, wherein the second increased wire feed speed is greater than the first increased wire feed speed; and
control the wire feeder to advance the electrode at the second increased wire feed speed, and optionally wherein the control circuitry is further configured to, in response to determining that the second filtered current is greater than or equal to the lower threshold current, control the wire feeder to advance the electrode at the first increased wire feed speed.

6. The welding system of claim 5, wherein:
the upper threshold current is greater than the lower threshold current;
the control circuitry is further configured to, in response to determining that the second filtered current is greater than the upper threshold current:
determine a decreased wire feed speed based on the second filtered current and the upper threshold current, wherein the decreased wire feed speed is less than the first increased wire feed speed and greater than or equal to a predetermined lower threshold wire feed speed; and
control the wire feeder to advance the electrode at the decreased wire feed speed and optionally wherein the control circuitry is further configured to, in response to determining that the second filtered current is greater than or equal to the lower threshold current and less than or equal to the upper threshold current, control the wire feeder to advance the electrode at the first increased wire feed speed.

7. The welding system of claim 1, wherein the control circuitry is further configured to determine at least one of the lower threshold current or the upper threshold current based on at least one of:
the first wire feed speed;
an initial wire feed speed of the welding operation;
an initial wire feed speed setpoint of the welding operation;
a calculated target heat input of the welding power; or
a predetermined target heat input of the welding power orwherein:
the first filtered current is an average current; and
the control circuitry is further configured to:
control the power conversion circuitry to output the welding power according to one or more welding parameters, the one or more welding parameters comprising a waveform; and
calculate the average current based on a plurality of measured currents measured during at least a portion of the waveform or wherein the control circuitry is further configured to:
control the power conversion circuitry to output the welding power according to one or more welding parameters, the one or more welding parameters comprising a waveform; and determine the first filtered current by monitoring the current sensor signal during one or more voltage-controlled mode portions of the waveform orwherein the power conversion circuitry is configured to output the welding power according to at least one of:
a gas-metal arc welding (GMAW) or metal inert gas welding (MIG) operation;
a pulsed gas-metal arc welding (GMAW-P) or pulsed metal inert gas (MIG) welding operation;
a current-controlled welding operation;
a voltage-controlled welding operation;
a power-controlled welding operation;
a resistance-controlled welding operation;
an enthalpy-controlled welding operation;
a tungsten inert gas welding (TIG) or gas tungsten arc welding (GTAW) operation;
a flux cored arc welding (FCAW) operation;
a shielded metal arc welding (SMAW) or stick welding operation;
a plasma cutting operation;
a plasma welding operation;
a spray welding operation;
a short circuit transfer welding operation;
a pulse welding operation; or
a pulsed spray welding operation or
wherein the welding system further comprising a voltage sensor configured to measure a voltage of the weld circuit and generate a voltage sensor signal, wherein the control circuitry is further configured to:
control the power conversion circuitry to output the welding power according to one or more first welding parameters comprising a first waveform;
monitor the voltage sensor signal during at least a portion of the first waveform to determine one or more short circuit parameters of one or more short circuit events;
determine one or more second welding parameters based on the one or more first welding parameters and the one or more short circuit parameters; and
control the power conversion circuitry to output the welding power according to the one or more second welding parameters.

8. The welding system of claim 7, wherein the determining of the one or more second welding parameters comprises comparing the one or more short circuit parameters to one or more target short circuit parameters or wherein the one or more short circuit parameters comprise a short circuit duration.

9. The welding system of claim 8, wherein:
the one or more first welding parameters comprise a first target voltage;
the one or more second welding parameters comprise a second waveform and a second target voltage; and
the control circuitry is further configured to:
control the power conversion circuitry to output the welding power according to the one or more first welding parameters at least by outputting the welding power in a voltage-controlled mode according to the first target voltage during at least a portion of the first waveform;
in response to determining that the short circuit duration is greater than a target short circuit duration, calculate the second target voltage by increasing the first target voltage based on a difference between the short circuit duration and the target short circuit duration; and
control the power conversion circuitry to output the welding power according to the one or more second welding parameters at least by outputting the welding power in the voltage-controlled mode according to the second target voltage during at least a portion of the second waveform.

10. The welding system of claim 9, wherein:
the one or more first welding parameters comprise a first target voltage;
the one or more second welding parameters comprise a second waveform and a second target voltage; and
the control circuitry is further configured to:
control the power conversion circuitry to output the welding power according to the one or more first welding parameters at least by outputting the welding power in a voltage-controlled mode according to the first target voltage during at least a portion of the first waveform;
in response to determining that the short circuit duration is less than a target short circuit duration, calculate the second target voltage by decreasing the first target voltage based on a difference between the short circuit duration and the target short circuit duration; and
control the power conversion circuitry to output the welding power according to the one or more second welding parameters at least by outputting the welding power in the voltage-controlled mode according to the second target voltage during at least a portion of the second waveform.

11. The welding system of claim 7, wherein:
the one or more first welding parameters comprise at least one of a first ramping up rate, a first wire feed speed, a first ramp down rate, a first target voltage, a first target current, a first target power, a first target resistance, a first target enthalpy, a first duration of a phase of the first waveform, a first duration of a portion of the first waveform, or a first waveform frequency; and
the one or more second welding parameters comprise at least one of a second ramping up rate, a second ramping down rate, a second wire feed speed, a second target voltage, a second target current, a second target power, a second target resistance, a second target enthalpy, a second duration of a phase of a second waveform, a second duration of a portion of the second waveform, or a second waveform frequency orwherein the power conversion circuitry is configured to output the welding power according to at least one of:
a gas-metal arc welding (GMAW) or metal inert gas welding (MIG) operation;
a pulsed gas-metal arc welding (GMAW-P) or pulsed metal inert gas (MIG) welding operation;
a current-controlled welding operation;
a voltage-controlled welding operation;
a power-controlled welding operation;
a resistance-controlled welding operation;
an enthalpy-controlled welding operation;
a tungsten inert gas welding (TIG) or gas tungsten arc welding (GTAW) operation;
a flux cored arc welding (FCAW) operation;
a shielded metal arc welding (SMAW) or stick welding operation;
a plasma cutting operation;
a plasma welding operation;
a spray welding operation;
a short circuit transfer welding operation;
a pulse welding operation; or
a pulsed spray welding operation.

12. The welding system of claim 1, further comprising a voltage sensor configured to measure a voltage of the weld circuit and generate a voltage sensor signal, wherein the control circuitry is further configured to:
control the power conversion circuitry to output the welding power according to one or more first pulse cycles having one or more first pulse parameters;
monitor the voltage sensor signal during a background phase of at least one of the one or more first pulse cycles to determine one or more short circuit parameters of one or more short circuit events;
determine one or more second pulse parameters based on the one or more first pulse parameters and the one or more short circuit parameters; and
control the power conversion circuitry to output the welding power according to one or more second pulse cycles having the one or more second pulse parameters and optionallywherein the determining of the one or more second pulse parameters comprises comparing the one or more short circuit parameters to one or more target short circuit parameters.

13. The welding system of claim 12, wherein the one or more short circuit parameters comprise a short circuit duration.

14. The welding system of claim 13, wherein:
the one or more first pulse parameters comprise a first pulse width;
the one or more second pulse parameters comprise a second pulse width; and
the control circuitry is further configured to, in response to determining that the short circuit duration is greater than a target short circuit duration, calculate the second pulse width by increasing the first pulse width based on a difference between the short circuit duration and the target short circuit duration or
wherein:
the one or more first pulse parameters comprise a first pulse width;
the one or more second pulse parameters comprise a second pulse width; and
the control circuitry is further configured to, in response to determining that the short circuit duration is less than a target short circuit duration, calculate the second pulse width by decreasing the first pulse width based on a difference between the short circuit duration and the target short circuit duration, or
wherein:
the one or more first pulse parameters comprise a first target peak voltage;
the one or more second pulse parameters comprise a second target peak voltage; and
the control circuitry is further configured to:
control the power conversion circuitry to output the welding power according to the one or more first pulse cycles at least by outputting the welding power in a voltage-controlled mode according to the first target peak voltage during at least a portion of a first peak phase of the one or more first pulse cycles;
in response to determining that the short circuit duration is greater than a target short circuit duration, calculate the second target peak voltage by increasing the first target peak voltage based on a difference between the short circuit duration and the target short circuit duration; and
control the power conversion circuitry to output the welding power according to the one or more second pulse cycles at least by outputting the welding power in the voltage-controlled mode according to the second target peak voltage during at least a portion of a second peak phase of the one or more second pulse cycles or wherein:
the one or more first pulse parameters comprise a first target peak voltage;
the one or more second pulse parameters comprise a second target peak voltage; and
the control circuitry is further configured to:
control the power conversion circuitry to output the welding power according to the one or more first pulse cycles at least by outputting the welding power in a voltage-controlled mode according to the first target peak voltage during at least a portion of a first peak phase of the one or more first pulse cycles;
in response to determining that the short circuit duration is less than a target short circuit duration, calculate the second target peak voltage by decreasing the first target peak voltage based on a difference between the short circuit duration and the target short circuit duration; and
control the power conversion circuitry to output the welding power according to the one or more second pulse cycles at least by outputting the welding power in the voltage-controlled mode according to the second target peak voltage during at least a portion of a second peak phase of the one or more second pulse cycles.

15. The welding system of claim 12, wherein:
the one or more first pulse parameters comprise at least one of a first pulse width, a first pulse frequency, a first wire feed speed, a first ramping up rate, a first ramping down rate, a first target peak voltage, a first target peak current, a first target background voltage, a first target background current, a first target power, a first target resistance, or a first target enthalpy; and
the one or more second pulse parameters comprise at least one of a second pulse width, a second pulse frequency, a second wire feed speed, a second ramping up rate, a second ramping down rate, a second target peak voltage, a second target peak current, a second target background voltage, a second target background current, a second target power, a second target resistance, or a second target enthalpy.
